(19) **Europäisches Patentamt / European Patent Office / Office européen des brevets**

(11) **EP 4 679 420 A1**

(12) **EUROPEAN PATENT APPLICATION**
published in accordance with Art. 153(4) EPC

(43) Date of publication:
14.01.2026 Bulletin 2026/03

(21) Application number: 24850769.1

(22) Date of filing: 17.07.2024

(51) International Patent Classification (IPC):
$G10L\ 19/00\ ^{(2013.01)}$  $G10L\ 25/03\ ^{(2013.01)}$
$G10L\ 19/16\ ^{(2013.01)}$  $G10L\ 25/30\ ^{(2013.01)}$

(52) Cooperative Patent Classification (CPC):
G10L 19/00; G10L 19/16; G10L 25/03; G10L 25/30

(86) International application number:
PCT/CN2024/105962

(87) International publication number:
WO 2025/031119 (13.02.2025 Gazette 2025/07)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 10.08.2023 CN 202311006978

(71) Applicant: TENCENT TECHNOLOGY (SHENZHEN)
COMPANY LIMITED
Shenzhen, Guangdong 518057 (CN)

(72) Inventor: XIAO, Wei
Shenzhen, Guangdong 518057 (CN)

(74) Representative: Gunzelmann, Rainer et al
Wuesthoff & Wuesthoff
Patentanwälte und Rechtsanwalt PartG mbB
Schweigerstraße 2
81541 München (DE)

(54) **AUDIO ENCODING METHOD AND APPARATUS, AUDIO DECODING METHOD AND APPARATUS, AND READABLE STORAGE MEDIUM**

(57) An audio encoding method and apparatus, an audio decoding method and apparatus, an electronic device, a computer readable storage medium, and a computer program product. The audio decoding method comprises: performing signal decoding processing on an audio code stream to obtain an encoding feature corresponding to the audio code stream (21), wherein the audio code stream is obtained by performing audio encoding on an audio signal; using at least one residual unit to perform residual processing of a decoding side on the encoding feature corresponding to the audio code stream to obtain an audio feature corresponding to the audio code stream (22); and performing feature reconstruction processing on the audio feature corresponding to the audio code stream to obtain a reconstructed audio signal corresponding to the audio code stream (23).

```
┌─────────────────────────────────────────────────────────────┐
│ Perform signal decoding on an audio bitstream to obtain an    │─ 21
│ encoding feature corresponding to the audio bitstream         │
└─────────────────────────────────────────────────────────────┘
                              ↓
┌─────────────────────────────────────────────────────────────┐
│ Perform, using at least one residual unit, decoding-side      │
│ residual processing on the encoding feature corresponding to  │─ 22
│ the audio bitstream to obtain an audio feature corresponding  │
│ to the audio bitstream                                        │
└─────────────────────────────────────────────────────────────┘
                              ↓
┌─────────────────────────────────────────────────────────────┐
│ Perform signal reconstruction on the audio feature            │
│ corresponding to the audio bitstream to obtain a synthesized  │─ 23
│ audio signal corresponding to the audio bitstream             │
└─────────────────────────────────────────────────────────────┘
```

**FIG. 17A**

EP 4 679 420 A1

**Description**

RELATED APPLICATION

Embodiments of this application are based upon and claims priority to Chinese Patent Application No. 202311006978.4, filed on August 10, 2023, which is incorporated herein by reference in its entirety.

FIELD OF THE TECHNOLOGY

This application relates to artificial intelligence (AI) technologies, and in particular, to an audio encoding method and apparatus, an audio decoding method and apparatus, an electronic device, a computer-readable storage medium, and a computer program product.

BACKGROUND OF THE DISCLOSURE

AI is a comprehensive technology of computer science. It involves the study of the design principles and implementation methods of various intelligent machines to enable the machines to have the functions of perception, reasoning, and decision-making. The AI technology is a comprehensive discipline and relates to a wide range of fields, such as natural language processing technology, machine learning (ML)/deep learning (DL), and several other major directions. With the development of technologies, the AI technology will be applied to more fields and have an increasingly important value.

An audio encoding and decoding technology is one of important applications in the field of AI and is a core technology in communication services including remote audio and video calls. Simply speaking, the voice encoding technology involves transferring voice information as much as possible using relatively few network bandwidth resources. From the perspective of Shannon's information theory, voice encoding is source encoding. An objective of source encoding is to compress the data volume of to-be-transferred information as much as possible at an encoder side, remove redundancy in the information, and enable lossless (or nearly lossless) recovery at a decoder side.

In the related art, in a decoding process, to ensure the efficiency of audio decoding, the quality of audio decoding will be greatly compromised.

SUMMARY

Embodiments of this application provide an audio encoding method and apparatus, an audio decoding method and apparatus, an electronic device, a computer-readable storage medium, and a computer program product, to improve the quality of audio decoding.

Technical solutions of the embodiments of this application are implemented as follows.

The embodiments of this application provide an audio encoding method, which is applied to an electronic device and includes the following operations:

performing feature extraction on an audio signal to obtain an audio feature of the audio signal;

performing, using at least one residual unit, residual processing on the audio feature to obtain an encoding feature of the audio signal; and

performing signal encoding on the encoding feature of the audio signal to obtain an audio bitstream of the audio signal.

The embodiments of this application provide an audio decoding method, which is applied to an electronic device and includes the following operations:

performing signal decoding on an audio bitstream to obtain an encoding feature of the audio bitstream,

the audio bitstream being obtained by performing audio encoding on an audio signal;

performing, using at least one residual unit, residual processing on the encoding feature of the audio bitstream to obtain an audio feature of the audio bitstream; and

performing signal reconstruction on the audio feature of the audio bitstream to obtain a reconstructed audio signal corresponding to the audio bitstream.

The embodiments of this application provide an audio encoding apparatus, including:

a feature extraction module configured to perform feature extraction on an audio signal to obtain an audio feature of the audio signal;

an encoding module configured to perform, using at least one residual unit, residual processing on the audio feature to obtain an encoding feature of the audio signal; and

a signal encoding module configured to perform signal encoding on the encoding feature of the audio signal to obtain an audio bitstream of the audio signal.

The embodiments of this application provide an audio decoding apparatus, including:

a signal decoding module configured to perform signal decoding on an audio bitstream to obtain an encoding feature of the audio bitstream,

the audio bitstream being obtained by performing audio encoding on an audio signal;

a decoding module configured to perform, using at least one residual unit, residual processing on the encoding feature of the audio bitstream to obtain an audio feature of the audio bitstream; and

a signal reconstruction module configured to perform signal reconstruction on the audio feature of the audio bitstream to obtain a reconstructed audio signal corresponding to the audio bitstream.

The embodiments of this application provide an electronic device, including:

a memory configured to store a computer-executable instruction; and

a processor configured to implement the audio encoding method or the audio decoding method provided in the embodiments of this application when executing the computer-executable instruction stored in the memory.

The embodiments of this application provide a computer-readable storage medium, having a computer-executable instruction stored therein, and the computer-executable instruction, when executed by a processor, implementing the audio encoding method or the audio decoding method provided in the embodiments of this application.

The embodiments of this application provide a computer program product, including a computer-executable instruction, and the computer-executable instruction, when executed by a processor, implementing the audio encoding method or the audio decoding method provided in the embodiments of this application.

The embodiments of this application have the following beneficial effects.

Residual processing is performed on the encoding feature of the audio bitstream. Based on the characteristics of residual processing, it can be ensured that shallow information of the encoding feature can be better utilized while comprehensively learning the audio bitstream, thereby improving the feature characterization capability of the audio feature of the audio bitstream, and further improving the quality of audio decoding.

BRIEF DESCRIPTION OF THE DRAWINGS

FIG. 1 is a schematic diagram of comparing spectra at different bit rates according to an embodiment of this application.

FIG. 2 is a schematic architectural diagram of an audio encoding and decoding system according to an embodiment of this application.

FIG. 3A to FIG. 3B are schematic structural diagrams of an electronic device according to an embodiment of this application.

FIG. 4A is a first schematic flowchart of an audio encoding method according to an embodiment of this application.

FIG. 4B is a second schematic flowchart of an audio encoding method according to an embodiment of this application.

FIG. 4C is a third schematic flowchart of an audio encoding method according to an embodiment of this application.

FIG. 4D is a fourth schematic flowchart of an audio encoding method according to an embodiment of this application.

FIG. 4E is a fifth schematic flowchart of an audio encoding method according to an embodiment of this application.

FIG. 4F is a sixth schematic flowchart of an audio encoding method according to an embodiment of this application.

FIG. 5A is a first schematic flowchart of an audio decoding method according to an embodiment of this application.

FIG. 5B is a second schematic flowchart of an audio decoding method according to an embodiment of this application.

FIG. 5C is a third schematic flowchart of an audio decoding method according to an embodiment of this application.

FIG. 5D is a fourth schematic flowchart of an audio decoding method according to an embodiment of this application.

FIG. 6A is a schematic diagram of channels without using group convolution according to an embodiment of this application.

FIG. 6B is a schematic diagram of channels using group convolution according to an embodiment of this application.

FIG. 6C is a schematic diagram of a voice communication link according to an embodiment of this application.

FIG. 7A is a schematic flowchart of an audio encoding and decoding method according to an embodiment of this application.

FIG. 7B is a schematic flowchart of a low-complexity and low-bit-rate neural network (NN) voice compression method according to an embodiment of this application.

FIG. 8 is a schematic diagram of a filter bank according to an embodiment of this application.

FIG. 9A is a schematic diagram of an ordinary convolutional network according to an embodiment of this application.

FIG. 9B is a schematic diagram of a dilated convolutional network according to an embodiment of this application.

FIG. 10 is a schematic diagram of bandwidth extension according to an embodiment of this application.

FIG. 11 is a schematic diagram of a third NN according to an embodiment of this application.

FIG. 12A is a schematic structural diagram of a residual block used in an encoding block according to an embodiment of this application.

FIG. 12B is a schematic structural diagram of a residual unit according to an embodiment of this application.

FIG. 13 is a schematic diagram of a fourth NN according to an embodiment of this application.

FIG. 14 is a schematic diagram of a first NN according to an embodiment of this application.

FIG. 15 is a schematic diagram of a second NN according to an embodiment of this application.

FIG. 16A is a schematic flowchart of an audio encoding method according to an embodiment of this application.

FIG. 16B is another schematic flowchart of an audio encoding method according to an embodiment of this application.

FIG. 17A is a schematic flowchart of an audio decoding method according to an embodiment of this application.

FIG. 17B is another schematic flowchart of an audio decoding method according to an embodiment of this application.

DESCRIPTION OF EMBODIMENTS

To make the objectives, technical solutions, and advantages of this application clearer, this application will be described in further detail below with reference to the accompanying drawings. The described embodiments are not to be considered as a limitation to this application. All other embodiments obtained by a person skilled in the art without creative efforts shall fall within the protection scope of this application.

The term, involved in the following description, "first/second" is merely intended to distinguish similar objects rather than describing specific orders. The "first/second" is interchangeable in proper circumstances to enable the embodiments of this application to be implemented in other orders than those illustrated or described herein.

The term, involved in the following description, "some embodiments" describes subsets of all possible embodiments, but "some embodiments" may be the same subset or different subsets of all the possible embodiments and may be combined with each other without conflict.

In the embodiments of this application, the term "module" or "unit" refers to a computer program having a predetermined function or a part of a computer program, works together with other relevant parts to achieve a predetermined objective, and may be all or partially implemented through software, hardware (such as a processing circuit or a memory), or a combination thereof. Similarly, one processor (or a plurality of processors or memories) may be configured to implement one or more modules or units. In addition, each module or unit may be a part of an overall module or unit including a function of the module or unit.

Unless defined otherwise, all technical and scientific terminologies used herein have the same meaning as commonly understood by a person skilled in the art to which this application belongs. Terms used herein are merely intended to describe the embodiments of this application, but are not intended to limit this application.

Before the embodiments of this application are further described in detail, nouns and terms involved in the embodiments of this application are described. The nouns and terms involved in the embodiments of this application are applicable to the following explanations.

(1) NN: it is an algorithmic mathematical model that imitates behavior features of an animal NN and performs distributed parallel information processing. This network depends on the complexity of a system and adjusts the interconnected relationships between a large number of internal nodes to achieve information processing.

(2). DL: it is a new research direction in the field of ML. DL involves learning inherent laws and representation levels of sample data, and information obtained during the learning is of great help in the interpretation of data such as a text, an image, and a sound. Its ultimate objective is to enable a machine to have the ability to analyze and learn like humans, and to recognize the data such as a text, an image, and a sound.

(3) Quantization: it refers to a process of approximating continuous values (or a large number of discrete values) of a signal to a limited number of (or fewer) discrete values. Quantization includes vector quantization (VQ) and scalar quantization.

VQ is an effective lossy compression technology, and its theoretical basis is Shannon's rate-distortion theory. A basic principle of VQ is to replace an input vector with an index of a codeword that best matches the input vector in a codebook for transmission and storage. Only a simple table lookup operation is needed during decoding. For example, several pieces of scalar data are formed into a vector space, and the vector space is divided into several small regions. During quantization, a corresponding index of a vector falling into the small region is adopted to replace the input vector.

Scalar quantization refers to quantizing scalars, i.e., one-dimensional VQ. A dynamic range is divided into several small intervals, and each small interval has a representative value (i.e., an index). When an input signal falls within an interval, the input signal is quantized into the representative value.

(4) Entropy encoding: it is a lossless encoding mode in which no information is lost according to an entropy principle in an encoding process. It is also a key module in lossy encoding and located at an end of an encoder. Entropy encoding includes Shannon encoding, Huffman encoding, Exponential-Golomb (Exp-Golomb) encoding, and arithmetic encoding.

(5) Quadrature mirror filter (QMF) bank: it is an analysis-synthesis filter pair. A QMF analysis filter is configured for sub-band signal decomposition to reduce the signal bandwidth so that each sub-band signal may be successfully processed through a respective channel. A QMF synthesis filter is configured to synthesize sub-band signals recovered by the decoder side, for example, to reconstruct an original audio signal through zero-value interpolation, band-pass filtering, or other modes.

The QMF bank, a dilated convolutional network, and bandwidth extension are first described below before the audio encoding method and the audio decoding method provided in the embodiments of this application are specifically described.

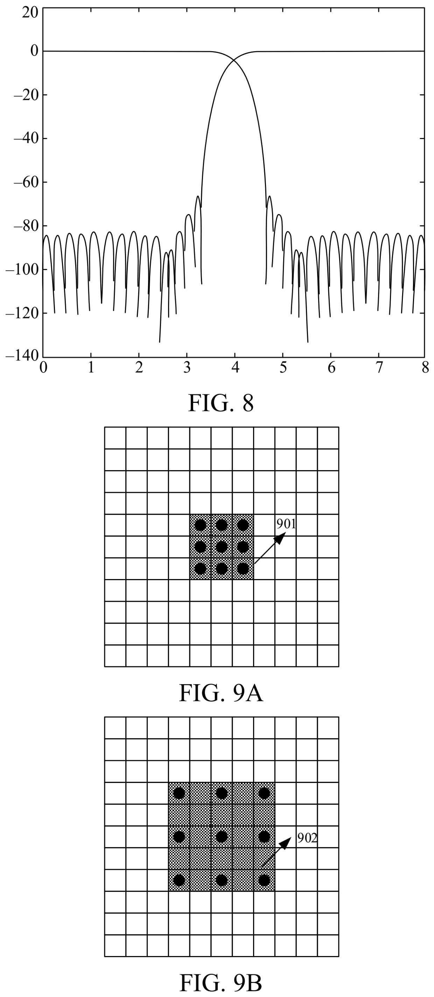

The QMF bank is an analysis-synthesis filter pair. For the QMF analysis filter, an input signal with a sampling rate Fs may be decomposed into two signals with a sampling rate Fs/2, representing a QMF low-pass signal and a QMF high-pass signal, respectively. FIG. 8 shows spectral responses of a low-pass part () and a high-pass part _h() of the QMF. Based on related theoretical knowledge of a QMF analysis filter bank, a correlation between coefficients of low-pass filtering and high-pass filtering may be easily described, as shown in formula (1):

$$h_{High}(k) = -1^k h_{Low}(k) \qquad (1),$$

where $h_{Low}(k)$ represents the coefficient of low-pass filtering, and $h_{High}(k)$ represents the coefficient of high-pass filtering.

Similarly, according to the related theory of the QMF, a QMF synthesis filter bank may be described based on the QMF analysis filter bank _() and _h(), as shown in formula (2):

$$G_{Low}(z) = H_{Low}(z)$$

$$G_{High}(z) = (-1) * H_{High}(z) \qquad (2),$$

where $G_{Low}(z)$ represents a recovered low-pass signal, and $G_{High}(z)$ represents a recovered high-pass signal.

The low-pass and high-pass signals recovered by the decoder side are synthesized through the QMF synthesis filter bank so that a reconstructed signal (i.e., a synthesized signal) with a sampling rate Fs corresponding to the input signal may be recovered.

FIG. 9A is a schematic diagram of an ordinary convolutional (for example, causal convolutional) network according to an embodiment of this application, and FIG. 9B is a schematic diagram of a dilated convolutional network according to an embodiment of this application. Compared with the ordinary convolutional network, dilated convolution can increase a receptive field, keep a size of a feature map unchanged, and further avoid errors caused by upsampling and downsampling. Convolution kernel sizes shown in FIG. 9A and FIG. 9B are each 3×3. However, a receptive field 901 in the ordinary convolution shown in FIG. 9A is only 3, and a receptive field 902 in the dilated convolution shown in FIG. 9B reaches 5. That is, for a convolution kernel having a size of 3×3, the ordinary convolution shown in FIG. 9A has a receptive field of 3 and a dilation rate (the number of intervals of points in the convolution kernel) of 1. However, the dilated convolution shown in FIG. 9B has a receptive field of 5 and a dilation rate of 2.

The convolution kernel may alternatively move on a plane similar to that in FIG. 9A or FIG. 9B, and a concept of a stride rate (step) is involved herein. For example, each time the convolution kernel is shifted by 1 grid, and a corresponding stride rate is 1.

In addition, a concept of the number of convolution channels is involved, that is, adopting the number of parameters corresponding to the convolution kernel to perform convolution analysis. Theoretically, a larger number of channels indicates more comprehensive signal analysis and higher precision. However, a larger number of channels indicates higher complexity. For example, for a 1×320 tensor, a 24-channel convolution operation may be adopted to output a 24×320 tensor.

A dilated convolution kernel size (for example: for a voice signal, a convolution kernel size may be set to 1×3), the dilation rate, the stride rate, and the number of channels may be defined according to actual application requirements. This is not specifically limited in the embodiments of this application.

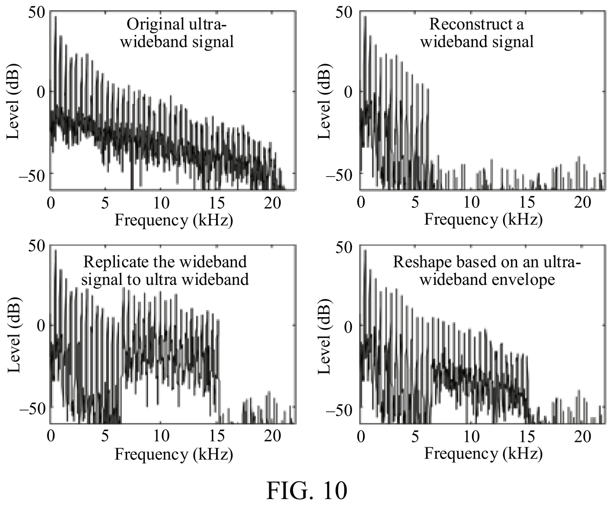

As shown in a schematic diagram of bandwidth extension (or bandwidth replication) in FIG. 10, a wideband signal is first reconstructed, then the wideband signal is replicated to an ultra-wideband signal, and finally, reshaping is performed based on an ultra-wideband envelope. A frequency domain implementation solution shown in FIG. 10 specifically includes: 1) implementing encoding of one core layer at a low sampling rate; 2) selecting a low-frequency spectrum to replicate to a high-frequency spectrum; and 3) performing gain control on the replicated high-frequency spectrum according to boundary information (describing an energy correlation between a high frequency and a low frequency, and the like) recorded in advance. The sampling rate may be doubled using only a bit rate of 1-2 kbps.

The voice encoding technology involves transferring voice information as much as possible using relatively few network bandwidth resources. A compression rate of a voice codec may reach more than 10 times, that is, after voice data of original 10 MB is compressed by an encoder, only 1 MB is needed for transmission, thereby greatly reducing the bandwidth resources consumed for information transferring. For example, for a wideband voice signal with a sampling rate of 16,000 Hz, if a 16-bit sampling depth is used (fineness of voice strength recorded in sampling), a bit rate (a transmitted data volume per unit time) of an uncompressed version is 256 kbps. If the voice encoding technology is used, even with lossy encoding, in a bit rate range of 10-20 kbps, the quality of a reconstructed voice signal may be close to that of the uncompressed version, and even audibly perceived as indistinguishable. If a service with a higher sampling rate is needed, for example, an ultra-wideband voice of 32,000 Hz, a bit rate range at least reaches 30 kbps.

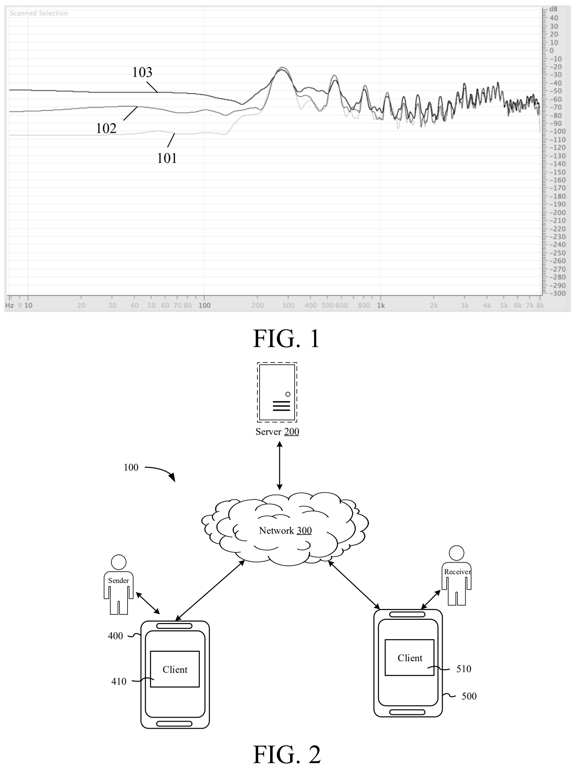

In a communication system, to ensure successful communication, a standard voice encoding and decoding protocol is deployed in the industry, for example, standards from international and domestic standard organizations such as ITU-T, 3GPP, IETF, AVS, and CCSA, G.711, G.722, AMR series, EVS, and OPUS. FIG. 1 is a schematic diagram of comparing spectra at different bit rates, to demonstrate a relationship between a compressed bit rate and quality. A curve 101 is a spectrum curve of an original voice, i.e., an uncompressed signal. A curve 102 is a spectrum curve of an OPUS encoder at a bit rate of 20 kbps. A curve 103 is a spectrum curve of OPUS encoding at a bit rate of 6 kbps. It can be learned from FIG. 1 that as the encoding bit rate increases, a compressed signal is closer to an original signal.

The voice encoding principle is roughly as follows. The voice encoding may directly encode voice waveform samples sample by sample. Alternatively, related low-dimensional features are extracted based on a human sounding principle, an encoder side encodes the features, and a decoder side reconstructs a voice signal based on these parameters.

The foregoing encoding principles come from voice signal modeling, i.e., a signal processing-based compression method, and the audio encoding quality cannot be ensured. To improve the encoding efficiency while ensuring the voice quality, the embodiments of this application provide an audio encoding method and apparatus, an audio decoding method and apparatus, an electronic device, a computer-readable storage medium, and a computer program product. Exemplary application of an electronic device provided in the embodiments of this application is described below. The electronic device provided in the embodiments of this application may be implemented as a terminal device or as a server or may be collaboratively implemented by the terminal device and the server. An example in which the electronic device is implemented as the terminal device is used for description.

For example, FIG. 2 is a schematic architectural diagram of an audio encoding and decoding system 10 according to an embodiment of this application. The audio encoding and decoding system 10 includes: a server 200, a network 300, a terminal device 400 (i.e., an encoder side), and a terminal device 500 (i.e., a decoder side). The network 300 may be a local area network, a wide area network, or a combination thereof.

In some embodiments, a client 410 runs on the terminal device 400. The client 410 may be various types of clients, such as an instant messaging client, a web conference client, a livestreaming client, or a browser. In response to an audio acquisition instruction triggered by a sender (for example, an initiator of a web conference, a host, or an initiator of a voice call), the client 410 invokes a microphone provided in the terminal device 400 to acquire an audio signal, and performs audio encoding on the acquired audio signal to obtain a bitstream (a high-frequency bitstream and a low-frequency bitstream).

For example, the client 410 invokes the audio encoding method provided in the embodiments of this application to encode the acquired audio signal. That is, the client performs feature extraction on the audio signal to obtain an audio feature of the audio signal; performs, using at least one residual unit, residual processing on the audio feature to obtain an encoding feature of the audio signal; and performs signal encoding on the encoding feature of the audio signal to obtain an audio bitstream of the audio signal. In an embodiment, sub-band decomposition is performed on the audio signal to obtain a low-frequency sub-band signal and a high-frequency sub-band signal of the audio signal. The audio encoding method provided in the embodiments of this application may be performed on the low-frequency sub-band signal to obtain a low-frequency bitstream of the audio signal. Certainly, audio encoding needs to be performed on the high-frequency sub-band signal of the audio signal to obtain a high-frequency bitstream of the audio signal. An audio encoding mode for the high-frequency sub-band signal is not limited to the audio encoding method provided in the embodiments of this application and may alternatively be other audio encoding methods. The encoder side (i.e., the terminal device 400) combines a signal processing technology and an AI technology to perform residual processing on the audio feature of the audio signal to ensure that shallow information of the audio feature can be better utilized while comprehensively learning the audio feature, thereby improving the feature characterization capability of the encoding feature, and further improving the quality of audio encoding. In addition, in this embodiment of this application, the number of sub-band signals (including the low-frequency sub-band signal and the high-frequency sub-band signal) obtained through sub-band decomposition is not limited, and may be any positive integer such as 2, 3, 4, or 5. That is, the number of low-frequency sub-band signals is at least one, and the number of high-frequency sub-band signals is at least one.

The client 410 may transmit the audio bitstream to the server 200 through the network 300 so that the server 200 transmits the audio bitstream to the terminal device 500 associated with a receiver (for example, a participant of a web conference, an audience, or a receiver of a voice call).

After receiving the audio bitstream transmitted by the server 200, a client 510 running on the terminal device 500 (for example, an instant messaging client, a web conference client, a livestreaming client, or a browser) may perform audio decoding on the bitstream to obtain a reconstructed audio signal, thereby achieving audio communication.

For example, the client 510 invokes the audio decoding method provided in the embodiments of this application to decode a received audio bitstream. That is, the client performs signal decoding on the audio bitstream to obtain an encoding feature of the audio bitstream, the audio bitstream being obtained by performing audio encoding on an audio signal; performs, using at least one residual unit, residual processing on the encoding feature of the audio bitstream to obtain an audio feature of the audio bitstream; and performs signal reconstruction on the audio feature of the audio bitstream to obtain a reconstructed audio signal corresponding to the audio bitstream. Certainly, when the received audio bitstream is a low-frequency bitstream in a full-frequency bitstream, the audio decoding method in the embodiments of this application is performed on the low-frequency bitstream to obtain a low-frequency sub-band signal (which is an estimated value of a low-frequency sub-band signal in sub-band decomposition at the encoding side). Certainly, the full-frequency bitstream further includes a high-frequency bitstream. Audio decoding is performed on the high-frequency bitstream to obtain a high-frequency sub-band signal (which is an estimated value of a high-frequency sub-band signal in sub-band decomposition at the encoding side). Sub-band synthesis is performed on the low-frequency sub-band signal and the high-frequency sub-band signal to obtain the reconstructed audio signal. An audio decoding mode for the high-frequency bitstream is not limited to the audio decoding method provided in the embodiments of this application and may alternatively be other audio decoding methods.

In some embodiments, the embodiments of this application may be implemented through a cloud technology. The cloud technology refers to a hosting technology that unifies a series of resources such as hardware, software, and networks within a wide area network or a local area network to implement data calculation, storage, processing, and sharing.

The cloud technology is a generic term of a network technology, an information technology, an integration technology, a management platform technology, and an application technology based on application of a cloud computing business model. It may form a resource pool and may be used on demand, which is flexible and convenient. The cloud computing technology will become an important support. A service interaction function between the foregoing servers 200 may be implemented through the cloud technology.

For example, the server 200 shown in FIG. 2 may be an independent physical server, may be a server cluster or a distributed system including a plurality of physical servers, or may be a cloud server providing basic cloud computing services such as a cloud service, a cloud database, cloud computing, a cloud function, cloud storage, a network service, cloud communication, a middleware service, a domain name service, a security service, a content delivery network (CDN), and a big data and AI platform. The terminal device 400 and the terminal device 500 shown in FIG. 2 may each be a smartphone, a tablet computer, a notebook computer, a desktop computer, a smart speaker, a smart watch, an in-vehicle terminal, or the like, but is not limited thereto. The terminal device (for example, the terminal device 400 and the terminal device 500) and the server 200 may be directly or indirectly connected in a wired or wireless communication manner. This is not limited in the embodiments of this application.

In some embodiments, the terminal device or the server 200 may implement, by running a computer program, the audio encoding method or the audio decoding method provided in the embodiments of this application. For example, the computer program may be an original program or a software module in an operating system, may be a native application (APP), i.e., a program such as a livestreaming APP, a web conference APP, or an instant messaging APP that needs to be installed in an operating system to run, may be a mini program, which may be run after being downloaded to a browser environment, or may be a mini program that can be embedded in any APP. In summary, the foregoing computer program may be an APP, a module, or a plug-in in any form.

In some embodiments, a plurality of servers may form a blockchain. The server 200 is a node on the blockchain. Each node of the blockchain may have information connection, and information transmission may be performed between nodes through the information connection. Data (for example, audio encoding logic, audio decoding logic, the high-frequency bitstream, and the low-frequency bitstream) related to the audio encoding method or the audio decoding method provided in the embodiments of this application may be stored in the blockchain.

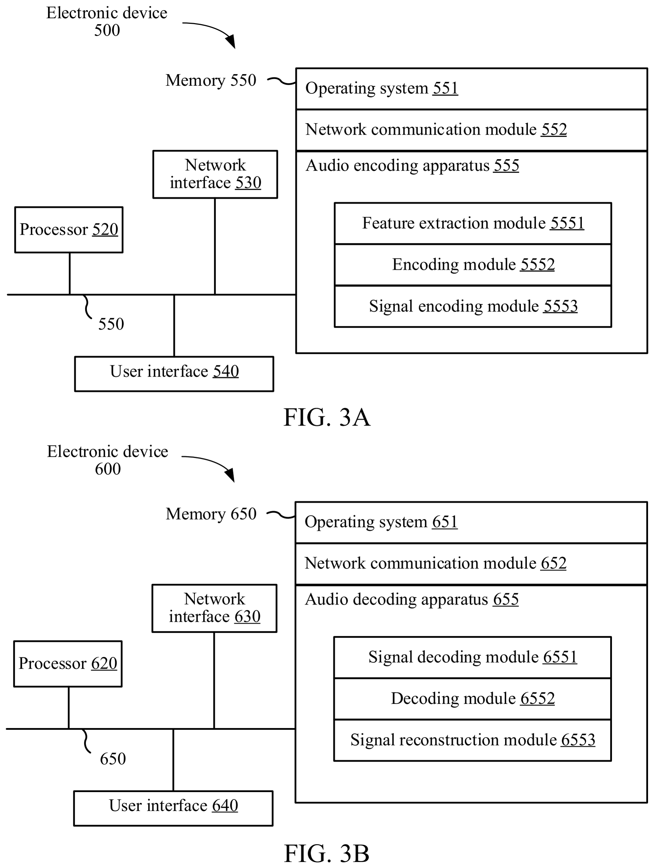

FIG. 3A is a schematic structural diagram of an electronic device 500 according to an embodiment of this application. An example in which the electronic device 500 is a terminal device is used for description. The electronic device 500 shown in FIG. 3A includes: at least one processor 520, a memory 550, at least one network interface 530, and a user interface 540. Components in the electronic device 500 are coupled together through a bus system 550. The bus system 550 is configured to implement connection and communication between the components. In addition to a data bus, the bus system 550 further includes a power bus, a control bus, and a state signal bus. However, for clear description, various types of buses in FIG. 3A are marked as the bus system 550.

The processor 520 may be an integrated circuit chip having a signal processing capability, for example, a general-purpose processor, a digital signal processor (DSP), or another programmable logic device, discrete gate, transistor logical device, or discrete hardware component. The general-purpose processor may be a microprocessor, any conventional processor, or the like.

The memory 550 may be removable, non-removable, or a combination thereof. Exemplary hardware devices include a solid-state memory, a hard disk drive, a compact disc (CD) drive, and the like. The memory 550 alternatively includes one or more storage devices physically located away from the processor 520.

The memory 550 includes a volatile memory or a non-volatile memory, or may include both the volatile memory and the non-volatile memory. The non-volatile memory may be a read only memory (ROM). The volatile memory may be a random access memory (RAM). The memory 550 described in this embodiment of this application is intended to include any suitable type of memory.

In some embodiments, the memory 550 can store data to support various operations. Examples of the data include a program, a module, and a data structure, or their subsets or supersets, which are exemplified below.

An operating system 551 includes a system program configured for processing various basic system services and performing hardware-related tasks, such as a framework layer, a core library layer, or a driver layer, to implement various basic businesses and process the hardware-based tasks.

A network communication module 552 is configured to reach another computing device via one or more (wired or wireless) network interfaces 530. Illustratively, the network interface 530 includes: Bluetooth, wireless fidelity (WiFi), a universal serial bus (USB), and the like.

In some embodiments, the audio encoding apparatus provided in this embodiment of this application may be implemented in a software manner. FIG. 3A shows an audio encoding apparatus 555 stored in the memory 550. The audio encoding apparatus 555 may be software in the form of a program, a plug-in, or the like, and includes the following software modules: a feature extraction module 5551, an encoding module 5552, and a signal encoding module 5553. The feature extraction module 5551, the encoding module 5552, and the signal encoding module 5553 are configured to implement an audio encoding function. These modules are logical, and therefore may be arbitrarily combined or further split according to the implemented function.

FIG. 3B is a schematic structural diagram of an electronic device 600 according to an embodiment of this application. An example in which the electronic device 600 is a terminal device is used for description. The electronic device 600 shown in FIG. 3B includes: at least one processor 620, a memory 650, at least one network interface 630, and a user interface 640. Components in the electronic device 600 are coupled together through a bus system 650. The memory 650 includes an operating system 651 and a network communication module 652. A function of the structure in FIG. 3B is similar to that of the structure in FIG. 3A. The audio decoding apparatus provided in this embodiment of this application may be implemented in a software manner. FIG. 3B shows an audio decoding apparatus 655 stored in the memory 650. The audio decoding apparatus 655 may be software in the form of a program, a plug-in, or the like, and includes the following software modules: a signal decoding module 6551, a decoding module 6552, and a signal reconstruction module 6553. The signal decoding module 6551, the decoding module 6552, and the signal reconstruction module 6553 are configured to implement an audio decoding function. These modules are logical, and therefore may be arbitrarily combined or further split according to the implemented function.

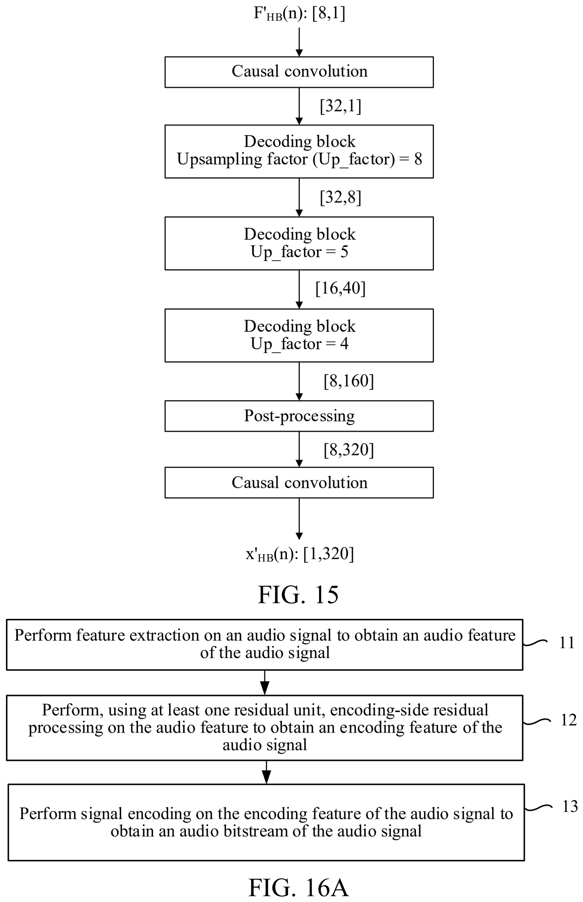

As described above, the audio encoding method provided in the embodiments of this application may be implemented by various types of electronic devices. FIG. 16A is a schematic flowchart of an audio encoding method according to an embodiment of this application. An audio encoding function is implemented through the audio encoding method. Descriptions are provided below with reference to operation 11 to operation 13 shown in FIG. 16A.

Operation 11: Perform feature extraction on an audio signal to obtain an audio feature of the audio signal.

Herein, in this embodiment of this application, a third NN may be invoked based on the audio signal, and the audio feature is extracted from the audio signal through the third NN to continue to perform feature extraction based on an important audio feature subsequently. This embodiment of this application is not limited to the structure of the third NN. The third NN may be a convolutional neural network (CNN), a deep NN, or the like.

In some embodiments, operation 11 may be implemented in the following manner: performing causal convolution on the audio signal to obtain a causal convolution feature; and performing pooling on the causal convolution feature to obtain the audio feature of the audio signal.

In the field of audio encoding and decoding, operations such as causal convolution and pooling of the NN play important roles and are configured for processing an audio signal and extracting a feature from the audio signal. During audio encoding and decoding, a causal convolution operation may be configured for extracting a local feature from the audio signal. A convolution operation may be performed in a time dimension of the audio signal through a convolution kernel (a learnable filter) to capture a mode and resonance in the signal. Through causal convolution, time domain and frequency domain features may be extracted from the audio signal for tasks such as denoising, feature extraction, and signal separation. The pooling operation is configured for reducing the time dimension of the audio signal, thereby reducing the data complexity and the calculation amount. The causal convolution is a convolution operation configured for processing sequence data in an NN model. The causal convolution operation is performed only on a current element and a previous element of the sequence, thereby preserving time sequence information of the sequence data and preventing back propagation of information over time. The causal convolution ensures forward propagation of information in the sequence by limiting a propagation direction of the convolution kernel, thereby preventing the information from flowing backward. In a specific NN implementation, the causal convolution is usually implemented by introducing edge padding or truncation before a convolution operation. In this way, calculation of the convolution is performed only inside a sequence, thereby ensuring that an output at each time point depends only on an input at the time point and an input previous to the time point. For example, when a sequence of a fixed length is processed, special padding elements (for example, 0 or another identification value) may be added to a starting part of the sequence. In this way, in the convolution operation, these padding elements do not affect an actual convolution result because the padding elements are not within a range of the convolution kernel. In this way, the convolution kernel can only operate on real data of the sequence, thereby maintaining a causal relationship of information. In a DL framework, the causal convolution may be implemented by setting a parameter of a convolution layer, for example, specifying a size and a step of a convolution kernel. In general, the causal convolution plays an important role in ensuring the fidelity of a temporal causal relationship in sequence data processing and is widely applied to fields that require a strict time sequence, such as natural language processing and voice recognition.

In a pooling operation, a local region of an input signal may be sampled, and information of the region, such as a maximum value or an average value, is summarized, thereby generating a more compact feature representation. In the audio signal, the pooling operation may help to improve the robustness and generalization capability of a network and reduce a risk of overfitting. In the field of audio encoding and decoding, operations such as convolution and pooling may implement tasks such as feature extraction, encoding, and decoding of the audio signal by constructing an appropriate NN structure. These operations help to improve the efficiency and quality of audio signal processing, and extend an application range of the audio encoding and decoding technology in fields such as audio processing, voice recognition, and music generation.

Operation 12: Perform, using at least one residual unit, encoding-side residual processing on the audio feature to obtain an encoding feature of the audio signal.

In the NN model, the residual unit refers to a special structure and is configured to construct residual network (ResNets). The residual unit aims to solve problems of gradient vanishing and gradient exploding in a deep NN training process, and help the network better learn features. A skip connection is introduced into the residual unit, that is, an input is directly added to an output (i.e., residual processing), instead of simply transferring layer by layer. This skip connection enables a network to learn a residual function, that is, learn a difference between the input and the output, instead of directly learning a mapping relationship. This design makes the network easier to be optimized and helps alleviate the problem of gradient vanishing.

Based on the characteristics of the residual unit, the residual processing in operation 12 is configured for calculating a residual of the audio feature at the encoding side and determining the residual of the audio feature as the encoding feature to perform subsequent signal encoding. For example, the residual of the audio feature is obtained by adding the audio feature to the output of the residual unit. That is, the audio feature is used as the input of the residual unit. After the audio feature is processed by the residual unit, the output of the residual unit is obtained. In addition, the input of the residual unit and the output of the residual unit are added through the characteristics of the skip connection of the residual unit to obtain the residual of the audio feature.

Herein, residual processing is performed on the audio feature. Based on the characteristics of the residual processing, it is ensured that shallow feature information of the audio feature can be better utilized while comprehensively learning the audio feature, thereby avoiding omission of the shallow feature information of the audio feature.

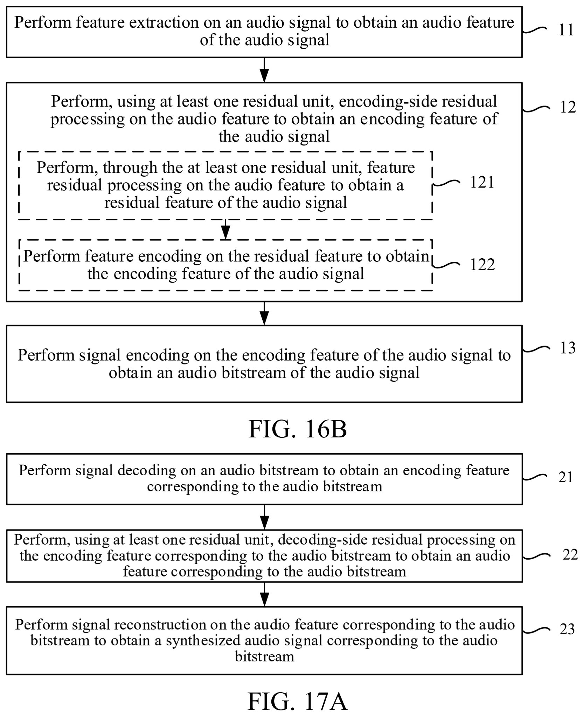

In some embodiments, FIG. 16B is another schematic flowchart of an audio encoding method according to an embodiment of this application. FIG. 16B shows that operation 12 in FIG. 16A may be implemented through operation 121 to operation 122.

Operation 121: Perform, through the at least one residual unit, feature residual processing on the audio feature to obtain a residual feature of the audio signal.

The feature residual processing in operation 121 is configured for calculating the residual of the audio feature and determining the residual of the audio feature as the residual feature of the audio signal to perform subsequent feature encoding.

In some embodiments, when the at least one residual unit includes one residual unit, operation 1021 may be implemented in the following manner: performing, through one residual unit, feature residual processing on the audio feature to obtain the residual feature of the audio signal, the feature residual processing of one residual unit being configured for calculating a residual corresponding to the audio feature at the encoding side.

In some embodiments, when the at least one residual unit includes a plurality of cascaded residual units, operation 121 may be implemented in the following manner: performing feature residual processing on the audio feature through a first residual unit of the plurality of cascaded residual units, the feature residual processing of the first residual unit being configured for calculating a residual of the audio feature and determining the residual of the audio feature as a residual result of the first residual unit; outputting the residual result outputted by the first residual unit to a subsequent cascaded residual unit, and continuing to perform feature residual processing through the subsequent cascaded residual unit and output a residual result, the feature residual processing of the subsequent cascaded residual unit being configured for calculating a residual of the residual result inputted to the subsequent cascaded residual unit; and using a residual result outputted by a last residual unit as the residual feature of the audio signal.

In some embodiments, a processing process of performing feature residual processing through the residual unit is as follows: performing the following processing through a $k^{th}$ residual unit of the plurality of cascaded residual units: convolving an input of the $k^{th}$ residual unit to obtain a convolution result of the $k^{th}$ residual unit; and adding the convolution result of the $k^{th}$ residual unit to an input of the $k^{th}$ residual unit to obtain a residual result outputted by the $k^{th}$ residual unit, where k is a sequentially increasing positive integer, $1 \leq k \leq J$, and J is the number of residual units; when k is 1, the input of the $k^{th}$ residual unit is the audio feature, and when k is not 1, the input of the $k^{th}$ residual unit is a residual feature, i.e., a residual result outputted by a $(k-1)^{th}$ residual unit. That is, performing feature residual processing on the audio feature through the first residual unit of the plurality of cascaded residual units may be implemented in the following manner: performing the following processing through the first residual unit of the plurality of cascaded residual units: convolving the audio feature to obtain a convolution result of the first residual unit; and adding the convolution result of the first residual unit to the audio feature to obtain the residual result outputted by the first residual unit. The continuing to perform feature residual processing through the subsequent cascaded residual unit and output a residual result may be implemented in the following manner: performing the following processing through a $j^{th}$ residual unit of the plurality of cascaded residual units: convolving a residual result outputted by a $(j-1)^{th}$ residual unit to obtain a convolution result of the $j^{th}$ residual unit; adding the convolution result of the $j^{th}$ residual units to the residual result outputted by the $(j-1)^{th}$ residual unit to obtain a residual result outputted by the $j^{th}$ residual unit; and outputting the residual result outputted by the $j^{th}$ residual unit to a $(j+1)^{th}$ residual unit, where j is a sequentially increasing positive integer, $1 < j < J$, and J is the number of residual units.

Following the foregoing embodiment, each residual unit includes a dilated convolution operator. The following processing is performed through the $k^{th}$ residual unit of the plurality of cascaded residual units. The convolving an input of the $k^{th}$ residual unit to obtain a convolution result of the $k^{th}$ residual unit may be implemented in the following manner: performing the following processing through the $k^{th}$ residual unit of the plurality of cascaded residual units: performing dilated convolution on the input of the $k^{th}$ residual unit to obtain the convolution result of the $k^{th}$ residual unit. That is, dilated convolution is performed on the audio feature through a dilated convolution operator included in the first residual unit to obtain a dilated convolution result of the first residual unit. The following processing is performed through the $j^{th}$ residual unit of the plurality of cascaded residual units: performing, through a dilated convolution operator included in the $j^{th}$ residual unit, dilated convolution on the residual result outputted by the $(j-1)^{th}$ residual unit to obtain a dilated convolution result of the $j^{th}$ residual unit, where j is a sequentially increasing positive integer, $1 < j \leq J$, and J is the number of residual units. Each residual unit contains a dilated convolution operator of a specified dilation rate. A dilated convolution operator of progressive dilation rates is used, which is equivalent to extracting features of an input at different resolutions using different receptive fields, so that data may be better analyzed comprehensively. After each residual unit is convolved through a dilated convolution operator of a dilation rate, the residual unit is added to a shallow feature (i.e., an input of each residual unit) obtained through skip connection, thereby directly using shallow feature information. Thus, the network may fully use the shallow feature information in a learning process.

Following the foregoing embodiment, each residual unit not only includes the dilated convolution operator, but also includes at least one causal convolution operator. After the input of the $k^{th}$ residual unit is convolved to obtain the convolution result of the $k^{th}$ residual unit, causal convolution is performed on an obtained dilated convolution result through at least one causal convolution operator included in the $k^{th}$ residual unit, and an obtained causal convolution result is used as the convolution result of the $k^{th}$ residual unit. That is, causal convolution is performed on the dilated convolution result of the first residual unit through at least one causal convolution operator included in the first residual unit, and an obtained causal convolution result is used as a convolution result outputted by the first residual unit. After dilated convolution is performed on the residual result outputted by the $(j-1)^{th}$ residual unit through the dilated convolution operator included in the $j^{th}$ residual unit to obtain the dilated convolution result of the $j^{th}$ residual unit, causal convolution is performed on the dilated convolution result of the $j^{th}$ residual unit through at least one causal convolution operator included in the $j^{th}$ residual unit, and a causal convolution result of the $j^{th}$ residual unit is used as the convolution result of the $j^{th}$ residual unit. Each residual unit further includes at least one causal convolution operator, and local information of features inputted to the causal convolution operator continues to be extracted through the causal convolution operator.

In the NN model, causal convolution is a special type when time sequence data (the audio signal is a type of time sequence data) is processed, which may ensure that an output of the NN depends on only a current time step and a previous time step, thereby maintaining a causal relationship over time. In actual application, for the causal convolution, a size of a convolution kernel may be adjusted to ensure that the convolution kernel does not span a region before the current time step. In this way, a long-term dependency relationship in a time sequence may be effectively captured, and the problem of gradient vanishing or exploding caused by confusion of future information may be avoided. The causal convolution is especially important in fields such as natural language processing, voice recognition, and time sequence prediction. The causal convolution follows the time sequence of data so that confusion of past information is avoided, and long-time sequence data can be effectively processed and predicted. In tasks such as voice recognition and time sequence prediction, the causal convolution exhibits good performance due to its characteristics of keeping a time sequence.

In some embodiments, when group convolution is applied to the dilated convolution operator included in the residual unit, performing dilated convolution on the audio feature may be implemented in the following manner: grouping input channels of the audio feature to obtain a plurality of first groups, each first group including first elements (i.e., first feature values) corresponding to at least two channels in the audio feature; and performing dilated convolution on the first elements in each first group. When group convolution is applied to the causal convolution operator included in the residual unit, performing causal convolution on the obtained dilated convolution result may be implemented in the following manner: grouping input channels of the dilated convolution result to obtain a plurality of second groups, each second group including second elements (i.e., second feature values) corresponding to at least two channels in the dilated convolution result; and performing causal convolution on the second elements in each second group.

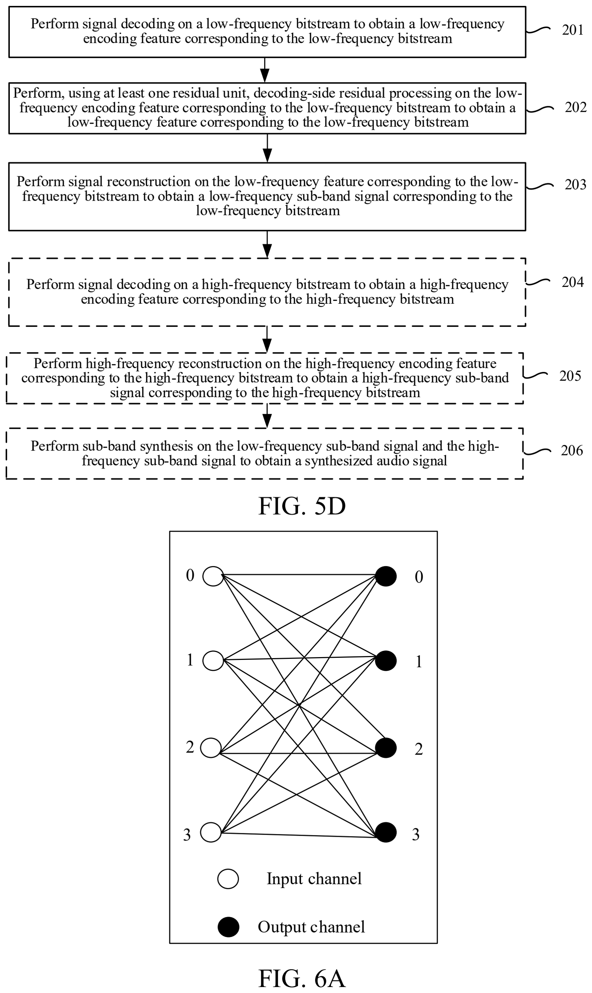

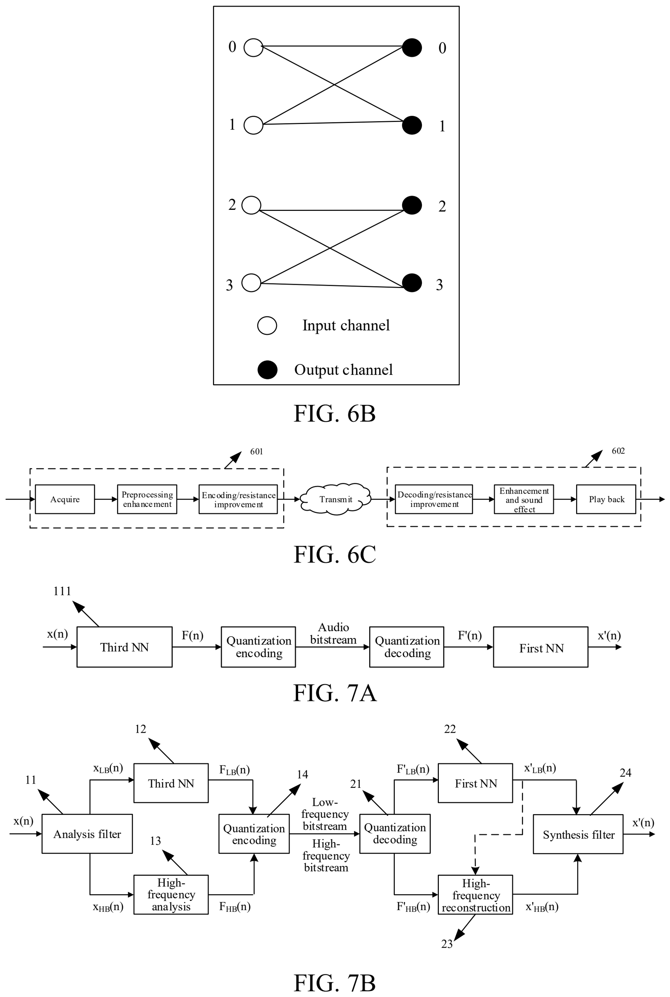

For example, group convolution may be applied to convolution operators (including the dilated convolution operator and the causal convolution operator) of the residual unit. The group convolution is to divide the input channels into a plurality of groups to perform a convolution operation, and only the input channels and the output channels in each group are associated. After the input channels are divided into a plurality of groups, the corresponding output channels are further divided into a plurality of groups, that is, the number of groups of the input channels is the same as the number of groups of the output channels, so that after convolution is performed in a group, only the input channels and the output channels in each group are associated. Herein, it is assumed that the feature inputting to a convolution operator has 4 input channels and 4 output channels. If the number of groups is 1, each input channel is associated with four output channels. If the number of groups is 2, the four input channels are first divided into two groups 0-1 and 2-3. In each of the two groups, the input channel is associated with the output channel in this group. For example, input channels 0-1 in a first group are associated with output channels 0-1, and input channels 2-3 in a second group are associated with output channels 2-3. As shown in FIG. 6A, when the group convolution solution is not used, each input channel is associated with four output channels. As shown in FIG. 6B, when the group convolution solution is not used, a zeroth output channel is only associated with zeroth to first input channels and is not associated with second to third input channels, and the second output channel is only associated with the second to third input channels and is not associated with the zeroth to first input channels. As can be seen from such a comparison, introducing group convolution may prevent any input channel from being associated with all output channels and reduce the number of connections, thereby reducing the complexity.

Following operation 121, in operation 122, feature encoding is performed on the residual feature to obtain the encoding feature of the audio signal.

In some embodiments, operation 122 may be implemented in the following manner: convolving the residual feature to obtain a convolution feature, the number of channels of the convolution feature being greater than the number of channels of the residual feature; and performing pooling on the convolution feature to obtain the encoding feature of the audio signal.

In some embodiments, a third NN configured for audio encoding includes a plurality of cascaded encoding blocks, and each encoding block includes at least one residual unit and a feature encoding block. Operation 12 is implemented through the plurality of cascaded encoding blocks and may be implemented in the following manner: performing, through at least one residual unit in the plurality of cascaded encoding blocks, residual processing on the audio feature to obtain the residual feature of the audio signal, the residual processing of the at least one residual unit in the plurality of cascaded encoding blocks being configured for calculating a residual of the audio feature and determining the calculated residual of the audio signal as the residual feature of the audio signal; and performing, through feature encoding blocks in the plurality of cascaded encoding blocks, feature encoding on the residual feature to obtain the encoding feature of the audio signal.

In some embodiments, the performing, through at least one residual unit in the plurality of cascaded encoding blocks, residual processing on the audio feature to obtain the residual feature of the audio signal may be implemented in the following manner: performing, through at least one residual unit in a first encoding block of the plurality of cascaded encoding blocks, residual processing on the audio feature, and outputting a residual result outputted by the at least one residual unit in the first encoding block to a feature encoding block in the first encoding block, the residual processing of the at least one residual unit in the first encoding block being configured for calculating the residual of the audio feature and determining the calculated residual of the audio feature as the residual result outputted by the at least one residual unit in the first encoding block; performing, through at least one residual unit in an $i^{th}$ encoding block of the plurality of cascaded encoding blocks, residual processing on an encoding result outputted by a feature encoding block in an $(i-1)^{th}$ encoding block, and outputting a residual result outputted by the at least one residual unit in the $i^{th}$ encoding block to a feature encoding block in the $i^{th}$ encoding block, the residual processing of the at least one residual unit in the $i^{th}$ encoding block being configured for calculating a residual of the encoding result outputted by the feature encoding block in the $(i-1)^{th}$ encoding block and determining the calculated residual of the encoding result outputted by the feature encoding block in the $(i-1)^{th}$ encoding block as the residual result outputted by the at least one residual unit in the $i^{th}$ encoding block; and using a residual result outputted by at least one residual unit in a last encoding block as the residual feature of the audio signal, where i is a sequentially increasing positive integer, $1 < i \leq I$, and I is the number of encoding blocks. The performing, through feature encoding blocks in the plurality of cascaded encoding blocks, feature encoding on the residual feature to obtain the encoding feature of the audio signal may be implemented in the following manner: performing, through a feature encoding block in the last encoding block of the plurality of cascaded encoding blocks, feature encoding on the residual feature to obtain the encoding feature of the audio signal. The encoding feature is obtained by performing the following processing through the last encoding block of the plurality of cascaded encoding blocks: convolving the residual feature to obtain a convolution feature, the number of channels of the convolution feature being greater than the number of channels of the residual feature; and performing pooling on the convolution feature to obtain the encoding feature of the audio signal.

Operation 13: Perform signal encoding on the encoding feature of the audio signal to obtain an audio bitstream of the audio signal.

Herein, in the field of digital signal processing, operation 13 may be implemented in the following manner: performing digital signal-based encoding on the encoding feature to obtain the audio bitstream of the audio signal.

In some embodiments, operation 13 may be implemented in the following manner: performing quantization on the encoding feature to obtain an index value of the encoding feature; and performing entropy encoding on the index value of the encoding feature to obtain the audio bitstream of the audio signal.

As shown in FIG. 7A, after audio encoding is performed through the audio encoding method shown in FIG. 16A or FIG. 16B, that is, an audio signal x(n) passes through a third NN 111 to obtain an encoding feature F(n), and signal encoding (i.e., quantization encoding) is performed on the encoding feature F(n) to obtain an audio bitstream, an obtained audio bitstream is transmitted to a decoder side, and the decoder side decodes a received audio bitstream to obtain a synthesized audio signal $x'(n)$. FIG. 17A is a schematic flowchart of an audio decoding method according to an embodiment of this application. An audio decoding function is implemented through the audio decoding method. Descriptions are provided below with reference to operation 21 to operation 23 shown in FIG. 17A.

Operation 21: Perform signal decoding on an audio bitstream to obtain an encoding feature of the audio bitstream.

The audio bitstream is obtained by performing audio encoding on an audio signal.

Signal decoding is an inverse process of signal encoding. Therefore, a value generated in the decoding process is an estimated value relative to a value generated in the encoding process. For example, an encoding feature generated in the decoding process is an estimated value relative to an encoding feature generated in the encoding process.

For example, performing signal decoding on the audio bitstream may be implemented in the following manner: performing entropy decoding on the audio bitstream to obtain an index value corresponding to the audio bitstream; and performing inverse quantization on the index value corresponding to the audio bitstream to obtain the encoding feature of the audio bitstream. The inverse quantization is implemented by querying a quantization table. The quantization table is a mapping table generated through quantization in the encoding process.

As an example, entropy decoding is first performed on a received audio bitstream, and the encoding feature of the audio bitstream is obtained by looking up the quantization table (i.e., inverse quantization, where the quantization table is a mapping table generated through quantization in the encoding process). A process in which the decoder side decodes the received audio bitstream is an inverse process of a process in which the encoder side performs encoding. Therefore, the value generated in the decoding process is an estimated value relative to the value (including frequency-domain coefficients, quantization step and side information) generated in the encoding process. For example, the encoding feature generated in the decoding process is an estimated value relative to the encoding feature generated in the encoding process. For example, in MP3 encoding, the frequency-domain coefficients are obtained by converting the time-domain audio into 576 frequency-domain coefficients through the Modified Discrete Cosine Transform (MDCT).

Operation 22: Perform, using at least one residual unit, decoding-side residual processing on the encoding feature of the audio bitstream to obtain an audio feature of the audio bitstream.

The audio feature of the audio bitstream is an estimated value relative to an audio feature on the encoder side.

Based on the characteristics of the residual unit, residual processing in operation 22 is configured for calculating a residual of the encoding feature at the decoding side. For example, the residual of the encoding feature is obtained by adding the encoding feature to an output of the residual unit at the decoding side. That is, the encoding feature is used as an input of the residual unit. After the encoding feature is processed by the residual unit at the decoding side, the output of the residual unit is obtained. In addition, the input of the residual unit at the decoding side and the output of the residual unit are added through the characteristics of skip connection of the residual unit to obtain the residual of the encoding feature.

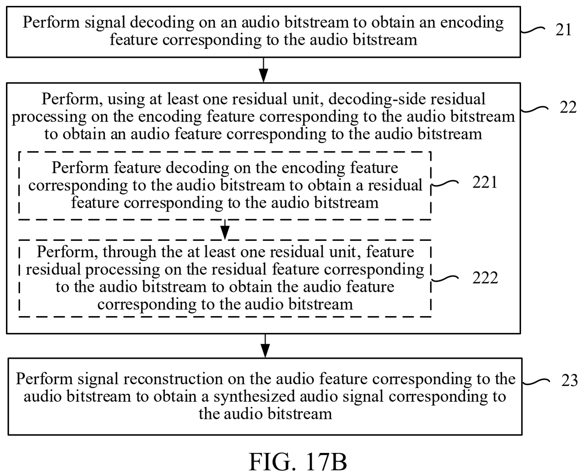

In some embodiments, FIG. 17B is another schematic flowchart of an audio decoding method according to an embodiment of this application. FIG. 17B shows that operation 22 in FIG. 17A may be implemented through operation 221 to operation 222.

Operation 221: Perform feature decoding on the encoding feature of the audio bitstream to obtain a residual feature corresponding to the audio bitstream.

For example, feature decoding is an inverse process of feature encoding. Feature decoding is performed on the encoding feature to obtain the residual feature (an estimated value) corresponding to the audio bitstream. That is, the residual feature corresponding to the audio bitstream is an estimated value relative to a residual feature at an encoding side. Since the encoding process and the decoding process are inverse processes of each other, the residual feature corresponding to the audio bitstream is not a residual result obtained by performing residual calculation at a decoding side. After the residual feature corresponding to the audio bitstream is obtained, residual calculation may be performed on the residual feature corresponding to the audio bitstream. In this embodiment of this application, a first NN may be invoked, and feature decoding is performed on the encoding feature of the audio bitstream through the first NN to obtain the residual feature corresponding to the audio bitstream.

In some embodiments, operation 221 may be implemented in the following manner: convolving the encoding feature of the audio bitstream to obtain a convolution feature, the number of channels of the convolution feature being less than the number of channels of the encoding feature of the audio bitstream; and upsampling the convolution feature to obtain the residual feature corresponding to the audio bitstream.

In the field of audio encoding and decoding, an upsampling operation is configured for increasing a resolution of a feature map (i.e., the convolution feature) to reconstruct an audio signal more accurately. Upsampling involves interpolation or other forms of upsampling technologies to generate a feature map with higher precision, which helps to better recover original details and characteristics of the audio signal in the decoding process. NN technologies such as convolution, pooling, and upsampling are used in audio decoding so that useful features may be effectively extracted, the calculation complexity may be reduced, and the original content of the audio signal may be reconstructed more accurately. These technologies are of great significance for improving the performance and efficiency of audio decoding, and promoting the development and application of the audio encoding and decoding technology.

Certainly, before operation 221, causal convolution may further be performed on the encoding feature of the audio bitstream to obtain an encoding feature obtained after the causal convolution, and operation 22 is performed based on the encoding feature obtained after the causal convolution, that is, feature decoding is performed on the encoding feature obtained after the causal convolution to obtain the residual feature corresponding to the audio bitstream.

Operation 222: Perform, through the at least one residual unit, feature residual processing on the residual feature corresponding to the audio bitstream to obtain the audio feature of the audio bitstream.

Herein, the feature residual processing in operation 222 is configured for calculating a residual of the residual feature corresponding to the audio bitstream at the decoding side and determining the residual of the residual feature as the audio feature of the audio bitstream. The residual feature corresponding to the audio bitstream is an estimated value relative to the residual feature at the encoding side. Since the encoding process and the decoding process are inverse processes of each other, the residual feature corresponding to the audio bitstream is not a residual result obtained by performing residual calculation at the decoding side. After the residual feature corresponding to the audio bitstream is obtained, the residual of the residual feature corresponding to the audio bitstream may be calculated through the residual unit at the decoding side to obtain the audio feature of the audio bitstream.

Herein, residual processing is performed on the residual feature corresponding to the audio bitstream to ensure that shallow feature information of the residual feature can be better utilized while comprehensively learning the residual feature, thereby avoiding omission of the shallow feature information.

In some embodiments, when the at least one residual unit includes a plurality of cascaded residual units, operation 222 may be implemented in the following manner: performing, through one residual unit, feature residual processing on the residual feature to obtain the audio feature of the audio bitstream, the feature residual processing of one residual unit being configured for calculating a residual corresponding to the residual feature at the decoding side.

In some embodiments, when the at least one residual unit includes a plurality of cascaded residual units, operation 222 may be implemented in the following manner: performing residual processing on the residual feature through a first residual unit of the plurality of cascaded residual units, the feature residual processing of the first residual unit being configured for calculating a residual of the residual feature and determining the residual of the residual feature as a residual result of the first residual unit; outputting the residual result outputted by the first residual unit to a subsequent cascaded residual unit, and continuing to perform feature residual processing through the subsequent cascaded residual unit and output a residual result, the feature residual processing of the subsequent cascaded residual unit being configured for calculating a residual of the residual result inputted to the subsequent cascaded residual unit; and using a residual result outputted by a last residual unit as the audio feature of the audio bitstream.

In some embodiments, a processing process of performing feature residual processing through the residual unit is as follows: performing the following processing through a $k^{th}$ residual unit of the plurality of cascaded residual units: convolving an input of the $k^{th}$ residual unit to obtain a convolution result of the $k^{th}$ residual unit; and adding the convolution result of the $k^{th}$ residual unit to an input of the $k^{th}$ residual unit to obtain a residual result outputted by the $k^{th}$ residual unit, where k is a sequentially increasing positive integer, $1 \le k \le J$, and J is the number of residual units; when k is 1, the input of the $k^{th}$ residual unit is a residual feature, and when k is not 1, the input of the $k^{th}$ residual unit is a residual feature, i.e., a residual result outputted by a $(k-1)^{th}$ residual unit. That is, performing feature residual processing on the residual feature may be implemented in the following manner: performing the following processing through the first residual unit of the plurality of cascaded residual units: convolving the residual feature to obtain a convolution result of the first residual unit; and adding the convolution result of the first residual unit to the residual feature to obtain the residual result outputted by the first residual unit. The continuing to perform feature residual processing through the subsequent cascaded residual unit and output a residual result may be implemented in the following manner: performing the following processing through a $j^{th}$ residual unit of the plurality of cascaded residual units: performing the following processing through the $j^{th}$ residual unit of the plurality of cascaded residual units: convolving a residual result outputted by a $(j-1)^{th}$ residual unit to obtain a convolution result of the $j^{th}$ residual unit; adding the convolution result of the $j^{th}$ residual units to the residual result outputted by the (j-1)$^{th}$ residual unit to obtain a residual result outputted by the j$^{th}$ residual unit; and outputting the residual result outputted by the j$^{th}$ residual unit to a (j+1)$^{th}$ residual unit, where j is a sequentially increasing positive integer, 1 < j < J, and J is the number of residual units.

Following the foregoing embodiment, each residual unit includes a dilated convolution operator. The following processing is performed through the k$^{th}$ residual unit of the plurality of cascaded residual units. The convolving an input of the k$^{th}$ residual unit to obtain a convolution result of the k$^{th}$ residual unit may be implemented in the following manner: performing the following processing through the k$^{th}$ residual unit of the plurality of cascaded residual units: performing dilated convolution on the input of the k$^{th}$ residual unit to obtain the convolution result of the k$^{th}$ residual unit. That is, dilated convolution is performed on the residual feature through a dilated convolution operator included in the first residual unit to obtain a dilated convolution result of the first residual unit. The following processing is performed through the j$^{th}$ residual unit of the plurality of cascaded residual units: performing, through a dilated convolution operator included in the j$^{th}$ residual unit, dilated convolution on the residual result outputted by the (j-1)$^{th}$ residual unit to obtain a dilated convolution result of the j$^{th}$ residual unit, where j is a sequentially increasing positive integer, 1 < j ≤ J, and J is the number of residual units.

Following the foregoing embodiment, each residual unit not only includes the dilated convolution operator, but also includes at least one causal convolution operator. After the input of the k$^{th}$ residual unit is convolved to obtain the convolution result of the k$^{th}$ residual unit, causal convolution is performed on an obtained dilated convolution result through at least one causal convolution operator included in the k$^{th}$ residual unit, and an obtained causal convolution result is used as the convolution result of the k$^{th}$ residual unit. That is, causal convolution is performed on the dilated convolution result of the first residual unit through at least one causal convolution operator included in the first residual unit, and an obtained causal convolution result is used as a convolution result outputted by the first residual unit. After dilated convolution is performed on the residual result outputted by the (j-1)$^{th}$ residual unit through the dilated convolution operator included in the j$^{th}$ residual unit to obtain the dilated convolution result of the j$^{th}$ residual unit, causal convolution is performed on the dilated convolution result of the j$^{th}$ residual unit through at least one causal convolution operator included in the j$^{th}$ residual unit, and a causal convolution result of the j$^{th}$ residual unit is used as the convolution result of the j$^{th}$ residual unit.

In some embodiments, when group convolution is applied to the dilated convolution operator included in the residual unit, performing dilated convolution on the audio feature may be implemented in the following manner: grouping input channels of the residual feature to obtain a plurality of first groups, each first group including first elements (i.e., first feature values) corresponding to at least two channels in the residual feature; and performing dilated convolution on the first elements in each first group. When group convolution is applied to the causal convolution operator included in the residual unit, performing causal convolution on the obtained dilated convolution result may be implemented in the following manner: grouping input channels of the dilated convolution result to obtain a plurality of second groups, each second group including second elements (i.e., second feature values) corresponding to at least two channels in the dilated convolution result; and performing causal convolution on the second elements in each second group.

In some embodiments, a first NN configured for audio decoding includes a plurality of cascaded decoding blocks, and each decoding block includes a feature decoding block and at least one residual unit. Operation 22 may be implemented in the following manner: performing, through feature decoding blocks in the plurality of cascaded decoding blocks, cascaded feature decoding on the encoding feature of the audio bitstream to obtain the residual feature corresponding to the audio bitstream. Correspondingly, residual processing is performed on the residual feature corresponding to the audio bitstream through at least one residual unit in the plurality of cascaded decoding blocks to obtain the audio feature of the audio bitstream. The residual processing of the at least one residual unit in the plurality of cascaded decoding blocks is configured for calculating a residual of the residual feature and determining the calculated residual of the residual feature as the audio feature of the audio bitstream.

In some embodiments, the performing, through feature decoding blocks in the plurality of cascaded decoding blocks, cascaded feature decoding on the encoding feature of the audio bitstream to obtain the residual feature corresponding to the audio bitstream may be implemented in the following manner: performing, through a feature decoding block in a first decoding block of the plurality of cascaded decoding blocks, single feature decoding on the encoding feature of the audio bitstream, and outputting a decoding result outputted by the feature decoding block in the first decoding block to at least one residual unit in the first decoding block; performing, through a feature decoding block in an i$^{th}$ decoding block of the plurality of cascaded decoding blocks, single feature decoding on a residual result outputted by at least one residual unit in an (i-1)$^{th}$ decoding block, and outputting a decoding result outputted by the feature decoding block in the i$^{th}$ decoding block to at least one residual unit in the i$^{th}$ decoding block; and using a decoding result outputted by a feature decoding block in a last decoding block as the residual feature corresponding to the audio bitstream, where i is a sequentially increasing positive integer, 1 < i ≤ I, and I is the number of decoding blocks. The decoding result outputted by the feature decoding block in the first decoding block is obtained by performing the following processing through the feature decoding block in the first decoding block of the plurality of cascaded decoding blocks: convolving the encoding feature of the audio bitstream to obtain a convolution feature, the number of channels of the convolution feature being less than the number of channels of the encoding feature; and upsampling the convolution feature to obtain the decoding result outputted by the feature decoding block in the first decoding block. The decoding result outputted by the feature decoding block in the i$^{th}$ decoding block is obtained by performing the following processing through the feature decoding block in the i$^{th}$ decoding block: convolving the residual result outputted by the at least one residual unit in the (i-1)$^{th}$ decoding block to obtain a convolution feature, the number of channels of the convolution feature being less than the number of channels of the residual result outputted by the at least one residual unit; and upsampling the convolution feature to obtain the decoding result outputted by the feature decoding block in the i$^{th}$ decoding block.

In some embodiments, performing, through at least one residual unit in the plurality of cascaded decoding blocks, residual processing on the residual feature corresponding to the audio bitstream to obtain the audio feature of the audio bitstream may be implemented in the following manner: performing, through at least one residual unit in the last decoding block of the plurality of cascaded decoding blocks, residual processing on the residual feature corresponding to the audio bitstream to obtain the audio feature of the audio bitstream, the residual processing of the at least one residual unit in the last decoding block is configured for calculating a residual of the residual feature and determining the calculated residual of the residual feature as the audio feature of the audio bitstream.

Following operation 22, in operation 23, signal reconstruction is performed on the audio feature of the audio bitstream to obtain a synthesized audio signal corresponding to the audio bitstream.

Herein, signal reconstruction is an inverse process of feature extraction. A dimension of the audio feature is increased through signal reconstruction, thereby achieving a data decompression function.

In some embodiments, operation 23 may be implemented in the following manner: upsampling the audio feature of the audio bitstream to obtain an upsampling feature; and performing causal convolution on the upsampling feature to obtain the synthesized audio signal corresponding to the audio bitstream.

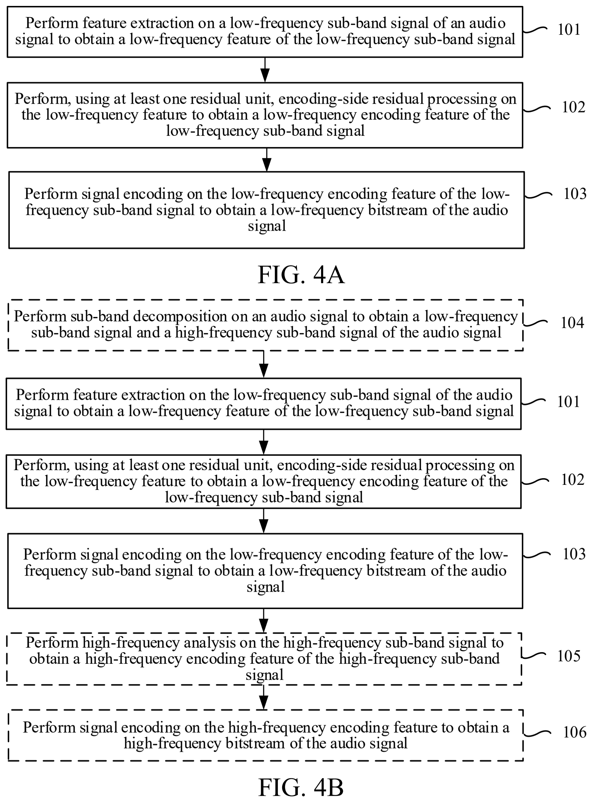

As described above, the audio encoding method provided in the embodiments of this application may be implemented by various types of electronic devices. FIG. 4A is a first schematic flowchart of an audio encoding method according to an embodiment of this application. An audio encoding function is implemented through the audio encoding method. Descriptions are provided below with reference to operation 101 to operation 103 shown in FIG. 4A.

FIG. 4B is a schematic flowchart of an audio encoding method according to an embodiment of this application. As shown in FIG. 4B, before operation 101 in FIG. 4A, the method further includes operation 104. Operation 104: Perform sub-band decomposition on an audio signal to obtain a low-frequency sub-band signal and a high-frequency sub-band signal of the audio signal. Then, operation 101 is performed through the low-frequency sub-band signal obtained in operation 104.

In this embodiment of this application, bands of the low-frequency sub-band signal and the high-frequency sub-band signal are not limited. That is, the low-frequency sub-band signal and the high-frequency sub-band signal obtained through decomposition may be two sub-band signals obtained by evenly splitting a band of the audio signal, or may be two sub-band signals obtained by unevenly splitting the band of the audio signal. For example, if an effective bandwidth of an audio signal x(n) is 0-16 kHz, effective bandwidths of a low-frequency sub-band signal $x_{LB}(n)$ and a high-frequency sub-band signal $x_{HB}(n)$ are 0-8 kHz and 8-16 kHz, respectively, or the effective bandwidths of the low-frequency sub-band signal $x_{LB}(n)$ and the high-frequency sub-band signal $x_{HB}(n)$ may be 0-6 kHz and 6-16 kHz, respectively. In addition, the number of bands to be split is not limited in this embodiment of this application. That is, two sub-band signals may be obtained through even/uneven splitting, or more than two sub-band signals may be obtained by evenly/unevenly splitting the band of the audio signal, for example, three, four, or more sub-band signals.

The audio signal includes a low-frequency part and a high-frequency part. A low-frequency signal (i.e., the low-frequency sub-band signal) is the low-frequency part of the audio signal separated from an audio signal with a specific sampling rate through a filter based on the characteristics of the audio signal. The high-frequency signal (i.e., the high-frequency sub-band signal) is the high-frequency part of the audio signal separated from the audio signal with a specific sampling rate. For example, if the effective bandwidth of the audio signal x(n) is 0-16 kHz, the effective bandwidth of the low-frequency signal is 0-8 kHz, and the effective bandwidth of the high-frequency signal $x_{HB}(n)$ may be 6-16 kHz. In addition, band division of the audio signal is not limited in this embodiment of this application. For example, the audio signal may be evenly or non-evenly divided to obtain a uniform low-frequency signal and a uniform high-frequency signal.

As an example of acquiring the audio signal, an encoder side, in response to an audio acquisition instruction triggered by a sender (for example, an initiator of a web conference, a host, or an initiator of a voice call), invokes a microphone provided in a terminal device of the encoder side to acquire an audio signal to obtain the audio signal (alternatively referred to as an input signal).

After the audio signal is acquired, the audio signal is decomposed into the low-frequency sub-band signal $x_{LB}(n)$ and the high-frequency sub-band signal $x_{HB}(n)$ through a QMF analysis filter. Since the low-frequency sub-band signal has a greater impact on audio encoding than the high-frequency sub-band signal, differential signal processing may be subsequently performed on the low-frequency sub-band signal and the high-frequency sub-band signal.

In some embodiments, operation 104 may be implemented in the following manner: sampling the audio signal to obtain a sampled signal, the sampled signal including a plurality of sample points obtained through sampling; performing low-pass filtering on the sampled signal to obtain a low-pass filtered signal; downsampling the low-pass filtered signal to obtain the low-frequency sub-band signal of the audio signal; performing high-pass filtering on the sampled signal to obtain a high-pass filtered signal; and downsampling the high-pass filtered signal to obtain the high-frequency sub-band signal of the audio signal.

The audio signal is a continuous analog signal, the sampled signal is a discrete digital signal, and a sampling point is a sampling value obtained by sampling the audio signal.

In the field of digital signal processing, downsampling is configured for reducing the sampling rate of the audio signal to reduce a data volume, reduce the system complexity, or adapt to specific application requirements. A downsampling factor of the downsampling may be a multiple of 2, for example, 2, 4, or 8.

As an example, an example in which the audio signal is an input signal with a sampling rate Fs=32,000 Hz is used. The audio signal is sampled to obtain a sampled signal $x(n)$ including 640 sample points. An analysis filter (2 channels) in the QMF bank is invoked to perform low-pass filtering on the sampled signal to obtain a low-pass filtered signal, perform high-pass filtering on the sampled signal to obtain a high-pass filtered signal, downsample the low-pass filtered signal to obtain the low-frequency sub-band signal $x_{LB}(n)$ of the audio signal, and downsample the high-pass filtered signal to obtain the high-frequency sub-band signal $x_{HB}(n)$ of the audio signal. The effective bandwidths of the low-frequency sub-band signal $x_{LB}(n)$ and the high-frequency sub-band signal $x_{HS}(n)$ are 0-8 kHz and 8-16 kHz, respectively, and the number of sample points of the low-frequency sub-band signal $x_{LB}(n)$ and the high-frequency sub-band signal $x_{HB}(n)$ is 320.

The QMF bank is an analysis-synthesis filter pair. For the QMF analysis filter, an input signal with a sampling rate Fs may be decomposed into two signals with a sampling rate Fs/2, representing a QMF low-pass signal and a QMF high-pass signal, respectively. The low-pass signal and the high-pass signal recovered by the decoder side are synthesized through the QMF synthesis filter so that a reconstructed signal with a sampling rate Fs corresponding to the input signal may be recovered.

In this embodiment of this application, in the field of digital signal processing, the audio signal is first filtered through a filter (such as a low-frequency filter or a high-pass filter) to remove a high-frequency component and aliasing interference from the audio signal to ensure that the downsampled audio signal does not lose necessary information. Then, in the filtered audio signal, a sampling point is reserved at regular intervals through downsampling, thereby reducing the sampling rate of the audio signal.

Operation 101: Perform feature extraction on the low-frequency sub-band signal of the audio signal to obtain a low-frequency feature of the low-frequency sub-band signal.

Operation 101 is similar to operation 11. Only a processing object of feature extraction in operation 11 is the audio signal, and a processing object of feature extraction in operation 101 is the low-frequency sub-band signal.

Herein, in this embodiment of this application, a third NN may be invoked based on the low-frequency sub-band signal, and the low-frequency feature is extracted from the low-frequency sub-band signal through the third NN to continue to perform feature extraction based on an important low-frequency feature subsequently. This embodiment of this application is not limited to the structure of the third NN. The third NN may be a CNN, a deep NN, or the like.

In some embodiments, operation 101 may be implemented in the following manner: performing causal convolution on the low-frequency sub-band signal of the audio signal to obtain a causal convolution feature; and performing pooling on the causal convolution feature to obtain the low-frequency feature of the low-frequency sub-band signal.

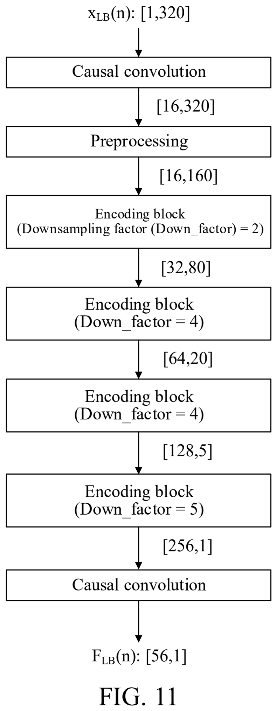

For example, referring to a network structure diagram of the third NN shown in FIG. 11, the third NN includes a causal convolution layer and a preprocessing layer. First, a 16-channel causal convolution layer is invoked, and an input tensor (i.e., the low-frequency sub-band signal) may be extended into a $16 \times 320$ causal convolution feature. Then, the $16 \times 320$ causal convolution feature is preprocessed through the preprocessing layer. For example, after a convolution operation is performed on the $16 \times 320$ causal convolution feature, pooling with a factor of 2 is performed, and an activation function may be a parametric rectified linear unit (PReLU) to generate a $16 \times 160$ tensor (i.e., the low-frequency feature).

Operation 102: Perform, using at least one residual unit, encoding-side residual processing on the low-frequency feature to obtain a low-frequency encoding feature of the low-frequency sub-band signal.

Operation 102 is similar to operation 12. Only a processing object of residual processing in operation 12 is the audio feature, and a processing object of residual processing in operation 102 is the low-frequency feature.

Herein, residual processing is performed on the low-frequency feature of the low-frequency sub-band signal. Based on the characteristics of the residual processing, it is ensured that shallow feature information of the low-frequency feature can be better utilized while comprehensively learning the low-frequency feature, thereby avoiding omission of the shallow feature information of the low-frequency feature.

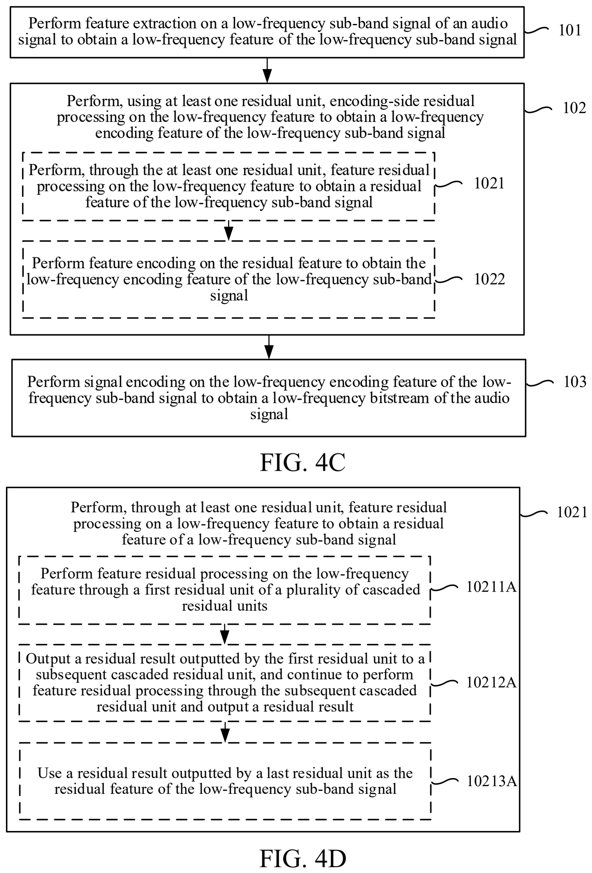

In some embodiments, FIG. 4C is a schematic flowchart of an audio encoding method according to an embodiment of this application. FIG. 4C shows that operation 102 in FIG. 4A may be implemented through operation 1021 to operation 1022.

Operation 1021: Perform, through the at least one residual unit, feature residual processing on the low-frequency feature to obtain a residual feature of the low-frequency sub-band signal.

In some embodiments, when the at least one residual unit includes one residual unit, operation 1021 may be implemented in the following manner: performing, through the at least one residual unit, feature residual processing on the low-frequency feature to obtain the residual feature of the low-frequency sub-band signal.

In some embodiments, when the at least one residual unit includes a plurality of cascaded residual units, FIG. 4D is a schematic flowchart of an audio encoding method according to an embodiment of this application. FIG. 4D shows that operation 1021 in FIG. 4C may be implemented through operation 10211A to operation 10213A. Operation 10211A: Perform feature residual processing on the low-frequency feature through a first residual unit of the plurality of cascaded residual units. Operation 10212A: Output a residual result outputted by the first residual unit to a subsequent cascaded residual unit, and continue to perform feature residual processing through the subsequent cascaded residual unit and output a residual result. Operation 10213A: Use a residual result outputted by a last residual unit as the residual feature of the low-frequency sub-band signal.

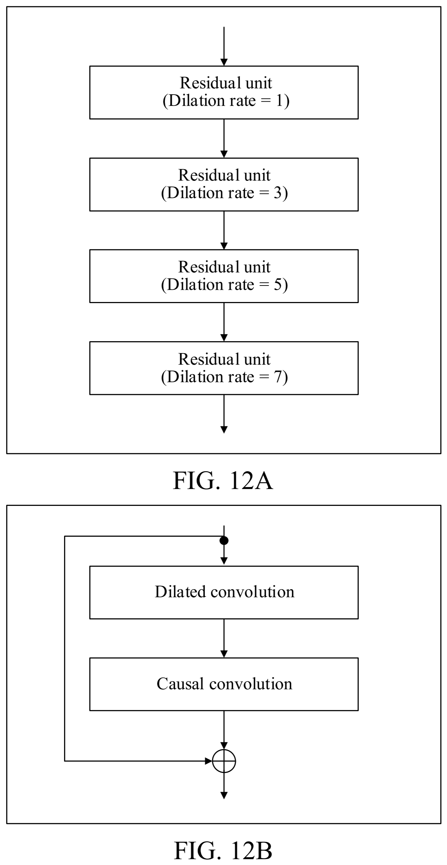

As shown in FIG. 12A, when the at least one residual unit configured for feature residual processing includes four cascaded residual units, a first residual unit performs feature residual processing on the low-frequency feature and outputs a residual result outputted by the first residual unit to a second residual unit. The second residual unit performs feature residual processing on the residual result outputted by the first residual unit and outputs a residual result outputted by the second residual unit to a third residual unit. The third residual unit performs feature residual processing on the residual result outputted by the second residual unit and outputs a residual result outputted by the third residual unit to a fourth residual unit. The fourth residual unit performs feature residual processing on the residual result outputted by the third residual unit to obtain a residual intermediate result.

In some embodiments, a processing process of the residual unit is as follows: performing the following processing through a $k^{th}$ residual unit of the plurality of cascaded residual units: convolving an input of the $k^{th}$ residual unit to obtain a convolution result of the $k^{th}$ residual unit; and adding the convolution result of the $k^{th}$ residual unit to an input of the $k^{th}$ residual unit to obtain a residual result outputted by the $k^{th}$ residual unit, where k is a sequentially increasing positive integer, $1 \leq k \leq J$, and J is the number of residual units; when k is 1, the input of the $k^{th}$ residual unit is a low-frequency feature, and when k is not 1, the input of the $k^{th}$ residual unit is a residual feature, i.e., a residual result outputted by a $(k-1)^{th}$ residual unit. That is, operation 10211A may be implemented in the following manner: performing the following processing through the first residual unit of the plurality of cascaded residual units: convolving the low-frequency feature to obtain a convolution result of the first residual unit; and adding the convolution result of the first residual unit to the low-frequency feature to obtain the residual result outputted by the first residual unit. Operation 10212A may be implemented in the following manner: performing the following processing through a $j^{th}$ residual unit of the plurality of cascaded residual units: convolving a residual result outputted by a $(j-1)^{th}$ residual unit to obtain a convolution result of the $j^{th}$ residual unit; adding the convolution result of the $j^{th}$ residual units to the residual result outputted by the $(j-1)^{th}$ residual unit to obtain a residual result outputted by the $j^{th}$ residual unit; and outputting the residual result outputted by the $j^{th}$ residual unit to a $(j+1)^{th}$ residual unit, where j is a sequentially increasing positive integer, $1 < j < J$, and J is the number of residual units.

Following the foregoing embodiment, each residual unit includes a dilated convolution operator. The following processing is performed through the $k^{th}$ residual unit of the plurality of cascaded residual units. The convolving an input of the $k^{th}$ residual unit to obtain a convolution result of the $k^{th}$ residual unit may be implemented in the following manner: performing the following processing through the $k^{th}$ residual unit of the plurality of cascaded residual units: performing dilated convolution on the input of the $k^{th}$ residual unit to obtain the convolution result of the $k^{th}$ residual unit. That is, dilated convolution is performed on the low-frequency feature through a dilated convolution operator included in the first residual unit to obtain a dilated convolution result of the first residual unit. The following processing is performed through the $j^{th}$ residual unit of the plurality of cascaded residual units: performing, through a dilated convolution operator included in the $j^{th}$ residual unit, dilated convolution on the residual result outputted by the $(j-1)^{th}$ residual unit to obtain a dilated convolution result of the $j^{th}$ residual unit, where j is a sequentially increasing positive integer, $1 < j \leq J$, and J is the number of residual units. Each residual unit contains a dilated convolution operator of a specified dilation rate. A dilated convolution operator of progressive dilation rates is used, which is equivalent to extracting features of an input at different resolutions using different receptive fields, so that data may be better analyzed comprehensively. After each residual unit is convolved through a dilated convolution operator of a dilation rate, the residual unit is added to a shallow feature (i.e., an input of each residual unit) obtained through skip connection, thereby directly using shallow feature information. Thus, the network may fully use the shallow feature information in a learning process.

Following the foregoing embodiment, each residual unit not only includes the dilated convolution operator, but also includes at least one causal convolution operator. After the input of the $k^{th}$ residual unit is convolved to obtain the convolution result of the $k^{th}$ residual unit, causal convolution is performed on an obtained dilated convolution result through at least one causal convolution operator included in the $k^{th}$ residual unit, and an obtained causal convolution result is used as the convolution result of the $k^{th}$ residual unit. That is, causal convolution is performed on the dilated convolution result of the first residual unit through at least one causal convolution operator included in the first residual unit, and an obtained causal convolution result is used as a convolution result outputted by the first residual unit. After dilated convolution is performed on the residual result outputted by the $(j-1)^{th}$ residual unit through the dilated convolution operator included in the $j^{th}$ residual unit to obtain the dilated convolution result of the $j^{th}$ residual unit, causal convolution is performed on the dilated convolution result of the $j^{th}$ residual unit through at least one causal convolution operator included in the $j^{th}$ residual unit, and a causal convolution result of the $j^{th}$ residual unit is used as the convolution result of the $j^{th}$ residual unit. Each residual unit further includes at least one causal convolution operator, and local information of features inputted to the causal convolution operator continues to be extracted through the causal convolution operator.

In the NN model, causal convolution is a special type when time sequence data (the audio signal is a type of time sequence data) is processed, which may ensure that an output of the NN depends on only a current time step and a previous time step, thereby maintaining a causal relationship over time. In actual application, for the causal convolution, a size of a convolution kernel may be adjusted to ensure that the convolution kernel does not span a region before the current time step. In this way, a long-term dependency relationship in a time sequence may be effectively captured, and the problem of gradient vanishing or exploding caused by confusion of future information may be avoided. The causal convolution is especially important in fields such as natural language processing, voice recognition, and time sequence prediction. The causal convolution follows the time sequence of data so that confusion of past information is avoided, and long-time sequence data can be effectively processed and predicted. In tasks such as voice recognition and time sequence prediction, the causal convolution exhibits good performance due to its characteristics of keeping a time sequence.

In some embodiments, when group convolution is applied to the dilated convolution operator included in the residual unit, performing dilated convolution on the low-frequency feature may be implemented in the following manner: grouping input channels of the low-frequency feature to obtain a plurality of first groups, each first group including first elements corresponding to at least two channels in the low-frequency feature; and performing dilated convolution on the first elements in each first group. When group convolution is applied to the causal convolution operator included in the residual unit, performing causal convolution on the obtained dilated convolution result may be implemented in the following manner: grouping input channels of the dilated convolution result to obtain a plurality of second groups, each second group including second elements corresponding to at least two channels in the dilated convolution result; and performing causal convolution on the second elements in each second group.

Following operation 1021, in operation 1022, feature encoding is performed on the residual feature to obtain a low-frequency encoding feature of the low-frequency sub-band signal.

Herein, feature encoding is performed on the residual feature to obtain the low-frequency encoding feature of the low-frequency sub-band signal to subsequently perform signal encoding based on the low-frequency encoding feature to obtain a low-frequency bitstream of the audio signal.

In some embodiments, operation 1022 may be implemented in the following manner: convolving the residual feature to obtain a convolution feature, the number of channels of the convolution feature being greater than the number of channels of the residual feature; and performing pooling on the convolution feature to obtain the low-frequency encoding feature of the low-frequency sub-band signal.

For example, the third NN is invoked based on the low-frequency sub-band signal, and after processing by the residual unit in the third NN, the residual feature is obtained. Then, the residual feature is convolved through a convolution layer in the third NN to increase the number of channels of the residual feature. Finally, pooling is performed on the convolution feature through a pooling layer in the third NN to obtain the low-frequency encoding feature of the low-frequency sub-band signal. Certainly, the third NN may further include a causal convolution layer. The causal convolution layer performs causal convolution on the low-frequency encoding feature to obtain a low-frequency encoding feature obtained after the causal convolution, and performs signal encoding on the low-frequency encoding feature of the low-frequency sub-band signal obtained after the causal convolution, to obtain the low-frequency bitstream of the audio signal.

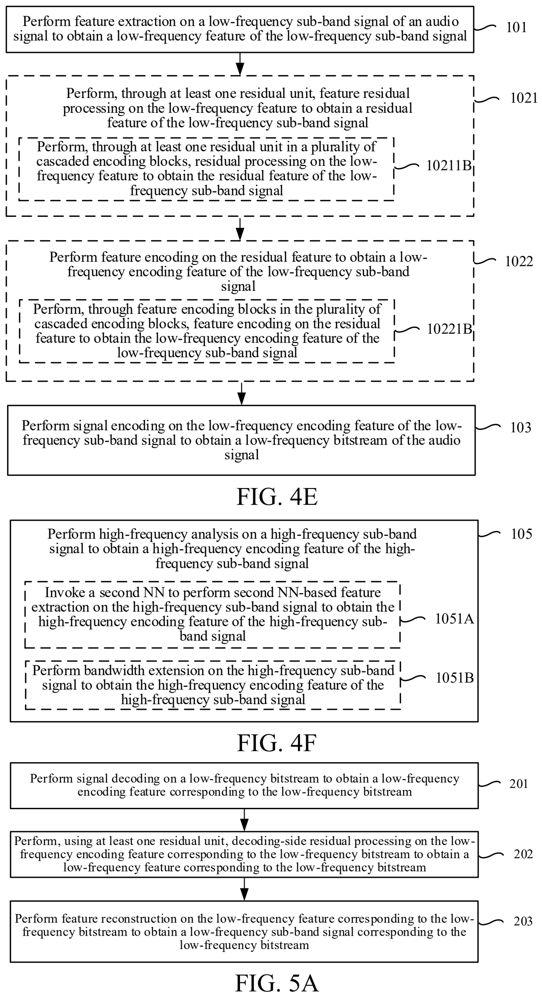

In some embodiments, a third NN configured for audio encoding includes a plurality of cascaded encoding blocks, and each encoding block includes at least one residual unit and a feature encoding block. Operation 1021 and operation 1022 are implemented through the plurality of cascaded encoding blocks. FIG. 4E is a schematic flowchart of an audio encoding method according to an embodiment of this application. FIG. 4E shows that operation 1021 in FIG. 4C may be implemented through operation 10211B, and operation 1022 may be implemented through operation 10221B. Operation 10211B: Perform, through at least one residual unit in the plurality of cascaded encoding blocks, residual processing on the low-frequency feature to obtain the residual feature of the low-frequency sub-band signal. Operation 10221B: Perform, through feature encoding blocks in the plurality of cascaded encoding blocks, feature encoding on the residual feature to obtain the low-frequency encoding feature of the low-frequency sub-band signal.

In some embodiments, operation 10211B may be implemented in the following manner: performing, through at least one residual unit in a first encoding block of the plurality of cascaded encoding blocks, residual processing on the low-frequency feature, and outputting a residual result outputted by the at least one residual unit in the first encoding block to a feature encoding block in the first encoding block; performing, through at least one residual unit in an $i^{th}$ encoding block of the plurality of cascaded encoding blocks, residual processing on an encoding result outputted by a feature encoding block in an $(i-1)^{th}$ encoding block, and outputting a residual result outputted by the at least one residual unit in the $i^{th}$ encoding block to a feature encoding block in the $i^{th}$ encoding block; and using a residual result outputted by at least one residual unit in a last encoding block as the residual feature of the low-frequency sub-band signal, where i is a sequentially increasing positive integer, $1 < i \leq I$, and I is the number of encoding blocks. Operation 10221B may be implemented in the following manner: performing, through a feature encoding block in the last encoding block of the plurality of cascaded encoding blocks, feature encoding on the residual feature to obtain the low-frequency encoding feature of the low-frequency sub-band signal. The low-frequency encoding feature is obtained by performing the following processing through the last encoding block of the plurality of cascaded encoding blocks: convolving the residual feature to obtain a convolution feature, the number of channels of the convolution feature being greater than the number of channels of the residual feature; and performing pooling on the convolution feature to obtain the low-frequency encoding feature of the low-frequency sub-band signal.

For example, as shown in FIG. 11, after the third NN is invoked based on the low-frequency sub-band signal, a low-frequency feature (a $16 \times 160$ tensor obtained after preprocessing in FIG. 11) is obtained through the third NN, and the third NN includes four cascaded encoding blocks having different downsampling factors (Down_factor). Each encoding block contains a residual block (including at least one residual unit), a convolution layer, and a pooling layer. Each residual block includes four dilated convolution-based residual units (feature dimensions of the input and output of the residual unit do not change). The convolution layer is configured to double the number of input channels, and an activation function may be a PReLU, thereby ensuring the data volume and avoiding data loss. The pooling layer is a pooling operation containing Down_factor to complete downsampling and implement data compression. Herein, Down_factor of the four encoding blocks is set to 2, 4, 4, and 5. Therefore, the number of output channels of the four encoding blocks is set to 32, 64, 128, and 256. After being processed by the four encoding blocks, an input $16 \times 160$ tensor is converted into $32 \times 80$, $64 \times 20$, $128 \times 5$, and $256 \times 1$ tensors. For example, residual processing is performed on the low-frequency feature (i.e., the $16 \times 160$ tensor) through a residual block in the first encoding block, and a residual result outputted by the residual block in the first encoding block is outputted to a feature encoding block in the first encoding block. After the residual result is processed through the feature encoding block (including a convolution layer and a pooling layer) in the first encoding block, an encoding result (i.e., the $32 \times 80$ tensor) of the feature encoding block in the first encoding block is obtained and outputted to a second encoding block. Residual processing is performed on the encoding result (i.e., the $32 \times 80$ tensor) of the feature encoding block in the first encoding block through a residual block in the second encoding block, and a residual result outputted by the residual block in the second encoding block is outputted to a feature encoding block in the second encoding block. After the residual result is processed through the feature encoding block (including a convolution layer and a pooling layer) in the second encoding block, an encoding result (i.e., the $64 \times 20$ tensor) of the feature encoding block in the second encoding block is obtained and outputted to a third encoding block. The foregoing processing is sequentially performed, and an output of the last encoding block is used as the low-frequency encoding feature.

Following operation 102, in operation 103, signal encoding is performed on the low-frequency encoding feature of the low-frequency sub-band signal to obtain the low-frequency bitstream of the audio signal.

Operation 103 is similar to operation 13. Only a processing object of signal encoding in operation 13 is the encoding feature, and a processing object of signal encoding in operation 103 is the low-frequency encoding feature.

Herein, in the field of digital signal processing, operation 103 may be implemented in the following manner: performing digital signal-based encoding on the low-frequency encoding feature to obtain the low-frequency bitstream of the audio signal.

In some embodiments, operation 103 may be implemented in the following manner: performing quantization on the low-frequency encoding feature to obtain an index value of the low-frequency encoding feature; and performing entropy encoding on the index value of the low-frequency encoding feature to obtain the low-frequency bitstream of the audio signal.

For example, scalar quantization (the components are quantized separately) and an entropy encoding method may be performed on a low-frequency encoding feature $F_{LB}(n)$ of the low-frequency sub-band signal. In addition, in this embodiment of this application, a technical combination of VQ (combining a plurality of adjacent components into a vector for joint quantization) and entropy encoding is not limited. A high-frequency bitstream and a low-frequency bitstream obtained through encoding are transmitted to a decoder side, and the decoder side decodes the high-frequency bitstream and the low-frequency bitstream.

The following continues to describe FIG. 4B. FIG. 4B shows that after operation 104, operation 105 to operation 106 are further included.

Operation 105: Perform high-frequency analysis on the high-frequency sub-band signal to obtain a high-frequency encoding feature of the high-frequency sub-band signal.

Since the low-frequency sub-band signal has a greater impact on audio encoding than the high-frequency sub-band signal, differential signal processing is performed on the low-frequency sub-band signal and the high-frequency sub-band signal so that a feature dimension of a high-frequency feature is lower than a feature dimension of a low-frequency feature. For example, the feature dimension of the low-frequency feature is 56, and the feature dimension of the high-frequency feature is 8. The high-frequency analysis is configured for performing dimension reduction on the high-frequency sub-band signal to achieve a data compression function. The high-frequency encoding feature is a feature characterizing the high-frequency sub-band signal, and a feature dimension of the high-frequency encoding feature is less than a feature dimension of the high-frequency sub-band signal.

FIG. 4F is a schematic flowchart of an audio encoding method according to an embodiment of this application.

FIG. 4F shows that operation 105 in FIG. 4B may be implemented through operation 1051A. Operation 1051A: Invoke a fourth NN to perform fourth NN-based feature extraction on the high-frequency sub-band signal to obtain the high-frequency encoding feature of the high-frequency sub-band signal, where the number of channels of the fourth NN is less than the number of channels of the third NN, and the third NN is configured for extracting a low-frequency encoding feature from a low-frequency sub-band signal.

Operation 1051A is described below and may be implemented in the following manner: performing feature extraction on the high-frequency sub-band signal of the audio signal to obtain a high-frequency feature of the high-frequency sub-band signal; and performing, using at least one residual unit, encoding-side residual processing on the high-frequency feature to obtain the high-frequency encoding feature.

Herein, a structure of another fourth NN similar to the third NN is introduced to generate a low-dimensional feature vector (i.e., the high-frequency encoding feature of the high-frequency sub-band signal). Compared with the low-frequency sub-band signal, the high-frequency sub-band signal has relatively low importance for quality. Therefore, the structure of the fourth NN for the high-frequency sub-band signal does not need to be as complex as that of the third NN.

A processing procedure of residual processing in operation 1051A is similar to the processing process of operation 102. For example, the performing, using at least one residual unit, residual processing on the high-frequency feature to obtain the high-frequency encoding feature includes: performing, through the at least one residual unit, feature residual processing on the high-frequency feature to obtain a residual feature of the high-frequency sub-band signal; and performing feature encoding on the residual feature to obtain the high-frequency encoding feature of the high-frequency sub-band signal.

When the at least one residual unit includes one residual unit, feature residual processing is performed on the high-frequency feature through the one residual unit to obtain the residual feature of the high-frequency sub-band signal. When the at least one residual unit includes a plurality of cascaded residual units, feature residual processing is performed on the high-frequency feature through a first residual unit of the plurality of cascaded residual units. A residual result outputted by the first residual unit is outputted to a subsequent cascaded residual unit, feature residual processing is performed through the subsequent cascaded residual unit, and a residual result is outputted. A residual result outputted by a last residual unit is used as the residual feature of the high-frequency sub-band signal.

In some embodiments, a processing process of the residual unit is as follows: performing the following processing through a $k^{th}$ residual unit of the plurality of cascaded residual units: convolving an input of the $k^{th}$ residual unit to obtain a convolution result of the $k^{th}$ residual unit; and adding the convolution result of the $k^{th}$ residual unit to an input of the $k^{th}$ residual unit to obtain a residual result outputted by the $k^{th}$ residual unit, where k is a sequentially increasing positive integer, $1 \leq k \leq J$, and J is the number of residual units; when k is 1, the input of the $k^{th}$ residual unit is a residual feature, and when k is not 1, the input of the $k^{th}$ residual unit is a residual feature, i.e., a residual result outputted by a $(k-1)^{th}$ residual unit.

Following the foregoing embodiment, each residual unit includes a dilated convolution operator. The following processing is performed through the $k^{th}$ residual unit of the plurality of cascaded residual units. The convolving an input of the $k^{th}$ residual unit to obtain a convolution result of the $k^{th}$ residual unit may be implemented in the following manner: performing the following processing through the $k^{th}$ residual unit of the plurality of cascaded residual units: performing dilated convolution on the input of the $k^{th}$ residual unit to obtain the convolution result of the $k^{th}$ residual unit.

Following the foregoing embodiment, each residual unit not only includes the dilated convolution operator, but also includes at least one causal convolution operator. After the input of the $k^{th}$ residual unit is convolved to obtain the convolution result of the $k^{th}$ residual unit, causal convolution is performed on an obtained dilated convolution result through at least one causal convolution operator included in the $k^{th}$ residual unit, and an obtained causal convolution result is used as the convolution result of the $k^{th}$ residual unit.

In some embodiments, when group convolution is applied to the dilated convolution operator included in the residual unit, performing dilated convolution on the high-frequency feature may be implemented in the following manner: grouping input channels of the high-frequency feature to obtain a plurality of first groups, each first group including first elements corresponding to at least two channels in the high-frequency feature; and performing dilated convolution on the first elements in each first group. When group convolution is applied to the causal convolution operator included in the residual unit, performing causal convolution on the obtained dilated convolution result may be implemented in the following manner: grouping input channels of the dilated convolution result to obtain a plurality of second groups, each second group including second elements corresponding to at least two channels in the dilated convolution result; and performing causal convolution on the second elements in each second group.

In some embodiments, performing feature encoding on the residual feature to obtain the high-frequency encoding feature of the high-frequency sub-band signal may be implemented in the following manner: convolving the residual feature to obtain a convolution feature, the number of channels of the convolution feature being greater than the number of channels of the residual feature; and performing pooling on the convolution feature to obtain the high-frequency encoding feature of the high-frequency sub-band signal.

In some embodiments, a fourth NN configured for audio encoding includes a plurality of cascaded encoding blocks, and each encoding block includes at least one residual unit and a feature encoding block. Operation 1051A is implemented through the plurality of cascaded encoding blocks and may be implemented in the following manner: performing, through at least one residual unit in the plurality of cascaded encoding blocks, residual processing on the high-frequency feature to obtain the residual feature of the high-frequency sub-band signal; and performing, through feature encoding blocks in the plurality of cascaded encoding blocks, feature encoding on the residual feature to obtain the high-frequency encoding feature of the high-frequency sub-band signal.

In some embodiments, the performing, through at least one residual unit in the plurality of cascaded encoding blocks, residual processing on the high-frequency feature to obtain the residual feature of the high-frequency sub-band signal may be implemented in the following manner: performing, through at least one residual unit in a first encoding block of the plurality of cascaded encoding blocks, residual processing on the high-frequency feature, and outputting a residual result outputted by the at least one residual unit in the first encoding block to a feature encoding block in the first encoding block; performing, through at least one residual unit in an $i^{th}$ encoding block of the plurality of cascaded encoding blocks, residual processing on an encoding result outputted by a feature encoding block in an $(i-1)^{th}$ encoding block, and outputting a residual result outputted by the at least one residual unit in the $i^{th}$ encoding block to a feature encoding block in the $i^{th}$ encoding block; and using a residual result outputted by at least one residual unit in a last encoding block as the residual feature of the high-frequency sub-band signal, where i is a sequentially increasing positive integer, $1 < i \leq I$, and I is the number of encoding blocks. The performing, through feature encoding blocks in the plurality of cascaded encoding blocks, feature encoding on the residual feature to obtain the high-frequency encoding feature of the high-frequency sub-band signal may be implemented in the following manner: performing, through a feature encoding block in the last encoding block of the plurality of cascaded encoding blocks, feature encoding on the residual feature to obtain the high-frequency encoding feature of the high-frequency sub-band signal. The high-frequency encoding feature is obtained by performing the following processing through the last encoding block of the plurality of cascaded encoding blocks: convolving the residual feature to obtain a convolution feature, the number of channels of the convolution feature being greater than the number of channels of the residual feature; and performing pooling on the convolution feature to obtain the high-frequency encoding feature of the high-frequency sub-band signal.

FIG. 4F is a schematic flowchart of an audio encoding method according to an embodiment of this application. FIG. 4F shows that operation 105 in FIG. 4B may be implemented through operation 1051B. Operation 1051B: Perform bandwidth extension on the high-frequency sub-band signal to obtain the high-frequency encoding feature of the high-frequency sub-band signal, a feature dimension of the high-frequency encoding feature being lower than a feature dimension of the low-frequency encoding feature.

For example, compared with the low-frequency sub-band signal, the high-frequency sub-band signal has relatively low importance for quality. Therefore, the high-frequency sub-band signal may be compressed through another method, i.e., bandwidth extension (recovering a wideband voice signal from a band-limited narrowband speech signal), to rapidly compress the high-frequency sub-band signal and extract the high-frequency encoding feature of the high-frequency sub-band signal.

In some embodiments, operation 1051B may be implemented in the following manner: performing frequency domain transform based on a plurality of sample points included in the high-frequency sub-band signal to obtain transform coefficients corresponding to the plurality of sample points; dividing the transform coefficients corresponding to the plurality of sample points into a plurality of sub-bands; averaging transform coefficients included in each sub-band to obtain average energy corresponding to each sub-band, and using the average energy as a sub-band spectral envelope corresponding to each sub-band; and determining sub-band spectral envelopes corresponding to the plurality of sub-bands as the high-frequency encoding feature of the high-frequency sub-band signal.

A frequency domain transform method in this embodiment of this application includes modified discrete cosine transform (MDCT), discrete cosine transform (DCT), fast Fourier transform (FFT), and the like. A frequency domain transform mode is not limited to the embodiments of this application. The averaging in this embodiment of this application includes arithmetic averaging and geometric averaging. The averaging mode is not limited to the embodiments of this application.

In some embodiments, the performing frequency domain transform based on a plurality of sample points included in the high-frequency sub-band signal to obtain transform coefficients corresponding to the plurality of sample points includes: acquiring a reference high-frequency sub-band signal of a reference audio signal, the reference audio signal being an audio signal adjacent to the audio signal; and performing, based on a plurality of sample points included in the reference high-frequency sub-band signal and the plurality of sample points included in the high-frequency sub-band signal, DCT on the plurality of sample points included in the high-frequency sub-band signal to obtain the transform coefficients corresponding to the plurality of sample points included in the high-frequency sub-band signal.

In some embodiments, a process of performing geometric averaging on the transform coefficients included in each sub-band is as follows: determining a quadratic sum of transform coefficients corresponding to sample points included in each sub-band; and determining a ratio of the quadratic sum to the number of sample points included in the sub-band as the average energy corresponding to each sub-band.

As an example, for a high-frequency sub-band signal $x_{HB}(n)$ including 320 points, the MDCT is invoked to generate MDCT coefficients of 320 points (i.e., the transform coefficients corresponding to the plurality of sample points included in the high-frequency sub-band signal). Specifically, if the overlap is 50%, high-frequency data of an $(n+1)^{th}$ frame (i.e., the reference audio signal) and high-frequency data of an $n^{th}$ frame (i.e., the audio signal) may be combined (spliced), MDCT of 640 points is calculated, and MDCT coefficients of the first 320 points are obtained.

The MDCT coefficients of the 320 points are divided into N sub-bands (that is, the transform coefficients corresponding to the plurality of sample points are divided into a plurality of sub-bands). The sub-band herein is a group of a plurality of adjacent MDCT coefficients, and the MDCT coefficients of the 320 points may be divided into 8 sub-bands. For example, the 320 points may be uniformly allocated, that is, the sub-bands each include a same number of points. Certainly, in this embodiment of this application, the 320 points cannot be non-uniformly divided. For example, a low-frequency sub-band includes fewer MDCT coefficients (a higher frequency resolution), and a high-frequency sub-band includes more MDCT coefficients (a lower frequency resolution).

According to the Nyquist sampling theory (to recover an original signal from a sampled signal without distortion, a sampling frequency is to be greater than twice the highest frequency of the original signal; when the sampling frequency is less than twice the highest frequency of a spectrum, aliasing occurs in a spectrum of the signal; and when the sampling frequency is greater than twice the highest frequency of the spectrum, no aliasing occurs in the spectrum of the signal), the foregoing MDCT coefficients of 320 points represent a spectrum of 8-16 kHz. However, for ultra-wideband voice communication, the spectrum does not necessarily need to be set to 16 kHz. For example, if the spectrum is set to 14 kHz, only MDCT coefficients of the first 240 points need to be considered, and correspondingly, the number of sub-bands may be controlled to be 6.

For each sub-band, average energy of all MDCT coefficients in a current sub-band is calculated (that is, the transform coefficients included in each sub-band are averaged) as a sub-band spectral envelope (the spectral envelope is a smooth curve passing through main peak points of the spectrum). For example, if the MDCT coefficients included in the current sub-band are x(n), n=1, 2, ..., and 40, the average energy $Y=((x(1)^2+x(2)^2+...+x(40)^2)/40)$ is calculated through geometric averaging. In a case that the MDCT coefficients of 320 points are divided into 8 sub-bands, 8 sub-band spectral envelopes may be obtained. The 8 sub-band spectral envelopes are feature vectors $F_{HB}(n)$, i.e., the high-frequency encoding feature, of the generated high-frequency sub-band signal.

Following operation 105, in operation 106, signal encoding is performed on the high-frequency encoding feature to obtain a high-frequency bitstream of the audio signal.

Herein, in the field of digital signal processing, operation 106 may be implemented in the following manner: performing digital signal-based encoding on the high-frequency encoding feature to obtain the high-frequency bitstream of the audio signal.

In some embodiments, operation 106 may be implemented in the following manner: performing quantization on the high-frequency encoding feature to obtain an index value of the high-frequency encoding feature; and performing entropy encoding on the index value of the high-frequency encoding feature to obtain the high-frequency bitstream of the audio signal.

For example, scalar quantization (the components are quantized separately) and an entropy encoding method may be performed on a high-frequency encoding feature $F_{LB}(n)$ of the high-frequency sub-band signal. In addition, in this embodiment of this application, a technical combination of VQ (combining a plurality of adjacent components into a vector for joint quantization) and entropy encoding is not limited. A high-frequency bitstream and a low-frequency bitstream obtained through encoding are combined and transmitted to a decoder side, and the decoder side decodes the received high-frequency bitstream and low-frequency bitstream.

As described above, the audio decoding method provided in the embodiments of this application may be implemented by various types of electronic devices. FIG. 5A is a schematic flowchart of an audio decoding method according to an embodiment of this application. An audio decoding function is implemented through the audio decoding method. The audio decoding method and the foregoing audio encoding method are inverse processes of each other. Descriptions are provided with reference to operations shown in FIG. 5A.

Operation 201: Perform signal decoding on a low-frequency bitstream to obtain a low-frequency encoding feature corresponding to the low-frequency bitstream.

The low-frequency bitstream is obtained by performing the foregoing audio encoding on a low-frequency sub-band signal of the audio signal. Operation 201 is similar to operation 21, differing only in the processing target.

For example, after the low-frequency bitstream is obtained through encoding using the audio encoding method shown in FIG. 4A, the low-frequency bitstream obtained through encoding is transmitted to a decoder side. After receiving the low-frequency bitstream, the decoder side performs signal decoding on the low-frequency bitstream to obtain the low-frequency encoding feature corresponding to the low-frequency bitstream.

Signal decoding is an inverse process of signal encoding.

For example, performing signal decoding on the low-frequency bitstream may be implemented in the following manner: performing entropy decoding on the low-frequency bitstream to obtain an index value corresponding to the low-frequency bitstream; and performing inverse quantization on the index value corresponding to the low-frequency bitstream to obtain the low-frequency encoding feature corresponding to the low-frequency bitstream. The inverse quantization is implemented by querying a quantization table. The quantization table is a mapping table generated through quantization in the encoding process.

As an example, entropy decoding is first performed on a received bitstream (a high-frequency bitstream and a low-frequency bitstream), and an estimated value $F'_{LB}(n)$ of a low-frequency feature vector, i.e., the low-frequency encoding feature corresponding to the low-frequency bitstream, is obtained by looking up the quantization table (i.e., inverse quantization, where the quantization table is a mapping table generated through quantization in the encoding process). A process in which the decoder side decodes the received bitstream is an inverse process of a process in which the encoder side performs encoding. Therefore, the value generated in the decoding process is an estimated value relative to the value generated in the encoding process. For example, the low-frequency encoding feature generated in the decoding process is an estimated value relative to the low-frequency encoding feature generated in the encoding process.

Operation 202: Perform, using at least one residual unit, decoding-side residual processing on the low-frequency encoding feature corresponding to the low-frequency bitstream to obtain a low-frequency feature corresponding to the low-frequency bitstream.

Operation 202 is similar to operation 22. Only a processing object of residual processing in operation 22 is the encoding feature, and a processing object of residual processing in operation 202 is the low-frequency encoding feature.

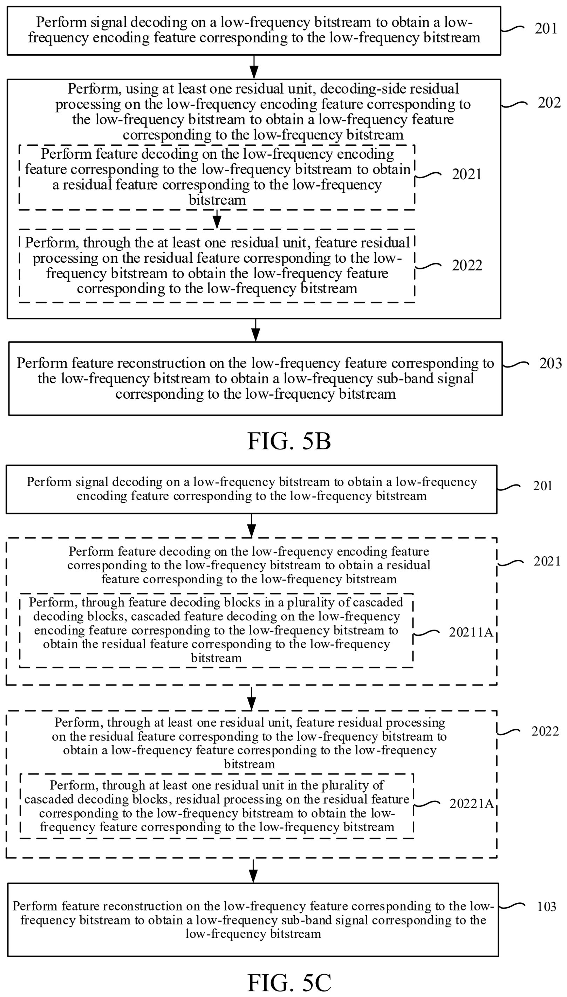

In some embodiments, FIG. 5B is a schematic flowchart of an audio decoding method according to an embodiment of this application. FIG. 5B shows that operation 202 in FIG. 5A may be implemented through operation 2021 to operation 2022.

Operation 2021: Perform feature decoding on the low-frequency encoding feature corresponding to the low-frequency bitstream to obtain a residual feature corresponding to the low-frequency bitstream.

For example, feature decoding is an inverse process of feature encoding, and feature decoding is performed on the low-frequency encoding feature to obtain the residual feature (an estimated value) corresponding to the low-frequency bitstream. In this embodiment of this application, a first NN may be invoked, and feature decoding is performed on the low-frequency encoding feature corresponding to the low-frequency bitstream through the first NN to obtain the residual feature corresponding to the low-frequency bitstream.

In some embodiments, operation 2021 may be implemented in the following manner: convolving the low-frequency encoding feature corresponding to the low-frequency bitstream to obtain a convolution feature, the number of channels of the convolution feature being less than the number of channels of the low-frequency encoding feature corresponding to the low-frequency bitstream; and upsampling the convolution feature to obtain the residual feature corresponding to the low-frequency bitstream.

In the field of audio encoding and decoding, an upsampling operation is configured for increasing a resolution of a feature map (i.e., the convolution feature) to reconstruct an audio signal more accurately. Upsampling involves interpolation or other forms of upsampling technologies to generate a feature map with higher precision, which helps to better recover original details and characteristics of the audio signal in the decoding process. NN technologies such as convolution, pooling, and upsampling are used in audio decoding so that useful features may be effectively extracted, the calculation complexity may be reduced, and the original content of the audio signal may be reconstructed more accurately. These technologies are of great significance for improving the performance and efficiency of audio decoding, and promoting the development and application of the audio encoding and decoding technology.

Certainly, before operation 2021, causal convolution may further be performed on the low-frequency encoding feature corresponding to the low-frequency bitstream to obtain a low-frequency encoding feature obtained after the causal convolution, and operation 202 is performed based on the low-frequency encoding feature obtained after the causal convolution, that is, feature decoding is performed on the low-frequency encoding feature obtained after the causal convolution to obtain the residual feature corresponding to the low-frequency bitstream.

Operation 2022: Perform, through the at least one residual unit, feature residual processing on the residual feature corresponding to the low-frequency bitstream to obtain the low-frequency feature corresponding to the low-frequency bitstream.

Herein, residual processing is performed on the residual feature corresponding to the low-frequency bitstream to ensure that shallow feature information of the residual feature can be better utilized while comprehensively learning the residual feature, thereby avoiding omission of the shallow feature information.

In some embodiments, when the at least one residual unit includes a plurality of cascaded residual units, operation 2022 may be implemented in the following manner: performing, through one residual unit, feature residual processing on the residual feature to obtain the low-frequency feature corresponding to the low-frequency bitstream.

In some embodiments, when the at least one residual unit includes a plurality of cascaded residual units, operation 2022 may be implemented in the following manner: performing feature residual processing on the residual feature through a first residual unit of the plurality of cascaded residual units; outputting a residual result outputted by the first residual unit to a subsequent cascaded residual unit, and continuing to perform feature residual processing through the subsequent cascaded residual unit and output a residual result; and using a residual result outputted by a last residual unit as the low-frequency feature corresponding to the low-frequency bitstream.

In some embodiments, a processing process of the residual unit is as follows: performing the following processing through a $k^{th}$ residual unit of the plurality of cascaded residual units: convolving an input of the $k^{th}$ residual unit to obtain a convolution result of the $k^{th}$ residual unit; and adding the convolution result of the $k^{th}$ residual unit to an input of the $k^{th}$ residual unit to obtain a residual result outputted by the $k^{th}$ residual unit, where k is a sequentially increasing positive integer, $1 \leq k \leq J$, and J is the number of residual units; when k is 1, the input of the $k^{th}$ residual unit is a residual feature, and when k is not 1, the input of the $k^{th}$ residual unit is a residual feature, i.e., a residual result outputted by a $(k-1)^{th}$ residual unit. That is, performing feature residual processing on the residual feature may be implemented in the following manner: performing the following processing through the first residual unit of the plurality of cascaded residual units: convolving the residual feature to obtain a convolution result of the first residual unit; and adding the convolution result of the first residual unit to the residual feature to obtain the residual result outputted by the first residual unit. The continuing to perform feature residual processing through the subsequent cascaded residual unit and output a residual result may be implemented in the following manner: performing the following processing through a $j^{th}$ residual unit of the plurality of cascaded residual units: performing the following processing through the $j^{th}$ residual unit of the plurality of cascaded residual units: convolving a residual result outputted by a $(j-1)^{th}$ residual unit to obtain a convolution result of the $j^{th}$ residual unit; adding the convolution result of the $j^{th}$ residual units to the residual result outputted by the $(j-1)^{th}$ residual unit to obtain a residual result outputted by the $j^{th}$ residual unit; and outputting the residual result outputted by the $j^{th}$ residual unit to a $(j+1)^{th}$ residual unit, where j is a sequentially increasing positive integer, $1 < j < J$, and J is the number of residual units.

Following the foregoing embodiment, each residual unit includes a dilated convolution operator. The following processing is performed through the $k^{th}$ residual unit of the plurality of cascaded residual units. The convolving an input of the $k^{th}$ residual unit to obtain a convolution result of the $k^{th}$ residual unit may be implemented in the following manner: performing the following processing through the $k^{th}$ residual unit of the plurality of cascaded residual units: performing dilated convolution on the input of the $k^{th}$ residual unit to obtain the convolution result of the $k^{th}$ residual unit. That is, dilated convolution is performed on the residual feature through a dilated convolution operator included in the first residual unit to obtain a dilated convolution result of the first residual unit. The following processing is performed through the $j^{th}$ residual unit of the plurality of cascaded residual units: performing, through a dilated convolution operator included in the $j^{th}$ residual unit, dilated convolution on the residual result outputted by the $(j-1)^{th}$ residual unit to obtain a dilated convolution result of the $j^{th}$ residual unit, where j is a sequentially increasing positive integer, $1 < j \leq J$, and J is the number of residual units.

Following the foregoing embodiment, each residual unit not only includes the dilated convolution operator, but also includes at least one causal convolution operator. After the input of the $k^{th}$ residual unit is convolved to obtain the convolution result of the $k^{th}$ residual unit, causal convolution is performed on an obtained dilated convolution result through at least one causal convolution operator included in the $k^{th}$ residual unit, and an obtained causal convolution result is used as the convolution result of the $k^{th}$ residual unit. That is, causal convolution is performed on the dilated convolution result of the first residual unit through at least one causal convolution operator included in the first residual unit, and an obtained causal convolution result is used as a convolution result outputted by the first residual unit. After dilated convolution is performed on the residual result outputted by the $(j-1)^{th}$ residual unit through the dilated convolution operator included in the $j^{th}$ residual unit to obtain the dilated convolution result of the $j^{th}$ residual unit, causal convolution is performed on the dilated convolution result of the $j^{th}$ residual unit through at least one causal convolution operator included in the $j^{th}$ residual unit, and a causal convolution result of the $j^{th}$ residual unit is used as the convolution result of the $j^{th}$ residual unit.

In some embodiments, when group convolution is applied to the dilated convolution operator included in the residual unit, performing dilated convolution on the low-frequency feature may be implemented in the following manner: grouping input channels of the residual feature to obtain a plurality of first groups, each first group including first elements corresponding to at least two channels in the residual feature; and performing dilated convolution on the first elements in each first group. When group convolution is applied to the causal convolution operator included in the residual unit, performing causal convolution on the obtained dilated convolution result may be implemented in the following manner: grouping input channels of the dilated convolution result to obtain a plurality of second groups, each second group including second elements corresponding to at least two channels in the dilated convolution result; and performing causal convolution on the second elements in each second group.

In some embodiments, a first NN configured for audio decoding includes a plurality of cascaded decoding blocks, and each decoding block includes a feature decoding block and at least one residual unit. FIG. 5C is a schematic flowchart of an audio decoding method according to an embodiment of this application. FIG. 5C shows that operation 2021 in FIG. 5B may be implemented through operation 20211A, and operation 2022 may be implemented through operation 20221A. Operation 20211A: Perform, through feature decoding blocks in the plurality of cascaded decoding blocks, cascaded feature decoding on the low-frequency encoding feature corresponding to the low-frequency bitstream to obtain the residual feature corresponding to the low-frequency bitstream. Correspondingly, in operation 20221A, residual processing is performed on the residual feature corresponding to the low-frequency bitstream through at least one residual unit in the plurality of cascaded decoding blocks to obtain the low-frequency feature corresponding to the low-frequency bitstream.

In some embodiments, operation 20211A may be implemented in the following manner: performing, through a feature decoding block in a first decoding block of the plurality of cascaded decoding blocks, single feature decoding on the low-frequency encoding feature corresponding to the low-frequency bitstream, and outputting a decoding result outputted by the feature decoding block in the first decoding block to at least one residual unit in the first decoding block; performing, through a feature decoding block in an $i^{th}$ decoding block of the plurality of cascaded decoding blocks, single feature decoding on a residual result outputted by at least one residual unit in an $(i-1)^{th}$ decoding block, and outputting a decoding result outputted by the feature decoding block in the $i^{th}$ decoding block to at least one residual unit in the $i^{th}$ decoding block; and using a decoding result outputted by a feature decoding block in a last decoding block as the residual feature corresponding to the low-frequency bitstream; and where i is a sequentially increasing positive integer, $1 < i \leq I$, and I is the number of decoding blocks. The decoding result outputted by the feature decoding block in the first decoding block is obtained by performing the following processing through the feature decoding block in the first decoding block of the plurality of cascaded decoding blocks: convolving the low-frequency encoding feature corresponding to the low-frequency bitstream to obtain a convolution feature, the number of channels of the convolution feature being less than the number of channels of the low-frequency encoding feature; and upsampling the convolution feature to obtain the decoding result outputted by the feature decoding block in the first decoding block. The decoding result outputted by the feature decoding block in the $i^{th}$ decoding block is obtained by performing the following processing through the feature decoding block in the $i^{th}$ decoding block: convolving the residual result outputted by the at least one residual unit in the $(i-1)^{th}$ decoding block to obtain a convolution feature, the number of channels of the convolution feature being less than the number of channels of the residual result outputted by the at least one residual unit; and upsampling the convolution feature to obtain the decoding result outputted by the feature decoding block in the $i^{th}$ decoding block.

In some embodiments, operation 20221A may be implemented in the following manner: performing, through at least one residual unit in the last decoding block of the plurality of cascaded decoding blocks, residual processing on the residual feature corresponding to the low-frequency bitstream to obtain the low-frequency feature corresponding to the low-frequency bitstream.

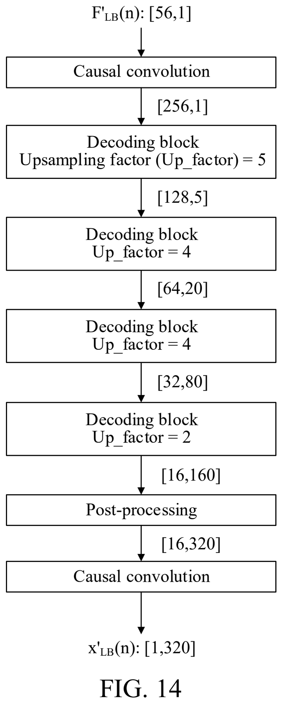

For example, as shown in FIG. 14, after a first NN is invoked based on the low-frequency encoding feature ($F'_{LB}$ ($n$) in FIG. 14, i.e., a 256×1 tensor) corresponding to the low-frequency bitstream, the low-frequency feature (a 16×160 tensor outputted in FIG. 14) is obtained through the first NN, and the first NN includes four cascaded decoding blocks having different upsampling factors (Up_factor). Each decoding block includes a convolution layer, an upsampling layer, and a residual block (including at least one residual unit). The convolution layer is configured to half the number of input channels, and an activation function may be a PReLU. The upsampling layer contains a specific Up_factor to complete upsampling. Each residual block includes four dilated convolution-based residual units (feature dimensions of the input and output of the residual unit do not change). Herein, Up_factor of the four decoding blocks is set to 5, 4, 4, and 2. Therefore, the number of output channels of the four decoding blocks is set to 128, 64, 32, and 16. After being processed by the four decoding blocks, an input 256×1 tensor is converted into 128×5, 64×20, 32×80, and 16×160 tensors. For example, single feature decoding is performed on the low-frequency encoding feature (i.e., the 256×1 tensor) through a feature decoding block (including a convolution layer and an upsampling layer) in a first decoding block, and a decoding result outputted by the feature decoding block in the first decoding block is outputted to a residual block in the first decoding block. After the decoding result is processed through the residual block in the first decoding block, a residual result (i.e., the 128×5 tensor) of the residual block in the first decoding block is obtained and outputted to a second decoding block. Single feature decoding is performed on the residual result (i.e., the 128×5 tensor) in the first decoding block through a feature decoding block in the second decoding block, and a decoding result outputted by the feature decoding block in the second decoding block is outputted to a residual block in the second decoding block. After the decoding result is processed through the residual block in the second decoding block, a residual result (i.e., the 64×20 tensor) of the residual block in the second decoding block is obtained and outputted to a third decoding block. The foregoing processing is sequentially performed, and an output of the last decoding block is used as the low-frequency feature (i.e., the 16×160 tensor outputted by a fourth decoding block).

Following operation 202, in operation 203, signal reconstruction is performed on the low-frequency feature corresponding to the low-frequency bitstream to obtain a low-frequency sub-band signal corresponding to the low-frequency bitstream.

Operation 203 is similar to operation 23. Only a processing object of signal reconstruction in operation 23 is the audio feature, and a processing object of signal reconstruction in operation 203 is the low-frequency feature.

Herein, signal reconstruction is an inverse process of feature extraction. A dimension of the low-frequency feature is increased through signal reconstruction, thereby achieving a data decompression function.

In some embodiments, operation 203 may be implemented in the following manner: upsampling the low-frequency feature corresponding to the low-frequency bitstream to obtain an upsampling feature; and performing causal convolution on the upsampling feature to obtain the low-frequency sub-band signal corresponding to the low-frequency bitstream.

FIG. 5D is a schematic flowchart of an audio decoding method according to an embodiment of this application. FIG. 5D shows that FIG. 5A further includes operation 204 to operation 206.

Operation 204: Perform signal decoding on a high-frequency bitstream to obtain a high-frequency encoding feature corresponding to the high-frequency bitstream.

The high-frequency bitstream is obtained by performing audio encoding on a high-frequency sub-band signal of the audio signal. Signal decoding and signal encoding are inverse processes of each other. For example, performing signal decoding on the high-frequency bitstream may be implemented in the following manner: performing entropy decoding on the high-frequency bitstream to obtain an index value corresponding to the high-frequency bitstream; and performing inverse quantization on the index value corresponding to the high-frequency bitstream to obtain the high-frequency encoding feature corresponding to the high-frequency bitstream.

Operation 205: Perform high-frequency reconstruction on the high-frequency encoding feature corresponding to the high-frequency bitstream to obtain the high-frequency sub-band signal corresponding to the high-frequency bitstream.

High-frequency reconstruction and high-frequency analysis are inverse processes of each other. The signal reconstruction in operation 23 is different from the high-frequency reconstruction in operation 205. The signal reconstruction in operation 23 is an inverse process of the feature extraction in operation 11 and is configured for reconstructing a reconstructed audio signal according to an audio feature corresponding to an audio bitstream. However, the high-frequency reconstruction in operation 205 is configured for reconstructing the high-frequency sub-band signal corresponding to the high-frequency bitstream according to the high-frequency encoding feature corresponding to the high-frequency bitstream.

In some embodiments, operation 205 may be implemented in the following manner: invoking a second NN model to perform signal reconstruction on the high-frequency encoding feature to obtain the high-frequency sub-band signal corresponding to the high-frequency bitstream.

For example, when an encoder side invokes a fourth NN to perform feature extraction on the high-frequency sub-band signal to obtain the high-frequency encoding feature, a decoder side invokes the second NN to perform signal reconstruction on the high-frequency encoding feature to obtain the corresponding high-frequency sub-band signal. A structure of the fourth NN corresponds to a structure of the second NN.

In some embodiments, operation 205 may be implemented in the following manner: performing inverse bandwidth extension on the high-frequency encoding feature to obtain the high-frequency sub-band signal corresponding to the high-frequency bitstream.

For example, when the encoder side performs bandwidth extension on the high-frequency sub-band signal to obtain a high-frequency feature, the decoder side performs inverse bandwidth extension on the high-frequency feature to obtain the corresponding high-frequency sub-band signal.

In some embodiments, the performing inverse bandwidth extension on the high-frequency encoding feature to obtain the high-frequency sub-band signal corresponding to the high-frequency bitstream includes: performing frequency domain transform based on a plurality of sample points included in the low-frequency sub-band signal to obtain transform coefficients corresponding to the plurality of sample points; performing spectrum replication on second half transform coefficients of the transform coefficients corresponding to the plurality of sample points to obtain a reference transform coefficient of a reference high-frequency sub-band signal; performing, based on a sub-band spectral envelope corresponding to the high-frequency feature, gain processing on the reference transform coefficient of the reference high-frequency sub-band signal to obtain a reference transform coefficient obtained after gain processing; and performing inverse frequency domain transform on the reference transform coefficient obtained after gain processing, to obtain the corresponding high-frequency sub-band signal.

A frequency domain transform method in this embodiment of this application includes MDCT, DCT, FFT, and the like. A frequency domain transform mode is not limited to the embodiments of this application.

In some embodiments, the performing, based on a sub-band spectral envelope corresponding to the high-frequency feature, gain processing on the reference transform coefficient of the reference high-frequency sub-band signal to obtain a reference transform coefficient obtained after gain processing includes: dividing, based on the sub-band spectral envelope corresponding to the high-frequency feature, the reference transform coefficient of the reference high-frequency sub-band signal into a plurality of sub-bands; and performing the following processing on any one of the plurality of sub-bands: determining first average energy corresponding to the sub-band in the sub-band spectral envelope, and determining second average energy corresponding to the sub-band; determining a gain factor based on a ratio of the first average energy to the second average energy; and multiplying the gain factor by each reference transform coefficient included in the sub-band to obtain the reference transform coefficient obtained after gain processing.

As an example, MDCT transform of 640 points similar to that in the encoder side is first performed on a low-frequency sub-band signal $x'_{LB}(n)$ generated by the decoder side to generate MDCT coefficients of 320 points (i.e., MDCT coefficients of a low-frequency part). That is, frequency domain transform is performed based on the plurality of sample points included in the low-frequency sub-band signal to obtain the transform coefficients corresponding to the plurality of sample points.

Then, the MDCT coefficients of 320 points generated by $x'_{LB}(n)$ are replicated to generate MDCT coefficients of a high-frequency part (i.e., the reference transform coefficient of the reference high-frequency sub-band signal). With reference to the basic feature of a voice signal, there are more harmonics in the low-frequency part and fewer harmonics in the high-frequency part. Therefore, to avoid simple replication to cause the manually generated MDCT spectrum of the high-frequency part to contain excessive harmonics, the last 160 points in the MDCT coefficients of 320 points on which the low-frequency sub-band signal depends may be used as a master template, and the spectrum is replicated twice to generate a reference value (i.e., reference transform coefficients of the reference high-frequency sub-band signal) of MDCT coefficients of 320 points of the reference high-frequency sub-band signal. That is, spectrum replication is performed on the second half transform coefficients of the transform coefficients corresponding to the plurality of sample points to obtain the reference transform coefficient of the reference high-frequency sub-band signal.

Next, the previously obtained 8 sub-band spectral envelopes (i.e., 8 sub-band spectral envelopes obtained by querying the quantization table, i.e., the sub-band spectral envelope corresponding to the high-frequency feature) are invoked. The 8 sub-band spectral envelopes correspond to 8 high-frequency sub-bands, and the generated reference value of the MDCT coefficients of 320 points of the reference high-frequency sub-band signal is divided into 8 reference high-frequency sub-bands (that is, the reference transform coefficient of the reference high-frequency sub-band signal is divided into a plurality of sub-bands). In a band-wise mode, based on a high-frequency sub-band and a corresponding reference high-frequency sub-band, gain processing is performed on the generated reference value of the MDCT coefficients of 320 points of the reference high-frequency sub-band signal (multiplication is performed in a frequency domain). For example, a gain factor is calculated according to average energy (i.e., the first average energy) of the high-frequency sub-band and average energy (second average energy) of the corresponding reference high-frequency sub-band, and an MDCT coefficient corresponding to each point in the corresponding reference high-frequency sub-band is multiplied by the gain factor to ensure that energy of a high-frequency MDCT coefficient virtually generated through decoding is close to original coefficient energy of the encoder side so as to restore an original high-frequency signal as much as possible.

For example, it is assumed that average energy of a reference high-frequency sub-band (i.e., a sub-band obtained by dividing generated reference values of MDCT coefficients of 320 points of a high-frequency part signal) is Y_L, and average energy of a current high-frequency sub-band (i.e., a sub-band corresponding to a sub-band spectral envelope obtained by decoding based on a bitstream) is Y_H, a gain factor a = sqrt(Y_H/Y_L) is calculated, where sqrt() represents a square root calculation function configured for calculating a square root of (Y_H/Y_L). After the gain factor a is provided, an MDCT coefficient of each point in the reference high-frequency sub-band is directly multiplied by a. The average energy of the MDCT coefficient (virtually generated) obtained after gain processing is very close to the original one of the encoder side.

Finally, inverse MDCT is invoked to generate an estimated value $x'_{HB}(n)$ of the high-frequency sub-band signal (i.e., the high-frequency sub-band signal corresponding to the high-frequency feature). Inverse MDCT is performed on the MDCT coefficients of 320 points obtained after gain processing, to generate estimated values of 640 points. Through overlapping, estimated values of the first 320 effective points are used as $x'_{HB}(n)$.

Operation 206: Perform sub-band synthesis on the low-frequency sub-band signal and the high-frequency sub-band signal to obtain the reconstructed audio signal.

For example, sub-band synthesis is an inverse process of sub-band decomposition. The decoder side performs sub-band synthesis on the low-frequency sub-band signal and the high-frequency sub-band signal to recover the audio signal. The reconstructed audio signal is an estimated value of the recovered audio signal.

When the received audio bitstream is a low-frequency bitstream in a full-frequency bitstream, the audio decoding method in the embodiments of this application is performed on the low-frequency bitstream to obtain a low-frequency sub-band signal (which is an estimated value of a low-frequency sub-band signal in sub-band decomposition at the encoding side). Certainly, the full-frequency bitstream further includes a high-frequency bitstream. Audio decoding is performed on the high-frequency bitstream to obtain a high-frequency sub-band signal (which is an estimated value of a high-frequency sub-band signal in sub-band decomposition at the encoding side). Sub-band synthesis is performed on the low-frequency sub-band signal and the high-frequency sub-band signal to obtain the reconstructed audio signal.

In some embodiments, operation 206 may be implemented in the following manner: upsampling the low-frequency sub-band signal to obtain a low-pass filtered signal; upsampling the high-frequency sub-band signal to obtain a high-frequency filtered signal; and filtering and synthesizing the low-pass filtered signal and the high-frequency filtered signal to obtain the reconstructed audio signal.

For example, after the low-frequency sub-band signal and the high-frequency sub-band signal are obtained, sub-band synthesis is performed on the low-frequency sub-band signal and the high-frequency sub-band signal through the QMF synthesis filter to recover the audio signal.

Exemplary application of the embodiments of this application in an actual application scene will be described below.

The embodiments of this application may be applied to various audio scenes, such as a voice call and instant messaging. A description is provided below using a voice call as an example.

In the related art, the voice encoding principle is roughly as follows. The voice encoding may directly encode voice waveform samples sample by sample. Alternatively, related low-dimensional features are extracted based on a human sounding principle, an encoder side encodes the features, and a decoder side reconstructs a voice signal based on these parameters.

The foregoing encoding principles come from voice signal modeling, i.e., a signal processing-based compression method. Compared with the signal processing-based compression method, to improve the encoding quality while ensuring the voice encoding efficiency, the embodiments of this application provide a low-complexity and low-bit-rate NN voice compression method (i.e., the audio encoding method and the audio decoding method). Based on the characteristics of an audio signal, an important part (low-frequency sub-band signal) is processed based on the NN technology to obtain a feature vector having a dimension lower than that of an inputted low-frequency sub-band signal. Residual processing is performed using a residual block in the NN so that data may be better analyzed comprehensively, thereby improving the encoding quality. In addition, an operation similar to "partitioning" is used in the residual block, thereby reducing the algorithm complexity and improving the encoding effect.

The embodiments of this application may be applied to a voice communication link shown in FIG. 6C. Using a voice over Internet protocol (VoIP) conference system as an example, the voice encoding and decoding technology involved in the embodiments of this application is deployed in encoding and decoding parts to achieve a basic function of voice compression. An encoder is deployed in an uplink client 601, and a decoder is deployed in a downlink client 602. The uplink client acquires a voice, performs processing such as preprocessing enhancement and encoding, and transmits a bitstream obtained through encoding to the downlink client 602 through a network. The downlink client 602 performs processing such as decoding and enhancement to play back a decoded voice on the downlink client 602.

Considering forward compatibility (that is, a new encoder is compatible with an existing encoder), a transcoder needs to be deployed in a backend (i.e., a server) of a system to resolve a problem of interconnection and intercommunication between the new encoder and the existing encoder. For example, if a transmitting end (uplink client) is a new NN encoder, and a receiving end (downlink client) is a public switched telephone network (PSTN) (G.722). In the backend, an NN decoder needs to be executed to generate a voice signal, and then a G.722 encoder is invoked to generate a specific bitstream to implement a transcoding function so that the receiving end can perform correct decoding based on the specific bitstream.

The low-complexity and low-bit-rate NN voice compression method provided in this embodiment of this application is described below with reference to a high-frequency part and a low-frequency part.

The low-complexity and low-bit-rate NN voice compression method (implemented by the audio encoding method and the audio decoding method) provided in this embodiment of this application is described below with reference to FIG. 7B.

The following processing is performed on the encoder side:

decomposing, using an analysis filter, an input audio signal x(n) of an $n^{th}$ frame into a low-frequency sub-band signal $x_{LB}(n)$ and a high-frequency sub-band signal $x_{HB}(n)$.

For the low-frequency sub-band signal $x_{LB}(n)$, a third NN is invoked to obtain a low-dimensional feature vector $F_{LB}(n)$, and a dimension of the feature vector $F_{LB}(n)$ is smaller than a dimension of the low-frequency sub-band signal to reduce a data volume. For example, for each frame $x_{LB}(n)$, the NN (encoding part) is invoked to generate a lower-dimension feature vector $F_{LB}(n)$. The embodiments of this application do not limit other NN structures, such as an autoencoder, a full-connection (FC) network, a long short-term memory (LSTM) network, or a CNN + LSTM. Residual processing is performed using a residual block in the NN so that data may be better analyzed comprehensively, thereby improving the encoding quality. In addition, an operation similar to "partitioning" is used in the residual block, thereby reducing the algorithm complexity and improving the encoding effect.

For the high-frequency sub-band signal $x_{HB}(n)$, considering that the high frequency is less important to the quality than the low frequency, other solutions may be used for the high-frequency sub-band signal $x_{HB}(n)$ to extract the feature vector $F_{HB}(n)$. For example, for a bandwidth extension technology based on voice signal analysis, a high-frequency sub-band signal may be generated using only a bit rate of 1-2 kbps. An NN structure the same as that of the low-frequency sub-band signal or a simplified network (for example, an output feature vector is smaller than the low-frequency feature vector $F_{LB}(n)$) may further be used.

VQ or scalar quantization is performed on a feature vector (i.e., $F_{LB}(n)$ and $F_{HB}(n)$) corresponding to the sub-band signal, entropy encoding is performed on a quantized index value, and a bitstream (a low-frequency bitstream and a high-frequency bitstream) obtained after encoding is transmitted to the decoder side.

The following processing is performed on the decoder side:

decoding the bitstream (the low-frequency bitstream and the high-frequency bitstream) received by the decoder side to obtain an estimated value $F'_{LB}(n)$ of a low-frequency feature vector and an estimated value $F'_{HB}(n)$ of a high-frequency feature vector.

For the low-frequency part, a first NN is invoked based on the estimated value $F'_{LB}(n)$ of the low-frequency feature vector to obtain an estimated value $x'_{LB}(n)$ of the low-frequency sub-band signal. Residual processing is performed using a residual block in the first NN so that data may be better analyzed comprehensively, thereby improving the encoding quality. In addition, an operation similar to "partitioning" is used in the residual block, thereby reducing the algorithm complexity and improving the encoding effect.

For the high-frequency part, high-frequency reconstruction is invoked based on the estimated value $F'_{HB}(n)$ of the high-frequency feature vector to generate an estimated value $x'_{HB}(n)$ of the high-frequency sub-band signal.

Finally, the QMF synthesis filter is invoked to generate a reconstructed synthesized voice signal x'(n).

The low-complexity and low-bit-rate NN voice compression method provided in this embodiment of this application is specifically described below.

In some embodiments, a voice signal with a sampling rate Fs=32,000 Hz is used as an example (the method provided in this embodiment of this application is further applicable to scenes with other sampling rates, including but not limited to: 8,000 Hz, 32,000 Hz, and 48,000 Hz). In addition, it is assumed that a frame length is set to 20 ms. Therefore, for Fs=32,000 Hz, it is equivalent to that each frame contains 640 sample points.

The encoder side and the decoder side are described in detail below with reference to the flowchart shown in FIG. 7B.

A procedure of the encoder side of the low-frequency part and the high-frequency part is as follows.

For an audio signal with a sampling rate Fs=32,000 Hz, an input signal of an n$^{th}$ frame including 640 sample points is recorded as an input signal x(n).

Operation 11: Invoke a QMF analysis filter to perform signal decomposition.

The QMF analysis filter (2-channel QMF) is invoked, and downsampling is performed to obtain two parts of sub-band signals, i.e., a low-frequency sub-band signal $x_{LB}(n)$ and a high-frequency sub-band signal $x_{HB}(n)$. The effective bandwidths of the low-frequency sub-band signal $x_{LB}(n)$ and the high-frequency sub-band signal $x_{HB}(n)$ are 0-8 kHz and 8-16 kHz, respectively, and the number of sample points of the low-frequency sub-band signal $x_{LB}(n)$ and the high-frequency sub-band signal $x_{HB}(n)$ is 320.

Operation 12: Invoke a third NN based on the low-frequency sub-band signal.

The third NN is invoked based on the low-frequency sub-band signal $x_{LB}(n)$ to generate a lower-dimensional feature vector $F_{LB}(n)$. A dimension of $x_{LB}(n)$ is 320, and a dimension of $F_{LB}(n)$ is 56. From the perspective of the data volume, the third NN realizes dimension reduction to achieve a data compression function. This embodiment of this application is not limited to the dimension of $F_{LB}(n)$, and other dimensions smaller than that of $x_{LB}(n)$ are acceptable.

Referring to the network structure diagram of the third NN shown in FIG. 11, a procedure in which the third NN performs data compression is specifically described below.

First, a 16-channel causal convolution is invoked, and an input tensor (i.e., a vector) may be extended into a 16×320 tensor.

Then, the 16×320 tensor is preprocessed. For example, after a convolution operation is performed on the 16×320 tensor, a pooling operation with a factor of 2 is performed, and an activation function may be a PReLU to generate a 16×160 tensor.

Next, four encoding blocks having different downsampling factors (Down_factor) are cascaded. Each encoding block contains a residual block, a convolution layer, and a pooling layer. Each residual block includes four dilated convolution-based residual units (feature dimensions of the input and output of the residual unit do not change). The convolution layer is configured to double the number of input channels, and an activation function may be a PReLU, thereby ensuring the data volume and avoiding data loss. The pooling layer is a pooling operation containing Down_factor to complete downsampling and implement data compression. Herein, Down_factor of the four encoding blocks is set to 2, 4, 4, and 5. Therefore, the number of output channels of the four encoding blocks is set to 32, 64, 128, and 256. After being processed by the four encoding blocks, an input 16×160 tensor is converted into 32×80, 64×20, 128×5, and 256×1 tensors. The number of encoding blocks is not limited in this embodiment of this application, and may be any positive integer such as 2, 3, 4, or 5.

The residual unit is further described herein. The residual unit refers to a module in a deep NN. A cross-layer connection is introduced in the NN so that the NN is optimized more easily in a training process, thereby avoiding problems such as gradient vanishing or gradient exploding. A core idea thereof is to perform residual learning on an input inside the module, that is, input information is directly transferred to an outputted by bypassing a part of layers through a direct path, so that the network may better use shallow feature information in the learning process. FIG. 12A is a schematic structural diagram of a residual block used in an encoding block in a third NN. The residual block includes four dilated convolution-based residual units, and each residual unit contains a dilated convolution block with a specified dilation rate, that is, each dilated convolution block contains a convolution operator with a specified dilation rate (for example, dilation rate = 3). In this embodiment of this application, using four dilated convolution blocks with progressive dilation rates is equivalent to using different receptive fields to extract features of the input at different resolutions so that data may be better analyzed comprehensively. After residual processing of four dilated convolution blocks of specified dilation rates, the feature is added to an input obtained through skip connection to obtain an output result of the residual block, and the output result is outputted to a convolution layer connected to the residual block.

Herein, any residual unit in FIG. 12A is further described, as shown in FIG. 12B. For any residual unit, a dilated convolution (configured for expanding a receptive field) with a specified dilation rate is contained, and a PReLU may be used as an activation function. In addition, one or more causal convolution (configured for extracting local information) may be cascaded, and the PReLU may be used as the activation function. A convolution kernel size of the foregoing dilated convolution with a specified dilation rate may be 3, 5, 7, 9, or the like, and a convolution kernel size of the foregoing causal convolution may be 1, 3, or the like. The convolution kernel size of the foregoing dilated convolution of a specified dilation rate or the foregoing causal convolution is not limited in this embodiment of this application. In addition, the causal convolution or the dilated convolution in this embodiment of this application may further be implemented by another convolution unit with a specific similar or equivalent function.

In addition, for the residual unit, to reduce the algorithm complexity, a group convolution algorithm is introduced. The group convolution is to divide the input channels into a plurality of groups to perform a convolution operation, and only the input channels and the output channels in each group are associated. Herein, it is assumed that there are 16 input channels and 32 output channels. If the number of groups is 1, each input channel is associated with 32 output channels. If the number of groups is 2, the 16 input channels are first divided into two groups 0-7 and 8-15. In each of the two groups, the input channel is associated with the output channel in this group. For example, input channels 0-7 in a first group are associated with output channels 0-15, and input channels 8-15 in a second group are associated with output channels 16-31. For example, a zeroth output channel is only associated with zeroth to seventh input channels and is not associated with eighth to fifteenth input channels, and the twenty-fifth output channel is only associated with the eighth to fifteenth input channels and is not associated with the zeroth to seventh input channels. As can be seen from such a comparison, introducing group convolution may prevent any input channel from being associated with all output channels and reduce the number of connections, thereby reducing the complexity. Certainly, a larger number of groups indicates smaller association between the input channel and the output channel, and affects the encoding effect. Therefore, a larger number of groups is not always better. In this embodiment of this application, different configurations of the number of groups may be used for dilated convolution included in the four residual blocks corresponding to the four encoding blocks. Specific configurations of the number of groups are shown in Table 1.

Table 1. Configuration of the number of groups used by residual units in different encoding blocks

| Encoding block | Number of groups |
|---|---|
| Encoding block (Down_factor = 2) | 2 |
| Encoding block (Down_factor = 4) | 4 |
| Encoding block (Down_factor = 4) | 4 |
| Encoding block (Down_factor = 5) | 4 |

Finally, causal convolution similar to preprocessing is performed on the $256 \times 1$ tensor to output a 56-dimensional feature vector $F_{LB}(n)$.

Operation 13: Perform high-frequency analysis on the high-frequency sub-band signal $x_{HB}(n)$.

An objective of high-frequency analysis is to extract key information of the high-frequency sub-band signal $x_{HB}(n)$ and generate a lower-dimensional feature vector $F_{HB}(n)$. This embodiment of this application is not limited to the dimension of $F_{HB}(n)$, and other dimensions smaller than that of $x_{LB}(n)$ are acceptable, but the dimension of $F_{HB}(n)$ is smaller than the dimension of $F_{LB}(n)$.

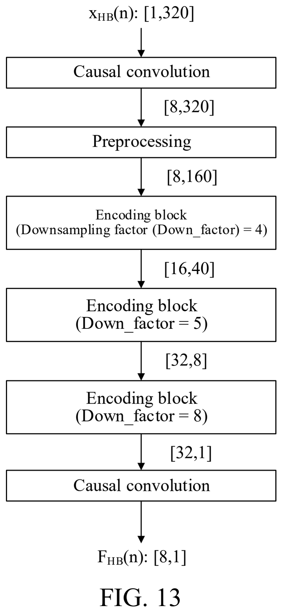

In some embodiments, referring to operation 12, a structure of another fourth NN similar to the third NN is introduced to generate a low-dimensional feature vector. Compared with the low-frequency sub-band signal, the high-frequency sub-band signal has relatively low importance for quality. Therefore, the structure of the NN for the high-frequency sub-band signal does not need to be as complex as that of the third NN. The structure of the fourth NN for the high-frequency sub-band signal is shown in FIG. 13. The structure of the fourth NN is similar to the structure of the third NN. However, compared with the structure of the third NN, the number of channels of the fourth NN is greatly reduced.

However, for the high-frequency sub-band signal, although a data volume of the high-frequency sub-band signal is greatly reduced through the structure of the fourth NN shown in FIG. 13, the model complexity of the structure of the fourth NN is still relatively high. Therefore, the embodiments of this application provide another method for compressing a high-frequency sub-band signal, i.e., bandwidth extension (recovering a wideband audio signal from a band-limited narrowband audio signal). Application of bandwidth extension in this embodiment of this application is specifically described below.

For a high-frequency sub-band signal $x_{HB}(n)$ including 320 points, the MDCT is invoked to generate MDCT coefficients of 320 points. Specifically, if the overlap is 50%, high-frequency data of an $(n+1)^{th}$ frame and high-frequency data of an $n^{th}$ frame may be combined (spliced), MDCT of 640 points is calculated, and MDCT coefficients of 320 points are obtained.

The MDCT coefficients of the 320 points are divided into N sub-bands. The sub-band herein is a group of a plurality of adjacent MDCT coefficients, and the MDCT coefficients of the 320 points may be divided into 8 sub-bands. For example, the 320 points may be uniformly allocated, that is, the sub-bands each include a same number of points. Certainly, in this embodiment of this application, the 320 points cannot be non-uniformly divided. For example, a low-frequency sub-band includes fewer MDCT coefficients (a higher frequency resolution), and a high-frequency sub-band includes more MDCT coefficients (a lower frequency resolution).

According to the Nyquist sampling theory (to recover an original signal from a sampled signal without distortion, a sampling frequency is to be greater than twice the highest frequency of the original signal; when the sampling frequency is less than twice the highest frequency of a spectrum, aliasing occurs in a spectrum of the signal; and when the sampling frequency is greater than twice the highest frequency of the spectrum, no aliasing occurs in the spectrum of the signal), the foregoing MDCT coefficients of 320 points represent a spectrum of 8-16 kHz. However, for ultra-wideband voice communication, the spectrum does not necessarily need to be set to 16 kHz. For example, if the spectrum is set to 14 kHz, only MDCT coefficients of the first 240 points need to be considered, and correspondingly, the number of sub-bands may be controlled to be 6.

For each sub-band, average energy of all MDCT coefficients in a current sub-band is calculated as a sub-band spectral envelope (the spectral envelope is a smooth curve passing through main peak points of the spectrum). For example, if the MDCT coefficients included in the current sub-band are x(n), n=1, 2, ..., and 40, the average energy Y= $((x(1)^2+x(2)^2+...+x(40)^2)/40)$ is calculated. In a case that the MDCT coefficients of 320 points are divided into 8 sub-bands, 8 sub-band spectral envelopes may be obtained. The 8 sub-band spectral envelopes are feature vectors $F_{HB}(n)$ of the generated high-frequency sub-band signal.

In summary, through either of the foregoing two methods (the NN structure and the bandwidth extension), a 320-dimensional high-frequency sub-band signal may be outputted as an 8-dimensional feature vector. Therefore, only a small data volume is required to represent high-frequency information, and the encoding efficiency is significantly improved.

Operation 14: Quantization encoding.

Scalar quantization (the components are quantized separately) and an entropy encoding method may be performed on the feature vector $F_{LB}(n)$ of the low-frequency sub-band signal and the feature vector $F_{HB}(n)$ of the high-frequency sub-band signal. In addition, in this embodiment of this application, a technical combination of VQ (combining a plurality of adjacent components into a vector for joint quantization) and entropy encoding is not limited.

After quantization encoding is performed on the feature vector, a corresponding bitstream may be generated. According to an experiment, high-quality compression of a 32 kHz ultra-wideband signal may be achieved with a bit rate of 6-10 kbps.

A procedure of the decoder side of the low-frequency part and the high-frequency part is as follows.

Operation 21: Quantization decoding.

Quantization decoding is an inverse process of quantization encoding. Entropy decoding is first performed on a received bitstream (including a high-frequency bitstream and a low-frequency bitstream), and an estimated value $F'_{LB}(n)$ of a feature vector of the low-frequency bitstream and an estimated value $F'_{HB}(n)$ of a feature vector of the high-frequency bitstream are obtained by looking up a quantization table.

Operation 22: Invoke a first NN based on the estimated value $F'_{LB}(n)$ of the feature vector of the low-frequency bitstream.

First, based on the estimated value $F'_{LB}(n)$ of the feature vector of the low-frequency bitstream, the first NN shown in FIG. 14 is invoked to generate an estimated value $x'_{LB}(n)$ of the low-frequency sub-band signal. The first NN is similar to the third NN, for example, causal convolution, and a post-processing structure is similar to the preprocessing structure in the third NN. A specific procedure of the first NN is as follows.

First, a causal convolution is invoked to extend an input tensor $F'_{LB}(n)$ from 56×1 to 256×1.

Next, four decoding blocks having different upsampling factors (Up_factor) are cascaded. Each decoding block contains a convolution layer, an upsampling module, and a residual block. The convolution layer is configured to half the number of input channels. The upsampling module contains a specific Up_factor to complete upsampling. One residual block includes four dilated convolution-based residual units. Up_factor of the four decoding blocks is set to 5, 4, 4, and 2. Therefore, the number of output channels of the four decoding blocks is set to 128, 64, 32, and 16. After being processed by the four decoding blocks, the 256×1 tensor is converted into 128×5, 64×20, 32×80, and 16×160 tensors. The number of decoding blocks is not limited in this embodiment of this application, and may be any positive integer such as 2, 3, 4, or 5.

Herein, for the upsampling module containing a specific Up_factor, the upsampling operation may be completed through repeated padding using a replication (repeat) operation. In this way, the complexity may be reduced.

Herein, a configuration of the four dilated convolution-based residual units of the decoder side is similar to a configuration of the residual unit of the encoder side, including but not limited to, an internal structure of the residual unit, a convolution kernel size, a dilation rate, and the like. A configuration of the number of groups used by dilated convolution in the decoding block is shown in Table 2. Herein, in the decoding block, the number of groups being 2 is frequently used, to associate more input channels and output channels, thereby improving the quality of voice reconstruction.

Table 2. Configuration of the number of groups used by residual units in different decoding blocks

| Decoding block | Number of groups |
| --- | --- |
| Decoding block (Up_factor = 5) | 4 |
| Decoding block (Up_factor = 4) | 4 |
| Decoding block (Up_factor = 4) | 2 |
| Decoding block (Up_factor = 2) | 2 |

Then, the 16×160 tensor outputted by the cascade decoding block is post-processed. For example, a repeat operation with a factor of 2 is performed on the 16×160 tensor outputted by the cascade decoding block to complete upsampling. Then, a convolution operation is performed, and an activation function may be a PReLU to generate a 16×320 tensor.

Finally, a causal convolution is invoked, and an input 16×320 tensor may be converted into a 1×320 tensor to reconstruct a low-frequency sub-band signal.

Operation 23: Perform high-frequency reconstruction on the estimated value $F'_{HB}(n)$ of the feature vector of the high-frequency sub-band signal.

Similar to high-frequency analysis at the encoder side, high-frequency reconstruction in this embodiment of this application contains two solutions.

A first implementation of high-frequency reconstruction, such as the second NN shown in FIG. 15, corresponds to a first implementation of high-frequency analysis at the encoder side (corresponding to the fourth NN structure shown in FIG. 13). Based on the estimated value $F'_{HB}(n)$ of the feature vector of the high-frequency sub-band signal, the second NN is invoked to generate an estimated value $x'_{HB}(n)$ of the high-frequency sub-band signal.

A structure of the second NN is similar to that of the first implementation (FIG. 13) of high-frequency analysis, for example, causal convolution, and a post-processing structure is similar to a preprocessing structure in the first implementation of high-frequency analysis. A structure of the decoding block is symmetric to that of the encoding block at the encoding side. Dilated convolution is first performed on the encoding block at the encoding side, and then pooling is performed to complete downsampling. Pooling is first performed on the decoding block at the decoding side to complete upsampling, and then dilated convolution is performed.

A second implementation of high-frequency reconstruction corresponds to a second implementation of high-frequency analysis at the encoder side (corresponding to a bandwidth extension technology). Based on 8 magnitude spectrum sub-band spectral envelopes decoded from the high-frequency bitstream, i.e., the estimated value $F'_{HB}(n)$ of the high-frequency feature vector, the following operations are performed.

MDCT transform of 640 points similar to that in the encoder side is first performed on the estimated value $x'_{LB}(n)$ of the low-frequency sub-band signal generated by the decoder side to generate MDCT coefficients of 320 points (i.e., MDCT coefficients of the low-frequency part).

Then, the MDCT coefficients of 320 points generated by $x'_{LB}(n)$ are replicated to generate MDCT coefficients of the high-frequency part. With reference to the basic feature of a voice signal, there are more harmonics in the low-frequency part and fewer harmonics in the high-frequency part. Therefore, to avoid simple replication to cause the manually generated MDCT spectrum of the high-frequency part to contain excessive harmonics, the last 160 points in the MDCT coefficients of 320 points on which the low-frequency sub-band depends may be used as a master template, and the spectrum is replicated twice to generate a reference value of MDCT coefficients of 320 points of the high-frequency sub-band signal.

Next, the previously obtained 8 sub-band spectral envelopes (i.e., 8 sub-band spectral envelopes obtained by querying the quantization table) are invoked. The 8 sub-band spectral envelopes correspond to 8 high-frequency sub-bands, and the generated reference value of the MDCT coefficients of 320 points of the high-frequency sub-band signal is divided into 8 reference high-frequency sub-bands. Based on a high-frequency sub-band and a corresponding reference high-frequency sub-band, gain processing is performed on the generated reference value of the MDCT coefficients of 320 points of the high-frequency sub-band signal (multiplication is performed in a frequency domain). For example, a gain factor is calculated according to average energy of the high-frequency sub-band and average energy of the corresponding reference high-frequency sub-band, and an MDCT coefficient corresponding to each point in the corresponding reference high-frequency sub-band is multiplied by the gain factor to ensure that energy of a high-frequency MDCT coefficient virtually generated through decoding is close to original coefficient energy of the encoder side.

For example, it is assumed that average energy of a reference high-frequency sub-band (i.e., a sub-band obtained by dividing generated reference values of MDCT coefficients of 320 points of a high-frequency part signal) is Y_L, and average energy of a current high-frequency sub-band (i.e., a sub-band corresponding to a sub-band spectral envelope obtained by decoding based on a bitstream) is Y_H, a gain factor a = sqrt(Y_H/Y_L) is calculated, where sqrt() represents a square root calculation function configured for calculating a square root of (Y_H/Y_L). After the gain factor a is provided, an MDCT coefficient of each point in the reference high-frequency sub-band is directly multiplied by a. The average energy of the MDCT coefficient (virtually generated) obtained after gain processing is very close to the original average energy of the encoder side so as to restore an original high-frequency signal as much as possible.

Finally, inverse MDCT is invoked to generate the estimated value $x'_{HB}(n)$ of the high-frequency sub-band signal. Inverse MDCT is performed on the MDCT coefficients of 320 points obtained after gain processing, to generate estimated values of 640 points. Through overlapping, estimated values of the first 320 effective points are used as $x'_{HB}(n)$.

Operation 24: Synthesis filter

After the decoder side obtains the estimated value $x'_{LB}(n)$ of the low-frequency sub-band signal and the estimated value $x'_{HB}(n)$ of the high-frequency sub-band signal, only upsampling and invoking the QMF synthesis filter is required to generate a reconstructed signal $x'(n)$ of 640 points.

In this embodiment of this application, related networks of the encoder side and the decoder side may be jointly trained by acquiring data, to obtain an optimal parameter. The user only needs to prepare data and set a corresponding network structure. After training is completed in the backend, a trained model may be used.

In summary, compared with the signal processing solution, through an organic combination of the signal decomposition and signal processing technology and the deep NN, the NN-based audio encoding and decoding method provided in the embodiments of this application significantly improves the encoding efficiency when the audio quality is ensured and the complexity is acceptable.

The audio encoding method or the audio decoding method provided in the embodiments of this application is described with reference to exemplary application and implementations of the terminal device provided in the embodiments of this application. The embodiments of this application further provide an audio encoding apparatus and an audio decoding apparatus. In actual application, functional modules in the audio encoding apparatus and the audio decoding apparatus may be cooperatively implemented by a hardware resource of an electronic device (for example, a terminal device, a server, or a server cluster), a computing resource such as a processor, a communication resource (for example, configured for supporting implementation of communication in various modes such as an optical cable and a cellular mode), and a memory. FIG. 3A shows the audio encoding apparatus 555 stored in the memory 550, and FIG. 3B shows the audio decoding apparatus 655 stored in the memory 650. The apparatus may be software in the form of a program, a plug-in, or the like, for example, an implementation such as a software module designed in a programming language such as C/C++ or Java, application software designed in the programming language such as C/C++ or Java, a dedicated software module in a large software system, an application programming interface, a plug-in, or a cloud service. Different implementations are exemplified below.

The audio encoding apparatus 555 includes a series of modules, including a feature extraction module 5551, an encoding module 5552, and a signal encoding module 5553. The following continues to describe a solution in which the modules in the audio encoding apparatus 555 provided in this embodiment of this application cooperate to implement audio encoding.

The feature extraction module 5551 is configured to perform feature extraction on an audio signal to obtain an audio feature of the audio signal. The encoding module 5552 is configured to perform, using at least one residual unit, encoding-side residual processing on the audio feature to obtain an encoding feature of the audio signal. The signal encoding module 5553 is configured to perform signal encoding on the encoding feature of the audio signal to obtain an audio bitstream of the audio signal.

The audio decoding apparatus 655 includes a series of modules, including a signal decoding module 6551, a decoding module 6552, and a signal reconstruction module 6553. The following continues to describe a solution in which the modules in the audio decoding apparatus 655 provided in this embodiment of this application cooperate to implement audio decoding.

The signal decoding module 6551 is configured to perform signal decoding on an audio bitstream to obtain an encoding feature of the audio bitstream, the audio bitstream being obtained by performing audio encoding on an audio signal. The decoding module 6552 is configured to perform, using at least one residual unit, decoding-side residual processing on the encoding feature to obtain an audio feature of the audio bitstream. The signal reconstruction module 6553 is configured to perform signal reconstruction on the audio feature of the audio bitstream to obtain a reconstructed audio signal corresponding to the audio bitstream.

In some embodiments, the decoding module 6552 is further configured to perform feature decoding on the encoding feature of the audio bitstream to obtain a residual feature corresponding to the audio bitstream; and perform, through the at least one residual unit, feature residual processing on the residual feature corresponding to the audio bitstream to obtain the audio feature of the audio bitstream.

In some embodiments, when the at least one residual unit includes a plurality of cascaded residual units, the decoding module 6552 is further configured to perform feature residual processing on the residual feature through a first residual unit of the plurality of cascaded residual units; output a residual result outputted by the first residual unit to a subsequent cascaded residual unit, and continue to perform feature residual processing through the subsequent cascaded residual unit and output a residual result; and use a residual result outputted by a last residual unit as the audio feature of the audio bitstream.

In some embodiments, the decoding module 6552 is further configured to perform the following processing through the first residual unit of the plurality of cascaded residual units: convolving the residual feature to obtain a convolution result of the first residual unit; and adding the convolution result of the first residual unit to the residual feature to obtain the residual result outputted by the first residual unit; and perform the following processing through a $j^{th}$ residual unit of the plurality of cascaded residual units: convolving a residual result outputted by a $(j-1)^{th}$ residual unit to obtain a convolution result of the $j^{th}$ residual unit; adding the convolution result of the $j^{th}$ residual units to the residual result outputted by the $(j-1)^{th}$ residual unit to obtain a residual result outputted by the $j^{th}$ residual unit; and outputting the residual result outputted by the $j^{th}$ residual unit to a $(j+1)^{th}$ residual unit, where j is a sequentially increasing positive integer, $1 < j < J$, and J is the number of residual units.

In some embodiments, each residual unit includes a dilated convolution operator. The decoding module 6552 is further configured to perform dilated convolution on the residual feature through a dilated convolution operator included in the first residual unit.

In some embodiments, the decoding module 6552 is further configured to group input channels of the residual feature to obtain a plurality of first groups, each first group including first elements corresponding to at least two channels in the residual feature; and perform dilated convolution on the first elements in each first group.

In some embodiments, each residual unit further includes at least one causal convolution operator. After the performing dilated convolution on the residual feature through a dilated convolution operator included in the first residual unit, the decoding module 6552 is further configured to perform causal convolution on an obtained first dilated convolution result through at least one causal convolution operator included in the first residual unit, and use an obtained causal convolution result as the convolution result of the first residual unit.

In some embodiments, the second residual module 6553 is further configured to group input channels of the dilated convolution result to obtain a plurality of second groups, each second group including second elements corresponding to at least two channels in the dilated convolution result; and perform causal convolution on the second elements in each second group.

In some embodiments, a first NN configured for audio decoding includes a plurality of cascaded decoding blocks, and each decoding block includes a feature decoding block and at least one residual unit. The decoding module 6552 is further configured to perform, through feature decoding blocks in the plurality of cascaded decoding blocks, cascaded feature decoding on the encoding feature of the audio bitstream to obtain the residual feature corresponding to the audio bitstream; and perform, through at least one residual unit in the plurality of cascaded decoding blocks, residual processing on the residual feature corresponding to the audio bitstream to obtain the audio feature of the audio bitstream.

In some embodiments, the decoding module 6552 is further configured to perform, through a feature decoding block in a first decoding block of the plurality of cascaded decoding blocks, single feature decoding on the encoding feature of the audio bitstream, and output a decoding result outputted by the feature decoding block in the first decoding block to at least one residual unit in the first decoding block; perform, through a feature decoding block in an $i^{th}$ decoding block of the plurality of cascaded decoding blocks, single feature decoding on a residual result outputted by at least one residual unit in an $(i-1)^{th}$ decoding block, and output a decoding result outputted by the feature decoding block in the $i^{th}$ decoding block to at least one residual unit in the $i^{th}$ decoding block; and use a decoding result outputted by a feature decoding block in a last decoding block as the residual feature corresponding to the audio bitstream, where i is a sequentially increasing positive integer, $1 < i \leq I$, and I is the number of decoding blocks; and perform, through at least one residual unit in the last decoding block of the plurality of cascaded decoding blocks, residual processing on the residual feature corresponding to the audio bitstream to obtain the audio feature of the audio bitstream.

In some embodiments, the decoding module 6552 is further configured to perform the following processing through the feature decoding block in the first decoding block of the plurality of cascaded decoding blocks: convolving the encoding feature of the audio bitstream to obtain a convolution feature, the number of channels of the convolution feature being less than the number of channels of the encoding feature; and upsampling the convolution feature to obtain the decoding result outputted by the feature decoding block in the first decoding block.

In some embodiments, the signal reconstruction module 6553 is further configured to upsample the audio feature of the audio bitstream to obtain an upsampling feature; and perform causal convolution on the upsampling feature to obtain the reconstructed audio signal corresponding to the audio bitstream.

In some embodiments, the audio bitstream is a low-frequency bitstream in a full-frequency bitstream, and the full-frequency bitstream includes the low-frequency bitstream and a high-frequency bitstream. The signal decoding module 6551 is further configured to perform signal decoding on the high-frequency bitstream to obtain a high-frequency encoding feature corresponding to the high-frequency bitstream, where the high-frequency bitstream is obtained by performing audio encoding on a high-frequency sub-band signal of the audio signal; perform high-frequency reconstruction on the high-frequency encoding feature corresponding to the high-frequency bitstream to obtain the high-frequency sub-band signal corresponding to the high-frequency bitstream; and perform sub-band synthesis on a reconstructed audio signal corresponding to the low-frequency bitstream and the high-frequency sub-band signal to obtain the reconstructed audio signal.

In some embodiments, the signal decoding module 6551 is further configured to invoke a second NN to perform second NN-based signal reconstruction on the high-frequency encoding feature to obtain the high-frequency sub-band signal corresponding to the high-frequency bitstream, where the number of channels of the second NN is less than the number of channels of the first NN, and the first NN is configured for reconstructing the reconstructed audio signal from the audio bitstream; or perform inverse bandwidth extension on the high-frequency encoding feature to obtain the high-frequency sub-band signal corresponding to the high-frequency bitstream.

The embodiments of this application provide a computer program product. The computer program product includes a computer-executable instruction, and the computer-executable instruction is stored in a computer-readable storage medium. A processor of an electronic device reads the computer-executable instruction from the computer-readable storage medium and executes the computer-executable instruction to cause the electronic device to perform the foregoing audio encoding method or audio decoding method according to the embodiments of this application.

The embodiments of this application provide a computer-readable storage medium, having a computer-executable instruction stored therein. When the computer-executable instruction is executed by a processor, the processor is enabled to perform the audio encoding method or the audio decoding method provided in the embodiments of this application, for example, the audio encoding method shown in FIG. 4A.

In some embodiments, the computer-readable storage medium may be a memory such as a ferroelectric RAM (FRAM), a ROM, a programmable ROM (PROM), an erasable programmable ROM (EPROM), an electrically erasable programmable ROM (EEPROM), a flash memory, a magnetic surface memory, a CD, or a CD-ROM. The computer-readable storage medium may alternatively be various electronic devices including one or any combination of the foregoing memories.

In some embodiments, the computer-executable instruction (executable instruction) may be written in the form of program, software, software module, script, or code in any form of programming language (including compilation or interpretation language, or declarative or procedural language), and may be deployed in any form, including being deployed as an independent program or being deployed as a module, component, subroutine, or another unit suitable for use in a computing environment.

As an example, the executable instruction may but may not necessarily correspond to a file in a file system, may be stored in a part of the file for storing other programs or data, for example, stored in one or more scripts in a hyper text markup language (HTML) document, stored in a single file dedicated to the discussed program, or stored in a plurality of collaborative files (for example, files storing one or more modules, a subprogram, or a code part).

As an example, the executable instruction may be deployed to be executed on one electronic device, on a plurality of electronic devices located at one location, or on a plurality of electronic devices distributed at a plurality of locations and interconnected through a communication network.

In the embodiments of this application, relevant data such as user information is involved. When the embodiments of this application are applied to specific products or technologies, user permission or consent needs to be obtained, and the acquisition, use, and processing of relevant data need to comply with relevant laws, regulations, and standards of relevant countries and regions.

The foregoing descriptions are merely embodiments of this application and are not intended to limit the protection scope of this application. Any modification, equivalent replacement, or improvement made within the spirit and scope of this application falls within the protection scope of this application.

**Claims**

1. An audio decoding method, applied to an electronic device, **characterized by** comprising the following operations:

    performing signal decoding processing on an audio bitstream to obtain an encoding feature of the audio bitstream,

the audio bitstream being obtained by performing audio encoding on an audio signal;

performing, using at least one residual unit, decoding-side residual processing on the encoding feature to obtain an audio feature of the audio bitstream, wherein the decoding-side residual processing is configured to calculate a residual of the encoding feature at the decoding side

performing signal reconstruction processing on the audio feature of the audio bitstream to obtain a reconstructed audio signal corresponding to the audio bitstream.

2. The method according to claim 1, wherein the performing, using at least one residual unit, decoding-side residual processing on the encoding feature to obtain an audio feature of the audio bitstream comprises:

performing feature decoding processing on the encoding feature of the audio bitstream to obtain a residual feature corresponding to the audio bitstream; and

performing, through the at least one residual unit, feature residual processing on the residual feature corresponding to the audio bitstream to obtain the audio feature of the audio bitstream.

3. The method according to claim 2, wherein
when the at least one residual unit comprises a plurality of cascaded residual units, the performing, through the at least one residual unit, feature residual processing on the residual feature corresponding to the audio bitstream to obtain the audio feature of the audio bitstream comprises:

performing feature residual processing on the residual feature through a first residual unit of the plurality of cascaded residual units;

outputting a residual result outputted by the first residual unit to a subsequent cascaded residual unit, and continuing to perform feature residual processing through the subsequent cascaded residual unit and output a residual result; and

using a residual result outputted by a last residual unit as the audio feature of the audio bitstream.

4. The method according to claim 3, wherein
the performing feature residual processing on the residual feature through a first residual unit of the plurality of cascaded residual units comprises:
performing the following processing through the first residual unit of the plurality of cascaded residual units:

convolving the residual feature to obtain a convolution result of the first residual unit; and

adding the convolution result of the first residual unit to the residual feature to obtain the residual result outputted by the first residual unit; and/or

the continuing to perform feature residual processing through the subsequent cascaded residual unit and output a residual result comprises:
performing the following processing through a $j^{th}$ residual unit of the plurality of cascaded residual units:

convolving a residual result outputted by a $(j-1)^{th}$ residual unit to obtain a convolution result of the $j^{th}$ residual unit;

adding the convolution result of the $j^{th}$ residual units to the residual result outputted by the $(j-1)^{th}$ residual unit to obtain a residual result outputted by the $j^{th}$ residual unit; and

outputting the residual result outputted by the $j^{th}$ residual unit to a $(j+1)^{th}$ residual unit,

wherein j is a sequentially increasing positive integer, $1 < j < J$, and J is the number of residual units.

5. The method according to claim 3 or 4, wherein

each residual unit comprises a dilated convolution operator; and

the convolving the residual feature comprises:

performing dilated convolution on the residual feature through a dilated convolution operator comprised in the first residual unit.

6. The method according to claim 5, wherein the performing dilated convolution on the residual feature comprises:

grouping input channels of the residual feature to obtain a plurality of first groups, each first group comprising first elements corresponding to at least two channels in the residual feature; and

performing dilated convolution on the first elements in each first group.

**7.** The method according to claim 5 or 6, wherein

each residual unit further comprises at least one causal convolution operator; and
after the performing dilated convolution on the residual feature through a dilated convolution operator comprised in the first residual unit, the method further comprises:
performing causal convolution on an obtained dilated convolution result through at least one causal convolution operator comprised in the first residual unit, and using an obtained causal convolution result as the convolution result of the first residual unit.

**8.** The method according to claim 7, wherein the performing causal convolution on an obtained dilated convolution result comprises:

grouping input channels of the dilated convolution result to obtain a plurality of second groups, each second group comprising second elements corresponding to at least two channels in the dilated convolution result; and
performing causal convolution on the second elements in each second group.

**9.** The method according to any one of claims 2 to 8, wherein

a first neural network (NN) configured for audio decoding comprises a plurality of cascaded decoding blocks, and each decoding block comprises a feature decoding block and at least one residual unit; and
the performing feature decoding on the encoding feature of the audio bitstream to obtain a residual feature corresponding to the audio bitstream comprises:

performing, through feature decoding blocks in the plurality of cascaded decoding blocks, cascaded feature decoding on the encoding feature of the audio bitstream to obtain the residual feature corresponding to the audio bitstream; and/or
the performing feature residual processing on the residual feature corresponding to the audio bitstream to obtain the audio feature of the audio bitstream comprises:
performing, through at least one residual unit in the plurality of cascaded decoding blocks, residual processing on the residual feature corresponding to the audio bitstream to obtain the audio feature of the audio bitstream.

**10.** The method according to claim 9, wherein
the performing, through feature decoding blocks in the plurality of cascaded decoding blocks, cascaded feature decoding on the encoding feature of the audio bitstream to obtain the residual feature corresponding to the audio bitstream comprises:

performing, through a feature decoding block in a first decoding block of the plurality of cascaded decoding blocks, single feature decoding on the encoding feature of the audio bitstream, and outputting a decoding result outputted by the feature decoding block in the first decoding block to at least one residual unit in the first decoding block;
performing, through a feature decoding block in an $i^{th}$ decoding block of the plurality of cascaded decoding blocks, single feature decoding on a residual result outputted by at least one residual unit in an $(i\text{-}1)^{th}$ decoding block, and outputting a decoding result outputted by the feature decoding block in the $i^{th}$ decoding block to at least one residual unit in the $i^{th}$ decoding block; and
using a decoding result outputted by a feature decoding block in a last decoding block as the residual feature corresponding to the audio bitstream,
wherein i is a sequentially increasing positive integer, $1 < i \leq I$, and I is the number of decoding blocks; and/or
the performing, through at least one residual unit in the plurality of cascaded decoding blocks, residual processing on the residual feature corresponding to the audio bitstream to obtain the audio feature of the audio bitstream comprises:
performing, through at least one residual unit in the last decoding block of the plurality of cascaded decoding blocks, residual processing on the residual feature corresponding to the audio bitstream to obtain the audio feature of the audio bitstream.

**11.** The method according to claim 10, wherein the performing, through a feature decoding block in a first decoding block of the plurality of cascaded decoding blocks, single feature decoding on the encoding feature of the audio bitstream comprises:
performing the following processing through the feature decoding block in the first decoding block of the plurality of cascaded decoding blocks:

> convolving the encoding feature of the audio bitstream to obtain a convolution feature, the number of channels of the convolution feature being less than the number of channels of the encoding feature; and
> upsampling the convolution feature to obtain the decoding result outputted by the feature decoding block in the first decoding block.

**12.** The method according to any one of claims 1 to 11, wherein the performing signal reconstruction on the audio feature of the audio bitstream to obtain a reconstructed audio signal corresponding to the audio bitstream comprises:

> upsampling the audio feature of the audio bitstream to obtain an upsampling feature; and
> performing causal convolution on the upsampling feature to obtain the reconstructed audio signal corresponding to the audio bitstream.

**13.** The method according to any one of claims 1 to 12, wherein

> the audio bitstream is a low-frequency bitstream in a full-frequency bitstream, and the full-frequency bitstream comprises the low-frequency bitstream and a high-frequency bitstream; and
> the method further comprises:
>
>> performing signal decoding on the high-frequency bitstream to obtain a high-frequency encoding feature corresponding to the high-frequency bitstream,
>> wherein the high-frequency bitstream is obtained by performing audio encoding on a high-frequency sub-band signal of the audio signal;
>> performing high-frequency reconstruction on the high-frequency encoding feature corresponding to the high-frequency bitstream to obtain the high-frequency sub-band signal corresponding to the high-frequency bitstream; and
>> performing sub-band synthesis on a reconstructed audio signal corresponding to the low-frequency bitstream and the high-frequency sub-band signal to obtain the reconstructed audio signal.

**14.** The method according to claim 13, wherein the performing high-frequency reconstruction on the high-frequency encoding feature corresponding to the high-frequency bitstream to obtain the high-frequency sub-band signal corresponding to the high-frequency bitstream comprises:

> invoking a second NN to perform second NN-based signal reconstruction on the high-frequency encoding feature to obtain the high-frequency sub-band signal corresponding to the high-frequency bitstream, wherein the number of channels of the second NN is less than the number of channels of the first NN, and the first NN is configured for reconstructing the reconstructed audio signal from the audio bitstream; or
> performing inverse bandwidth extension on the high-frequency encoding feature to obtain the high-frequency sub-band signal corresponding to the high-frequency bitstream.

**15.** An audio encoding method, applied to an electronic device, **characterized by** comprising the following operations:

> performing feature extraction on an audio signal to obtain an audio feature of the audio signal;
> performing, using at least one residual unit, encoding-side residual processing on the audio feature to obtain an encoding feature of the audio signal; and
> performing signal encoding on the encoding feature of the audio signal to obtain an audio bitstream of the audio signal.

**16.** An audio decoding apparatus, comprising:

> a signal decoding module configured to perform signal decoding on an audio bitstream to obtain an encoding feature of the audio bitstream,
> the audio bitstream being obtained by performing audio encoding on an audio signal;
> a decoding module configured to perform, using at least one residual unit, decoding-side residual processing on the encoding feature to obtain an audio feature of the audio bitstream; and
> a signal reconstruction module configured to perform signal reconstruction on the audio feature of the audio bitstream to obtain a reconstructed audio signal corresponding to the audio bitstream.

**17.** An audio encoding apparatus, comprising:

a feature extraction module configured to perform feature extraction on an audio signal to obtain an audio feature of the audio signal;

an encoding module configured to perform, using at least one residual unit, encoding-side residual processing on the audio feature to obtain an encoding feature of the audio signal; and

a signal encoding module configured to perform signal encoding on the encoding feature of the audio signal to obtain an audio bitstream of the audio signal.

**18.** An electronic device, comprising:

a memory configured to store a computer-executable instruction; and

a processor configured to implement the audio decoding method according to any one of claims 1 to 14 or the audio encoding method according to claim 15 when executing the computer-executable instruction stored in the memory.

**19.** A computer-readable storage medium, having a computer-executable instruction stored therein, and the computer-executable instruction, when executed by a processor, implementing the audio decoding method according to any one of claims 1 to 14 or the audio encoding method according to claim 15.

FIG. 1

FIG. 2

Electronic device
500

Memory 550

Operating system 551

Network communication module 552

Audio encoding apparatus 555

Network
interface 530

Processor 520

Feature extraction module 5551

Encoding module 5552

Signal encoding module 5553

550

User interface 540

FIG. 3A

Electronic device
600

Memory 650

Operating system 651

Network communication module 652

Audio decoding apparatus 655

Network
interface 630

Processor 620

Signal decoding module 6551

Decoding module 6552

Signal reconstruction module 6553

650

User interface 640

FIG. 3B

Perform feature extraction on a low-frequency sub-band signal of an audio signal to obtain a low-frequency feature of the low-frequency sub-band signal ~ 101

Perform, using at least one residual unit, encoding-side residual processing on the low-frequency feature to obtain a low-frequency encoding feature of the low-frequency sub-band signal ~ 102

Perform signal encoding on the low-frequency encoding feature of the low-frequency sub-band signal to obtain a low-frequency bitstream of the audio signal ~ 103

## FIG. 4A

Perform sub-band decomposition on an audio signal to obtain a low-frequency sub-band signal and a high-frequency sub-band signal of the audio signal ~ 104

Perform feature extraction on the low-frequency sub-band signal of the audio signal to obtain a low-frequency feature of the low-frequency sub-band signal ~ 101

Perform, using at least one residual unit, encoding-side residual processing on the low-frequency feature to obtain a low-frequency encoding feature of the low-frequency sub-band signal ~ 102

Perform signal encoding on the low-frequency encoding feature of the low-frequency sub-band signal to obtain a low-frequency bitstream of the audio signal ~ 103

Perform high-frequency analysis on the high-frequency sub-band signal to obtain a high-frequency encoding feature of the high-frequency sub-band signal ~ 105

Perform signal encoding on the high-frequency encoding feature to obtain a high-frequency bitstream of the audio signal ~ 106

## FIG. 4B

Perform feature extraction on a low-frequency sub-band signal of an audio signal to obtain a low-frequency feature of the low-frequency sub-band signal ⌐ 101

Perform, using at least one residual unit, encoding-side residual processing on the low-frequency feature to obtain a low-frequency encoding feature of the low-frequency sub-band signal ⌐ 102

Perform, through the at least one residual unit, feature residual processing on the low-frequency feature to obtain a residual feature of the low-frequency sub-band signal ⌐ 1021

Perform feature encoding on the residual feature to obtain the low-frequency encoding feature of the low-frequency sub-band signal ⌐ 1022

Perform signal encoding on the low-frequency encoding feature of the low-frequency sub-band signal to obtain a low-frequency bitstream of the audio signal ⌐ 103

## FIG. 4C

Perform, through at least one residual unit, feature residual processing on a low-frequency feature to obtain a residual feature of a low-frequency sub-band signal ⌐ 1021

Perform feature residual processing on the low-frequency feature through a first residual unit of a plurality of cascaded residual units ⌐ 10211A

Output a residual result outputted by the first residual unit to a subsequent cascaded residual unit, and continue to perform feature residual processing through the subsequent cascaded residual unit and output a residual result ⌐ 10212A

Use a residual result outputted by a last residual unit as the residual feature of the low-frequency sub-band signal ⌐ 10213A

## FIG. 4D

Perform feature extraction on a low-frequency sub-band signal of an audio signal to obtain a low-frequency feature of the low-frequency sub-band signal — 101

Perform, through at least one residual unit, feature residual processing on the low-frequency feature to obtain a residual feature of the low-frequency sub-band signal — 1021

Perform, through at least one residual unit in a plurality of cascaded encoding blocks, residual processing on the low-frequency feature to obtain the residual feature of the low-frequency sub-band signal — 10211B

Perform feature encoding on the residual feature to obtain a low-frequency encoding feature of the low-frequency sub-band signal — 1022

Perform, through feature encoding blocks in the plurality of cascaded encoding blocks, feature encoding on the residual feature to obtain the low-frequency encoding feature of the low-frequency sub-band signal — 10221B

Perform signal encoding on the low-frequency encoding feature of the low-frequency sub-band signal to obtain a low-frequency bitstream of the audio signal — 103

## FIG. 4E

Perform high-frequency analysis on a high-frequency sub-band signal to obtain a high-frequency encoding feature of the high-frequency sub-band signal — 105

Invoke a second NN to perform second NN-based feature extraction on the high-frequency sub-band signal to obtain the high-frequency encoding feature of the high-frequency sub-band signal — 1051A

Perform bandwidth extension on the high-frequency sub-band signal to obtain the high-frequency encoding feature of the high-frequency sub-band signal — 1051B

## FIG. 4F

Perform signal decoding on a low-frequency bitstream to obtain a low-frequency encoding feature corresponding to the low-frequency bitstream — 201

Perform, using at least one residual unit, decoding-side residual processing on the low-frequency encoding feature corresponding to the low-frequency bitstream to obtain a low-frequency feature corresponding to the low-frequency bitstream — 202

Perform feature reconstruction on the low-frequency feature corresponding to the low-frequency bitstream to obtain a low-frequency sub-band signal corresponding to the low-frequency bitstream — 203

## FIG. 5A

Perform signal decoding on a low-frequency bitstream to obtain a low-frequency encoding feature corresponding to the low-frequency bitstream — 201

Perform, using at least one residual unit, decoding-side residual processing on the low-frequency encoding feature corresponding to the low-frequency bitstream to obtain a low-frequency feature corresponding to the low-frequency bitstream — 202

Perform feature decoding on the low-frequency encoding feature corresponding to the low-frequency bitstream to obtain a residual feature corresponding to the low-frequency bitstream — 2021

Perform, through the at least one residual unit, feature residual processing on the residual feature corresponding to the low-frequency bitstream to obtain the low-frequency feature corresponding to the low-frequency bitstream — 2022

Perform feature reconstruction on the low-frequency feature corresponding to the low-frequency bitstream to obtain a low-frequency sub-band signal corresponding to the low-frequency bitstream — 203

FIG. 5B

Perform signal decoding on a low-frequency bitstream to obtain a low-frequency encoding feature corresponding to the low-frequency bitstream — 201

Perform feature decoding on the low-frequency encoding feature corresponding to the low-frequency bitstream to obtain a residual feature corresponding to the low-frequency bitstream — 2021

Perform, through feature decoding blocks in a plurality of cascaded decoding blocks, cascaded feature decoding on the low-frequency encoding feature corresponding to the low-frequency bitstream to obtain the residual feature corresponding to the low-frequency bitstream — 20211A

Perform, through at least one residual unit, feature residual processing on the residual feature corresponding to the low-frequency bitstream to obtain a low-frequency feature corresponding to the low-frequency bitstream — 2022

Perform, through at least one residual unit in the plurality of cascaded decoding blocks, residual processing on the residual feature corresponding to the low-frequency bitstream to obtain the low-frequency feature corresponding to the low-frequency bitstream — 20221A

Perform feature reconstruction on the low-frequency feature corresponding to the low-frequency bitstream to obtain a low-frequency sub-band signal corresponding to the low-frequency bitstream — 103

FIG. 5C

Perform signal decoding on a low-frequency bitstream to obtain a low-frequency encoding feature corresponding to the low-frequency bitstream ⟶ 201

Perform, using at least one residual unit, decoding-side residual processing on the low-frequency encoding feature corresponding to the low-frequency bitstream to obtain a low-frequency feature corresponding to the low-frequency bitstream ⟶ 202

Perform signal reconstruction on the low-frequency feature corresponding to the low-frequency bitstream to obtain a low-frequency sub-band signal corresponding to the low-frequency bitstream ⟶ 203

Perform signal decoding on a high-frequency bitstream to obtain a high-frequency encoding feature corresponding to the high-frequency bitstream ⟶ 204

Perform high-frequency reconstruction on the high-frequency encoding feature corresponding to the high-frequency bitstream to obtain a high-frequency sub-band signal corresponding to the high-frequency bitstream ⟶ 205

Perform sub-band synthesis on the low-frequency sub-band signal and the high-frequency sub-band signal to obtain a synthesized audio signal ⟶ 206

## FIG. 5D

○ Input channel

● Output channel

## FIG. 6A

FIG. 6B

FIG. 6C

FIG. 7A

FIG. 7B

FIG. 8

FIG. 9A

FIG. 9B

FIG. 10

$x_{LB}(n)$: [1,320]

↓

| Causal convolution |
|---|

[16,320]

↓

| Preprocessing |
|---|

[16,160]

↓

| Encoding block<br>(Downsampling factor (Down_factor) = 2) |
|---|

[32,80]

↓

| Encoding block<br>(Down_factor = 4) |
|---|

[64,20]

↓

| Encoding block<br>(Down_factor = 4) |
|---|

[128,5]

↓

| Encoding block<br>(Down_factor = 5) |
|---|

[256,1]

↓

| Causal convolution |
|---|

↓

$F_{LB}(n)$: [56,1]

# FIG. 11

Residual unit
(Dilation rate = 1)

Residual unit
(Dilation rate = 3)

Residual unit
(Dilation rate = 5)

Residual unit
(Dilation rate = 7)

FIG. 12A

Dilated convolution

Causal convolution

FIG. 12B

$x_{HB}(n)$: [1,320]

| Causal convolution |
|---|

[8,320]

| Preprocessing |
|---|

[8,160]

| Encoding block<br>(Downsampling factor (Down_factor) = 4) |
|---|

[16,40]

| Encoding block<br>(Down_factor = 5) |
|---|

[32,8]

| Encoding block<br>(Down_factor = 8) |
|---|

[32,1]

| Causal convolution |
|---|

$F_{HB}(n)$: [8,1]

# FIG. 13

$F'_{LB}(n)$: [56,1]

↓

| Causal convolution |
|---|

[256,1]

↓

| Decoding block<br>Upsampling factor (Up_factor) = 5 |
|---|

[128,5]

↓

| Decoding block<br>Up_factor = 4 |
|---|

[64,20]

↓

| Decoding block<br>Up_factor = 4 |
|---|

[32,80]

↓

| Decoding block<br>Up_factor = 2 |
|---|

[16,160]

↓

| Post-processing |
|---|

[16,320]

↓

| Causal convolution |
|---|

↓

$x'_{LB}(n)$: [1,320]

# FIG. 14

$F'_{HB}(n)$: [8,1]

$\downarrow$

| Causal convolution |
|---|

[32,1]

$\downarrow$

| Decoding block<br>Upsampling factor (Up_factor) = 8 |
|---|

[32,8]

$\downarrow$

| Decoding block<br>Up_factor = 5 |
|---|

[16,40]

$\downarrow$

| Decoding block<br>Up_factor = 4 |
|---|

[8,160]

$\downarrow$

| Post-processing |
|---|

[8,320]

$\downarrow$

| Causal convolution |
|---|

$\downarrow$

$x'_{HB}(n)$: [1,320]

## FIG. 15

| Perform feature extraction on an audio signal to obtain an audio feature of the audio signal | 11 |
|---|---|

$\downarrow$

| Perform, using at least one residual unit, encoding-side residual processing on the audio feature to obtain an encoding feature of the audio signal | 12 |
|---|---|

$\downarrow$

| Perform signal encoding on the encoding feature of the audio signal to obtain an audio bitstream of the audio signal | 13 |
|---|---|

## FIG. 16A

Perform feature extraction on an audio signal to obtain an audio feature of the audio signal — 11

↓

Perform, using at least one residual unit, encoding-side residual processing on the audio feature to obtain an encoding feature of the audio signal — 12

Perform, through the at least one residual unit, feature residual processing on the audio feature to obtain a residual feature of the audio signal — 121

↓

Perform feature encoding on the residual feature to obtain the encoding feature of the audio signal — 122

↓

Perform signal encoding on the encoding feature of the audio signal to obtain an audio bitstream of the audio signal — 13

## FIG. 16B

Perform signal decoding on an audio bitstream to obtain an encoding feature corresponding to the audio bitstream — 21

↓

Perform, using at least one residual unit, decoding-side residual processing on the encoding feature corresponding to the audio bitstream to obtain an audio feature corresponding to the audio bitstream — 22

↓

Perform signal reconstruction on the audio feature corresponding to the audio bitstream to obtain a synthesized audio signal corresponding to the audio bitstream — 23

## FIG. 17A

Perform signal decoding on an audio bitstream to obtain an encoding feature corresponding to the audio bitstream — 21

Perform, using at least one residual unit, decoding-side residual processing on the encoding feature corresponding to the audio bitstream to obtain an audio feature corresponding to the audio bitstream — 22

Perform feature decoding on the encoding feature corresponding to the audio bitstream to obtain a residual feature corresponding to the audio bitstream — 221

Perform, through the at least one residual unit, feature residual processing on the residual feature corresponding to the audio bitstream to obtain the audio feature corresponding to the audio bitstream — 222

Perform signal reconstruction on the audio feature corresponding to the audio bitstream to obtain a synthesized audio signal corresponding to the audio bitstream — 23

## FIG. 17B

## INTERNATIONAL SEARCH REPORT

| | International application No. |
|---|---|
| | **PCT/CN2024/105962** |

**A. CLASSIFICATION OF SUBJECT MATTER**

G10L19/00(2013.01)i; G10L25/03(2013.01)i; G10L19/16(2013.01)i; G10L25/30(2013.01)i

According to International Patent Classification (IPC) or to both national classification and IPC

**B. FIELDS SEARCHED**

Minimum documentation searched (classification system followed by classification symbols)

IPC: G10L

Documentation searched other than minimum documentation to the extent that such documents are included in the fields searched

Electronic data base consulted during the international search (name of data base and, where practicable, search terms used)

CNABS, CNTXT, VEN, CNKI: 音频, 编码, 解码, 残差, 特征, 神经网络, 子带, audio, voice, code, decode, residual, feature, sub-band

**C. DOCUMENTS CONSIDERED TO BE RELEVANT**

| Category* | Citation of document, with indication, where appropriate, of the relevant passages | Relevant to claim No. |
|---|---|---|
| PX | CN 117198301 A (TENCENT TECHNOLOGY (SHENZHEN) CO., LTD.) 08 December 2023 (2023-12-08)<br>claims 1-18, description, paragraphs 1-364, and figures 1-17 | 1-19 |
| X | CN 116072132 A (BIGO TECHNOLOGY (SINGAPORE) PTE. LTD.) 05 May 2023 (2023-05-05)<br>description, paragraphs 4-25 and 32-60 | 1-19 |
| A | CN 101436407 A (XIDIAN UNIVERSITY) 20 May 2009 (2009-05-20)<br>entire document | 1-19 |
| A | CN 105280189 A (SHENZHEN GUANGSHENG XINYUAN TECHNOLOGY CO., LTD.) 27 January 2016 (2016-01-27)<br>entire document | 1-19 |
| A | CN 114079782 A (TENCENT TECHNOLOGY (SHENZHEN) CO., LTD.) 22 February 2022 (2022-02-22)<br>entire document | 1-19 |
| A | KR 20130007521 A (SAMSUNG ELECTRONICS CO., LTD.) 18 January 2013 (2013-01-18)<br>entire document | 1-19 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 November 2024** | **09 November 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/105962**

| Patent document cited in search report | | | Publication date (day/month/year) | Patent family member(s) | | | Publication date (day/month/year) |
|---|---|---|---|---|---|---|---|
| CN | 117198301 | A | 08 December 2023 | None | | | |
| CN | 116072132 | A | 05 May 2023 | None | | | |
| CN | 101436407 | A | 20 May 2009 | None | | | |
| CN | 105280189 | A | 27 January 2016 | None | | | |
| CN | 114079782 | A | 22 February 2022 | None | | | |
| KR | 20130007521 | A | 18 January 2013 | KR | 101413969 | B1 | 08 July 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311006978